(19) 

**Europäisches Patentamt**
**European Patent Office**
**Office européen des brevets**

(11) **EP 3 950 400 A1**

(12) **EUROPEAN PATENT APPLICATION**
published in accordance with Art. 153(4) EPC

(43) Date of publication:
**09.02.2022 Bulletin 2022/06**

(21) Application number: **20783380.7**

(22) Date of filing: **16.03.2020**

(51) International Patent Classification (IPC):
**B60L 7/18** (2006.01)  **B60W 20/12** (2016.01)
**B60W 20/14** (2016.01)  **B60K 6/26** (2007.10)

(52) Cooperative Patent Classification (CPC):
**B60K 6/26; B60K 6/28; B60L 7/18; B60W 20/12;**
**B60W 20/14**

(86) International application number:
**PCT/CN2020/079536**

(87) International publication number:
**WO 2020/199909 (08.10.2020 Gazette 2020/41)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.03.2019 CN 201910251394**

(71) Applicants:
• **LCB International Inc.**
**Tortola, VG1110 (VG)**

• **Gesang, Wangjie**
**Shanghai 201603 (CN)**
• **Cha, Wei**
**Shanghai 201603 (CN)**

(72) Inventors:
• **GESANG, Wangjie**
**Shanghai 201603 (CN)**
• **CHA, Wei**
**Shanghai 201603 (CN)**

(74) Representative: **Murgitroyd & Company**
**Murgitroyd House**
**165-169 Scotland Street**
**Glasgow G5 8PL (GB)**

(54) **HEAVY TRUCK FUEL-SAVING ROBOT DEVICE AND CONTROL METHOD**

(57) The disclosure provides a fuel saving robot system of mixed hybrid heavy duty trucks mainly for long haul logistics on highways. According to the vehicle-mounted 3D electronic map, the dynamic 3D positioning data of the vehicle measured by the GNSS, parameters of vehicle subsystems and the state of charge of the power battery pack, and data such as relative speed and absolute distance between the vehicle and the vehicle ahead in the same lane measured by the forward looking millimeter wave radar, the electrical power split device is commanded by the vehicle control unit through dynamic collaboration between the cloud AI brain and the vehicle-mounted AI brain of the fuel saving robot to allocate the flow direction and amplitude of 100 kW-class electric power accurately and dynamically among the internal combustion engine, generator, battery pack and driving motor with response time of 10 ms level, meet the transient power balance required by the vehicle dynamics equation in real time, and achieve the beneficial effects of minimization of vehicle fuel consumption and emissions, reduction of drivers' labor intensity of long-distance driving, improvement of active safety of vehicle running and the like through the fuel saving control algorithm of predictive adaptive cruise.

Fig. 1

EP 3 950 400 A1

## Description

<u>Field</u>

The present invention relates to a heavy duty truck fuel-saving robot device and a control method, in particular to an Automated, Connected, Electrified (ACE) heavy duty truck based on a double-motor and single-clutch time division mixed hybrid powertrain in the application scenario of long haul logistics to realize the functions of stable operation of the internal combustion engine under the high-efficiency point condition, predictive adaptive cruise control, forward collision warning, lane departure warning, emergency brake assist, long-downhill retardance, etc. and achieve the beneficial effects of vehicle energy-saving and emission reduction, improvement in the active safety of vehicle, driving convenience, and meeting the durability standard for 700,000 km of the emission system in the real driving environment (RDE), etc. through Internet of vehicles, satellite navigation, 3D electronic navigation map, structured big data of vehicle operation, cloud computing and artificial intelligence.

<u>Background</u>

Road logistics is crucial to all major economies in the world. Long haul logistics (with average daily driving of more than 500 km; more than 90% of the driving mileage for highways) heavy trucks are both the backbone of the road logistics industry and the major fuel consumers and polluters in the transportation field. They are one of the focuses of energy-saving and emission reduction supervision and rectification in various countries throughout the year. At present, the mandatory regulations of Europe and America on emissions from large commercial vehicles (with a gross weight of more than 15 tons) including highway heavy duty trucks ("heavy duty trucks" for short) have turned from the Euro VI standard (fully implemented in Europe, 2014) focusing on reducing exhaust pollutant emissions and EPA-2010 (fully implemented in America, 2010) to a series of new emission regulations focusing on reducing carbon emissions of greenhouse gas (GHG) dominated by carbon dioxide ($CO_2$) in tail gas. The carbon emission ($CO_2$ g/km) of the vehicle is proportional to the fuel consumption (L/100 km) of the vehicle, and reducing fuel consumption (or improving fuel economy MPG; in mile/gallon) is equivalent to reducing carbon emissions.

The regulations on greenhouse gas from medium duty/heavy duty engines and commercial vehicles (GHG Phase II) issued by the American Federal Government in 2016 explicitly specify the detailed mandatory standards for fuel economy (FE, mile/gallon) of all new medium duty/heavy duty engines and commercial vehicles sold in America is improved year by year and the fuel consumption (FC, L/100 km) and carbon emissions (g/km) are reduced from 2021 to 2027 on the premise of maintaining the emission limits for exhaust pollutants in EPA2010 unchanged. In November 2018, the European Parliament voted to approve the first European mandatory regulations on carbon emissions from heavy duty trucks (i.e. Euro VII). The regulations require that the carbon emissions (g $CO_2$/km) from new heavy duty trucks in Europe will be reduced by 20% by 2025 and the carbon emissions from new heavy duty trucks will be reduced by 35% by 2030 with heavy duty diesel trucks in 2019 as a benchmark. China began to implement the China V mandatory regulations on emissions from large commercial vehicles nationwide in 2017, and will implement the China VI mandatory regulations on emissions nationwide from July 2021. The China VI vehicle emission standards are basically the same as Euro VI and EPA-2010 in the aspect of limits for emissions of exhaust pollutants, and some limits are even stricter.

Emission regulations are the main driving force of vehicle powertrain technology development all over the world. The powertrain of heavy duty trucks that meet the China VI vehicle emission standards will be at the same technical platform level as that of North America and Europe for the first time in history. Based on the historical experience in the past 20 years that all the regulations China I to VI are formulated and promulgated by reference to regulations Euro I to VI, it is expected that China will follow the EU and quickly introduce the China VII regulations focusing on carbon emission intensity and fuel consumption of heavy duty trucks. After 2020, the emission regulations and industry focus of China, America and European Union as the three major heavy duty truck markets in the world will be turned to reduction of fuel consumption and carbon emissions from reduction of exhaust pollutant emissions.

Heavy duty trucks are major polluters and fuel consumers around the world and the focuses of energy-saving and emission reduction governance in various countries throughout the year. The fuel for heavy duty trucks in long haul logistics is a high frequency and massive rigid demand. The average fuel cost of a heavy duty truck for long haul logistics is approximately USD 60 thousands per year in America, and approximately RMB 400 thousands per year in China and Europe. The total fuel cost of more than 2 million heavy duty trucks in America is more than USD 100 billion per year, and the total fuel cost of more than 4 million heavy duty trucks in China is more than RMB 1 trillion per year. The fuel consumption and emissions of the heavy duty trucks are reduced through technical innovation, which is of great significance to OEMs, drivers, fleets, shippers, societies and other stakeholders.

America leads the world in the development of the regulations and technologies on emissions from the heavy duty trucks and reduction of fuel consumption. As a part of the SuperTruck project led and subsidized by the United States Department of Energy, four technical teams led by top four major heavy duty truck OEMs in America created four super heavy duty truck prototypes through five years of research and development, and achieved the goal of improving the fuel economy (gallon/ton-mile) by 50% for freight heavy duty trucks by the end of 2016 compared with 2009.

The SuperTruck project of America integrates various energy-saving and emission reduction technologies for heavy duty trucks which may be subjected to commercial mass production before 2025. The future main challenge is to improve the comprehensive cost effectiveness of implementation of various energy-saving technologies. At present, the medium and long-term challenges in the U.S. heavy duty truck industry are how to achieve the mandatory requirements for 2027 heavy duty truck fuel consumption of GHG Phase II on the premise of controlling the price rise of new heavy duty trucks effectively. The stakeholders of the heavy duty truck industry in China need to face the severe test that the retail prices of new heavy duty trucks meeting the requirements of the Limits and Measurement Methods for Emissions from Light-duty Vehicles (China VI) and sold from 2019 are estimated to rise greatly compared with the selling price of current heavy duty trucks meeting the requirements of the Limits and Measurement Methods for Emissions from Light-duty Vehicles (China V).

In last ten years, in the world's major automobile markets, especially the world's largest Chinese automobile market, there are successful cases of mass commercial use of electric or hybrid passenger vehicles and large buses heavily subsidized by the government. However, on the Chinese/American/European Union's markets of the largest, most technologically advanced heavy duty truck for long haul logistics, domestic and foreign industry experts agreed that the mass commercial use of electric heavy duty trucks or hybrid heavy duty trucks for long haul logistics cannot be achieved without subsidies before 2030 due to limitations of industrializable power battery technologies and performance limits. See the following unclassified industry research reports for details: 1) Ricardo (2017), "Heavy Duty Vehicle Technology Potential and Cost Study", Final Report for ICCT; 2) "European Heavy-Duty Vehicles: Cost Effectiveness of Fuel-Efficiency Technologies for Long-Haul Tractor-Trailers in the 2025-2030 Timeframe" published by Oscar Delgado et al from ICCT in January 2018; 3) "HDV Fuel Efficiency Technologies" published by Doctor Felipe Rrodriguez from ICCT on June 28, 2018; 4) "Adoption of New Fuel Efficient Technologies from SuperTruck" presented by the United States Department of Energy to the United States Congress on June 2016.

The actual fuel consumption (L/100 km) of a hybrid vehicle is closely related to its driving conditions. Vehicles under urban conditions have low average speed and frequent active acceleration, deceleration or braking; vehicles under high-speed conditions have high average speed and infrequent active acceleration, deceleration or braking. Hybrid vehicles recover energy mainly through regenerative braking of the driving motors to achieve the beneficial effects of energy saving and emission reduction. The global automotive industrial and academic circles have the following "consensus" on the fuel saving potential of hybrid vehicles for a long time: hybrid vehicles have a more obvious fuel saving effect than traditional fuel vehicles under urban conditions, and the overall fuel consumption can be reduced by more than 30%; however, hybrid vehicles have a less obvious fuel saving effect than traditional fuel vehicles under high-speed conditions, it is impossible to reduce the overall fuel consumption by more than 10%, especially tandem hybrid vehicles, which may even consume more fuel than traditional fuel vehicles under high-speed conditions.

Diesel engines account for more than 95% of internal combustion engines for heavy duty trucks in use all over the world. The diesel engines of heavy duty trucks can stably work in their high efficiency combustion area under high-speed conditions. After decades of continuous improvements, the fuel saving benefits decrease progressively, the technical challenge of further reducing the fuel consumption of traditional diesel engines is growing, and the increase in cost also reaches a higher level. In the past two decades, the annual decline in average fuel consumption improvement was less than 1.5% for the industry of heavy duty trucks for long haul logistics in America, Europe and China. With regard to heavy duty truck manufacturers in Europe, America and China, it is a very big technical and commercial challenge to continuously reduce the fuel consumption (L/100 km) of heavy duty trucks for long haul logistics annually at the market-proven cost effectiveness. Refer to the position paper "The European Commission Proposal on $CO_2$ Standards for New Heavy-Duty Vehicles" issued by Association des Constructeurs Europeens d'Automobiles (ACEA) in August 2018 for EU's Euro VII emission standard legislation for heavy duty trucks. According to ACEA, the target of reducing fuel consumption by 20% in 2025 and 35% in 2030 in the Euro VII carbon emission standard to be approved by the EU is too radical, and no cost-effective technical route is available to achieve the fuel saving target for 2025.

Any fuel-saving technology has the dual benefits of reducing vehicle exhaust pollutant emissions and greenhouse gas (or carbon) emissions. In addition to the two constant challenges of energy saving and emission reduction, driving safety is also the most important for heavy duty trucks for long haul logistics. The vast majority (90%+) of traffic accidents occurring to heavy duty trucks are originated from distraction to drivers, fatigue driving, operation errors and other human factors. One of the main purposes of developing L3/L4 automatic driving commercial vehicles for long haul logistics is to eliminate human factors and improve driving safety. In order to meet the functional safety level requirements of vehicles as specified in ISO 26262, L3/L4 automatic driving commercial vehicles must be configured with redundant braking systems.

Energy saving, emission reduction and safety are the three ultimate goals relentless pursued by the global automotive industry for a long time. Over the past decade, Mainstream heavy duty truck OEMs in Europe and America and relevant research institutions have invested a lot of manpower and materials to actively explore and develop a variety of heavy duty truck fuel saving technologies, but mainstream heavy duty truck OEMs and tier one suppliers in Europe and America have not found and published a timely industrializable mainstream technical scheme for heavy duty truck powertrain that can meet the 2025 carbon emission target or standard value of the Euro VII regulation and/or the 2027 carbon emission target value of the American GHG-II regulation so far.

After the Volkswagen "dieselgate" event, all countries strengthened the monitoring of actual pollutant emission from diesel vehicles in use; they rely on the portable emissions measurement system (PEMS) to check diesel vehicles randomly and measure their Real Drive Emission (RDE) onboard. The new China VI regulations on emissions, EU's Euro VI and new Euro VII regulations on emissions, EPA-2010 of America and new GHG Phase II regulations on emissions specify that the post-processing system of the diesel heavy duty truck powertrain must guarantee the emission meeting the durability standard of 700,000 km (435,000 miles) under Real Drive Emission (RDE); otherwise, mandatory recall is required. The mandatory requirement for emission from heavy duty truck meeting the durability standard of 700,000 km under RDE are also provided in the China VI regulations on emissions, and this durability requirement is extremely challenging for the OEMs and tier one suppliers in China's heavy duty truck industry to develop, produce and sell the China VI heavy duty trucks or powertrain subsystems. Higher requirements are also put forward to fairly, strictly and consistently regulatory governance of major traffic energy consumers and polluters such as highway heavy duty trucks and other large commercial vehicles by environmental protection and traffic police authorities at all levels in various regions in China.

In 2018, Cummins, a famous enterprise of diesel engines of heavy duty trucks in the world actively recalled all the 500,000 diesel engines of heavy duty trucks manufactured and sold from 2010 to 2015 in North America (America, Canada) due to the durability design defect in its diesel engine post-processing system, which made it impossible to guarantee that all of its diesel engines met the emission meeting the durability standard under RDE of EPA-2010 within 700,000 km. Environmental Protection Agency (EPA) specifically regarded the Cummins diesel engine recall as a good model of meeting the regulations on emission by government and enterprise cooperation. Although mass production of new China VI diesel engines of heavy duty trucks is difficult, it is more difficult to guarantee that all the China VI heavy duty diesel engines meet the requirement for emission meeting the durability standard under RDE within 700,000 km, and the only way to verify whether the emissions from heavy duty trucks that meet the China VI vehicle emission standards meet the durability standard under RDE is to rely on the big data on actual driving of hundreds of thousands of heavy duty trucks that meet the China VI vehicle emission standards over the past five years of service. China seriously emphasizes regulatory governance of environmental protection according to law and pays attention to the actual effect. A few years later, it will become a high probability event that some brands of heavy duty trucks that meet the China VI vehicle emission standards are recalled in batches because the effective life of the emission system is less than 700,000 km.

The information disclosed in the background section is only intended to promote the understanding of the overall background of the invention, and should not be deemed to recognize or imply in any form that the information has become the prior art well known to those skilled in the art.

Summary

The present invention aims to provide a novel and unique heavy duty truck fuel-saving robot device and a control method, and is intended to solve the worldwide problem that it is difficult to find a technical route for high cost effectiveness heavy duty truck powertrain allowing mass production and commercialization in batches, which timely meets the 2025 carbon emission target (declined by 20%) of the new Euro VII standard for emissions and the 2027 carbon emission target (declined by 24%) of the American greenhouse gas Phase II (GHG-II) standard due to slow improvement in fuel consumption (annual decline is less than 1.5% on average) of new heavy duty trucks for long haul logistics year by year in the prior art. In the application scenarios of long haul logistics, the overall fuel consumption of an Automated-Connected-Electrified (ACE) heavy duty truck with heavy duty truck fuel-saving robot can be reduced by more than 20% on the premise of ensuring the power, safety and rate of attendance of the vehicle compared with the traditional diesel heavy duty truck in the same period. All the main subsystems of the fuel saving robot of the ACE heavy duty truck in this disclosure have been industrialized, which can realize commercial application in batches in the near future and meet the 2025 carbon emission target of the Euro VII regulation and the 2027 carbon emission target of the American greenhouse gas Phase II (GHG-II) regulation in advance without relying on any products or technologies that are not mature or cannot be industrialized in the near future. The fuel saving robot of the ACE heavy duty truck in this disclosure refers to an intelligent device based on integration of various high-tech technologies, which is capable of autonomous learning and evolution as a reliable and efficient assistant for drivers of large commercial vehicles in the highway transportation environment (On Highway) and providing human drivers with multiple beneficial effects of vehicle energy saving and emission reduction, reduction of labor intensity of long-distance drivers, improvement of driving safety and the like.

In order to realize the above technical purposes and achieve the above technical effects, the present invention is realized through the following technical solution:

The energy of current various hybrid road vehicle is effectively recovered by restricting the internal combustion engine to operate at the high efficiency range and regenerative braking of a driving motor to charge the battery pack under the urban or suburban conditions where the vehicles need to actively accelerate and apply brakes frequently at the average speed less than 40 km/h, which greatly reduces the overall fuel consumption (by 30%~60%) compared with traditional internal combustion engine vehicles, with obvious energy saving and emission reduction effects and high cost effectiveness, thus having achieved the mass commercial use of the hybrid vehicles in the world's major automotive markets. However, with regard to heavy duty trucks for long haul logistics, most of the run time and mileage (over 90%) within their product life cycles are under highway conditions, the highway networks in economically developed regions in China are congested throughout the year, the average speed of heavy duty trucks for long haul logistics is about 60 km/h, while the average speed of heavy duty trucks for long haul logistics in America is about 95 km/h with few active acceleration or braking. The internal combustion engines of traditional diesel heavy duty trucks stably work at the high efficiency range for a long time under the expressway conditions, with high competitiveness in overall fuel consumption and limited improvement space; while the regenerative braking energy recovery function of the hybrid vehicles is useless due to infrequent active braking of the vehicles; in addition, the hybrid vehicles have additional loss due to multiple energy conversion among chemical energy, mechanical energy, electric energy and mechanical energy, so there has been a "consensus" in the global automobile and road transportation industry for a long time that the drop of the overall fuel consumption of hybrid heavy duty trucks for long haul logistics (hereinafter referred to as "hybrid heavy duty trucks") is limited compared with the traditional diesel trucks, it is unlikely that the largest fuel saving rate exceeds 10%, especially tandem hybrid vehicles which may even have slightly increased overall fuel consumption under high-speed conditions. According to the technical and industrial development status of current international/domestic three major powers (battery, motor and electronic control), compared with traditional heavy duty diesel trucks, the cost growth of hybrid heavy duty trucks is obvious, but the fuel saving effect is not obvious, and consequently the cost effectiveness of the hybrid heavy duty trucks is low (for example, the return on investment (ROI) of making up the comprehensive cost difference between hybrid heavy duty trucks and traditional fuel heavy duty trucks by saving fuel cost is longer than three years), and the sustainable market competitiveness is insufficient. As described in the above section (background), most experts in the global heavy duty truck industry agree that the mass commercial use of the hybrid heavy duty trucks for long haul logistics cannot be achieved without subsidies in the global markets of China, America and Europe, the three major heavy duty truck core markets, before 2030.

In addition, electric heavy duty trucks for long haul logistics cannot be commercialized in batches before 2030 subject to the technical limits of today's power lithium batteries and the limitations of industrial development. Hydrogen-electric hybrid heavy duty trucks with hydrogen fuel cells as low carbon clean range extenders cannot be commercially available in batches until 2030.

The global highway freight industry faces another major challenge that the shortage of drivers and turnover rates are high throughout the year. For the same heavy duty trucks, loads and routes, drivers with different experiences and capabilities can result in the actual overall fuel consumption difference up to 25%. The actual fuel consumption of heavy duty trucks for long haul logistics varies from person to person, driver management consumes the fleet management resources and is inefficient, which are another major shortcoming of the industry. Lots of freight transport companies reduce the difference between the actual fuel consumption and the optimal fuel consumption caused by human factors of drivers though various methods, such as driver training, fuel-efficient rewards and punishments, installation of onboard sensors, big data analysis of driver's driving behavior and fuel saving guidance. But the above methods fix the symptom instead of the root cause, and "the fuel consumption of heavy duty trucks varying with each individual" is always a big pain spot for most fleets of long haul logistics.

The cost effectiveness of ACE heavy duty trucks for long haul logistics must be greatly improved for the purpose of long-term sustainable competition with the traditional fuel heavy duty trucks without subsidies to realize large-scale commercial use as soon as possible. The average selling price (retail price USD 150,000/vehicle or RMB 400,000/vehicle) of the hybrid heavy duty diesel trucks for long haul logistics is three to ten times the price of common passenger vehicles in the market of America or China, but the annual fuel cost of the hybrid heavy duty diesel trucks for long haul logistics is 30 to 50 times the annual fuel cost of family ordinary passenger vehicles with internal combustion engines. The retail price of gasoline or diesel in America and China is obviously lower than the retail price of the gasoline or diesel in Europe, and the proportion of the price of passenger vehicles to heavy duty trucks and the annual fuel expense in Europe is similar to that in China and America. Two effective methods for improving the cost effectiveness of the hybrid heavy duty diesel trucks for long haul logistics are provided, one is to increase the fuel saving ratio compared with that of traditional diesel vehicles, and the other is to reduce the price difference between the sum of the one-time purchase cost and the accumulated vehicle operation and maintenance cost of the hybrid heavy duty diesel trucks and that of the traditional diesel vehicles (Total Ownership Cost, TOC), i.e. to broaden sources of income and reduce expenditure. The saved fuel cost is directly converted into the profit of the fleet on the premise of ensuring the power, safety and rate of attendance of the ACE heavy duty trucks.

Based on the objective fact that the fuel saving effect of most hybrid passenger vehicles (with gross weight of less than 3.5 tons; series, parallel, or mixed hybrid system architecture) is not obvious under full high-speed conditions, global automobile industry experts (especially heavy duty truck industry experts) make their subjective extensional speculation and conclude that the fuel saving ratio of hybrid heavy duty trucks for long haul logistics, in particular the series hybrid heavy duty trucks, cannot be higher than 10%, and sometimes there is even a slight increase in fuel consumption. So far (March 2019), no public report or paper on comparative analysis of the fuel consumption of hybrid heavy duty trucks, especially extended-range series or mixed hybrid heavy duty trucks after large-scale road tests of "three reals" (real vehicle, real road and real goods) in the scenario of long haul logistics has been found worldwide. However, the above consensus, like the so-called "White Swan consensus" in history, has its historical limitations. All the industry experts ignore the secret source for reducing the fuel consumption of the hybrid heavy duty trucks for long haul logistics greatly, that is the time-varying function Pg(t) of grade power with amplitude of hundreds of kilowatts caused by small changes (1.0 degree) of the road longitudinal slope tilt ("longitudinal slope" for short) and many opportunities to recover kilowatt hour (KWh) electric energy through regenerative braking of 100 kW driving motor generated when the heavy duty truck is going downhill at high speed.

The core of the invention is to create a new heavy duty truck species: Automated-Connected-Electrified (ACE) heavy duty truck having the function of onboard "fuel saving robot" based on a 100-kilowatt-class power electronic three-port network (ePSD - electrical power split device; also known as "electrical power diverter") through the effective integration of vehicle double-motor single-clutch Mixed Hybrid powertrain technology, Global Navigation Satellite System (GNSS), 3D e-map (3D map), Internet of Things, Big Data, artificial intelligence (AI) and other emerging technologies to realize multiple beneficial effects of energy saving, emission reduction and improvement of driving safety of heavy duty trucks. The overall fuel consumption drop of ACE heavy duty trucks is up to 30% compared with that of the traditional heavy duty diesel trucks in the application scenarios of long haul logistics, and it can also eliminate the industrial pain point of high discreteness of overall fuel consumption value of the heavy duty truck due to "human factors" of drivers; moreover, ACE heavy duty trucks can significantly improve the braking performance, add the function of retardance along a long-downhill path, reduce the driver's labor intensity in long-distance driving, and improve the vehicle running safety, thus greatly improving the cost effectiveness of ACE heavy duty trucks. For the transport fleet, efficiency and safety are two eternal themes. Various electromechanical hardware and software on ACE heavy duty trucks combined with structured big data and artificial intelligence of dynamic collaboration between the cloud and the vehicle form a system of "fuel saving robot for heavy duty trucks". This fuel saving robot will assist human drivers to automatically optimize the energy and power management of heavy duty trucks for long haul logistics in real time, reducing the overall fuel consumption by more than 20% compared with the traditional heavy duty diesel trucks. It is estimated that the mass commercial use of the fuel saving robot of ACE heavy duty trucks for long haul road logistics can be realized in the three major heavy duty truck markets of America, China and the European Union in five years.

The first principle of the fuel-saving robot technology of the ACE heavy duty trucks is the vehicle longitudinal dynamic equation that the automobile industry is very familiar with:

$$P_v = \frac{v}{1000\eta} \left( Mgf_r \cos\alpha + \frac{1}{2}\rho_a C_D A_f V^2 + Mg\sin\alpha + M\delta\frac{dv}{dt} \right) \qquad (1\text{-}1),$$

Where, $P_v$ is the vehicle power or the road load power, and the unit of all power items is kilowatt (KW).

The rolling power $P_r$ refers to the required power for overcoming the tire rolling friction resistance when the vehicle runs, and the rolling power can be shown in the following formula (1-2):

$$P_r = \frac{v}{1000\eta} \left( Mgf_r \cos\alpha \right) \qquad (1\text{-}2),$$

The air drag power $P_d$ refers to the required power for overcoming air resistance (calm weather) when the vehicle runs, and the air drag power can be shown in the following formula (1-3):

$$P_d = \frac{v}{1000\eta} \left( \frac{1}{2}\rho_a C_D A_f V^2 \right) \qquad (1\text{-}3),$$

The grade power $P_g$ refers to the required power for overcoming increasing gravitational potential energy when the vehicle runs uphill, and the grade power of the vehicle running downhill is a negative value, representing the driving power generated by conversion between the potential energy and the kinetic energy of the vehicle; and the grade power $P_g$ can be shown in the following formula (1-4):

$$P_g = \frac{V}{1000\eta}(Mg\sin\alpha) \qquad (1\text{-}4),$$

The acceleration power $P_a$ refers to the required additional power for the vehicle reaching the predetermined acceleration when running on a level road. When the acceleration is a negative value, it represents mechanical braking for converting the kinetic energy of the vehicle into thermal energy, or regenerative braking for converting part of the kinetic energy of the vehicle into the electric energy to be recycled. The acceleration power $P_a$ can be shown in the following formula (1-5):

$$P_a = \frac{V}{1000\eta}\left(M\delta\frac{dV}{dt}\right) \qquad (1\text{-}5).$$

In the above formulas (1-1)-(1-5): V is the vehicle speed (m/s); $\eta$ is the drive train efficiency; M is the gross vehicle mass(kg); g is the acceleration of gravity, and is equal to 9.8 (m/s$^2$); $f_r$ is the tire rolling friction coefficient; $\alpha$ is the highway longitudinal slope angle; the positive value represents upslope, and the negative value represents downslope; $\rho_a$ is air density (kg/m$^3$); $C_D$ is the vehicle wind resistance coefficient; Af is the area (m$^2$) in front of the vehicle; $\delta$ is the rolling mass conversion coefficient; dV/dt is the vehicle acceleration (m/s$^2$), and the positive value represents acceleration; and the negative value represents deceleration or braking.

Braking or acceleration is seldom performed under the expressway running condition. When the vehicle runs at a constant speed, the acceleration power is zero, the rolling power is basically unchanged on a highway section with a small longitudinal slope (i.e. the longitudinal slope within several degrees), the air drag power can be approximated to a constant, only the grade power is a time variable, and the change amplitude of the grade power is proportional to the slope change amplitude of the expressway section, vehicle speed and gross vehicle weight.

The gross weight limit of the heavy duty truck for long haul logistics in China is generally below 40 tons, the maximum statutory speed limit is 90 km/h, major highways in China are often jammed, and the average speed of the heavy duty trucks in the road logistics industry is about 60 km/h; the gross weight limit of the heavy duty truck for long haul logistics in America is 36 tons, the maximum statutory speed limit is up to 125 km/h, and the average running speed of the heavy duty trucks in the road logistics industry is about 95 km/h. Most American transport companies generally limit the maximum speed of the heavy duty trucks to 105 km/h in view of fuel saving and safety.

For example, for a fully loaded heavy duty truck with the gross weight of 40 tons and the speed of 60 km/h, the required grade power is up to 228 KW when the vehicle encounters a small upslope, namely that the road longitudinal slope is 2.0. At the moment, the sum of the rolling resistance power and the air drag power of the vehicle is only 71 KW. If the power margin of the vehicle powertrain is insufficient, the driver needs to shift gears and speeds down to continuously run uphill. Compared with a passenger vehicle with the gross weight of 2 tons, the grade power required for the vehicle going uphill at the moment is only 11.4 KW (5.0% of the longitudinal slope power of the heavy duty truck), and the sum of the rolling friction power and the wind drag power is only 3.6 KW; for passenger vehicles with the driving power margin of nearly 100 KW, there is no need to worry about this slope, and the vehicle runs as easily as walking on firm earth. In other words, for each fully loaded heavy duty truck running at high speed, every 1.0 degree change, which is hard to see by naked eyes, of the road longitudinal slope means that the road load power of the heavy duty truck (mainly originated from grade power changes) has a great change of more than 100 KW. Going uphill must be followed by going downhill. When going downhill, the 100 KW level longitudinal grade power of the heavy duty truck is negative (equivalent to negative acceleration power during active braking), mechanical energy can be converted into electrical energy through regenerative braking of the driving motor to charge the battery pack and recover energy. Although there are few active brakes for ACE heavy duty trucks under high-speed conditions, there are still many opportunities to recover KWh level electrical energy by regenerative braking while going downhill for ACE heavy duty trucks running at basically uniform speed because slight changes of 1.0 degree level along the longitudinal slope of the highway can bring 100 KW level longitudinal slope power changes. A small stream flows far, and many a little makes a mickle.

The "longitudinal slope" is short for the road longitudinal slope and there are two unit of measurement; one is the included angle between the road surface and the horizontal plane, and the other is the proportion of the road surface elevation to the horizontal projection distance of the road section, shown in %. Most countries limit the longitudinal slope within the range of -7.0%~+7.0% in highway design and construction, which is mainly based on consideration of ensuring that the full-load heavy duty truck runs on a highway safely and effectively.

When the vehicle is running at the speed of 60 km/h, the required acceleration or braking power is 67 kW for passenger vehicles with the gross weight of 2.0 tons to realize moderate-intensity braking with the deceleration of 2 m/s$^2$ (i.e. 0.2g, g for the acceleration of gravity); however, for a heavy duty truck with the gross weight of 40 tons, the acceleration or braking power required is as high as 1333 kW. The total mass of an urban electric bus is 20 tons, the average speed is about 30 km/h, and the braking power required for the urban bus to achieve the deceleration of 0.2g is 333 kW. Limited by the peak power values of the onboard driving motor and/or the motor control unit (power electronics), the peak power of hybrid vehicles to recover energy by regenerative braking is basically below 500 kW. However, the part of energy with vehicle braking power higher than 500 kW cannot be converted into electric energy for recovery by regenerative braking, so this part of vehicle kinetic energy can only be converted into heat energy by mechanical braking and totally wasted. At present, the commercialized DC fast charging pile with the maximum power in the world is the 375 kW charging pile. Thus, under the mixed running conditions of a city or a suburb where the acceleration/deceleration is frequent, the fuel saving of the hybrid vehicles (light-duty vehicles or large buses) is more obvious than that of traditional internal combustion engine vehicles, and the fuel saving ratio is 30%~60%.

Under the running conditions of closed highways with infrequent active acceleration and deceleration with an average speed of higher than 60km/h, the traditional internal combustion engine can work stably in its high efficiency range, compared with the fuel saving effect of the traditional internal combustion engine vehicle, the fuel saving effect of the hybrid vehicle is not obvious (the rate of fuel saving is less than 10%), and the overall fuel consumption is surging rather than falling. The above-mentioned "consensus" of the automobile industry is applicable for all hybrid passenger vehicles (with gross weight less than 3.5 tons) and parallel hybrid (an internal combustion engine with the peak power of greater than 250 kW is mechanically connected in parallel with a medium-sized motor with the peak power of less than 200 kW) large commercial vehicles. However, inventors find that the "consensus" of the industry is not applicable for the ACE heavy duty trucks with extended-range series or mixed hybrid (series-parallel) in the application scenario of long haul logistics. Although there are few active brakes for acceleration for ACE heavy duty trucks under high-speed conditions, there are many opportunities to recover KWh level electrical energy through regenerative braking of driving motor using the 100 kW level longitudinal slope power while going downhill due to the slight changes of 1.0 degree level along the longitudinal slope of the highway. A small stream flows far, and many a little make a mickle.

All the series or mixed hybrid ACE heavy duty trucks of the present disclosure contain an internal combustion engine (diesel or natural gas) of heavy duty truck with the peak power of greater than 250 kW and two large motors with the peak power of greater than 200 kW. The main working mode of one motor (MG1) is the generator, and the main working mode of the other motor (MG2) is the driving motor. The driving motor is one of the decisive factors for the power performance of hybrid heavy duty trucks, and its peak power shall be greater than 250 kW. The larger the driving motor, the better the vehicle power performance, and the better the effect of regenerative braking energy recovery. To solve the problem that the cost of the conventional large driving motor stays in a high position without going down, a three-motor hybrid system with a standard main driving motor (MG2) and an optional auxiliary driving motor (MG3) may be considered.

The heavy duty trucks for long haul logistics can make full use of the 100kW level downhill longitudinal slope power generated by the slight changes of 1.0 degree level longitudinal slope along the highway to recover KWh level energy through regenerative braking of the vehicle to realize frequent and rapid charging even if they are running at basically uniform speed, which is equivalent to energy recovery by the hybrid passenger vehicles or hybrid buses through regenerative braking during frequent active braking under urban conditions, and the fuel saving effect is more obvious than that of the traditional fuel vehicles. In other words, even in vast plain areas (where most longitudinal slopes of road are within the range of -2.0-+2.0 degrees), for an ACE heavy duty truck running at a basically constant (speed change amplitude is less than 10%) high speed, many opportunities to recover energy through regenerative braking using the slight changes within 2.0 degrees of longitudinal slope along the highway and avoid applying mechanical brake are obtained. This is the secret that ACE heavy duty trucks for long haul logistics have a more obvious fuel saving effect than that of the traditional diesel heavy duty trucks.

In the recent ten years, for some medium and high-end heavy duty trucks with internal combustion engines in Europe and America, fuel has been saved through the predictive cruise control by using the vehicle-mounted 3D map comprising the road longitudinal slope information. However, the predictive cruise fuel-saving of traditional heavy duty trucks has limitations and shortcomings: a pure mechanical power assembly is not applicable for large changing the output power of the internal combustion engine instantaneously (sub-second level), and the automatic transmission shifts gears frequently; the predictive cruise control is only applicable for long upslopes with the longitudinal slope angle of larger than 2.0 degrees and the slope length of above several kilometers; the traditional internal combustion engine vehicle has no regenerative braking function, the changes between the vehicle potential energy and kinetic energy generated by the vehicle on the long downslopes cannot be recycled dynamically, and the overall fuel consumption drop in actual operation is less than 3.0%.

It is noted that there are no highways in the world that are absolutely horizontal. Even in vast plain areas, most of longitudinal slopes between ±3.0 degrees are continuously distributed along meter-level road sections of the highways. For loaded heavy duty trucks running at constant speed under the highway conditions, the sum of the rolling resistance power $P_r$ and the air drag power $P_d$ is approximated as a constant, the biggest impact on the time variable of the road load total power $P_v$ is the grade power $P_g$, which is proportional to the longitudinal slope angle. For each small upslope and downslope (with a longitudinal slope change of 1.0 degree) along the road, the change amplitude of longitudinal slope power is more than 100 kW, providing many opportunities to recover KWh level energy by 100 KWh level regenerative braking power for ACE heavy duty trucks. A small stream flows far, and many a little make a mickle. If there is a vehicle-mounted 3D map on which the highway longitudinal meter-level interval density, the road positioning meter-level precision (longitude and latitude) and the longitudinal slope measurement accuracy up to 0.1 degree, by the aid of the real time positioning (longitude and latitude) and attitude measurement (longitudinal slope) of Internet of Vehicles, the meter-level high-precision satellite navigation (GNSS) and inertial navigation (IMU) and according to the vehicle kinetic equation (1-1), the vehicle control unit (VCU) can real-timely and accurately predict the road load power variation of the vehicle within hundreds of kilometers, especially the 10-kilowatt precision time-varying function of the grade power $P_g(t)$ and the road load power $P_v(t)$ within the range of hundreds of kilometers of the electronic horizon in front of the vehicle. The predictive refresh frequency of the VCU can be up to 10.0 hertz (Hz), that is to say, the VCU can refresh the power prediction every 2-3 meters that the vehicle runs.

Various ADAS e-maps that have been commercially available in batches all over the world can basically be used as the 3D map of the invention to provide an Electronic Horizon for vehicles. The Electronic Horizon refers to the road information, especially the information of longitude, latitude and longitudinal slope of the highways along the way, contained in the 3D map within the specified range in front of the heading of the vehicle. The predictive control is implemented for the traditional heavy duty diesel trucks, and only the electronic horizon within 10 km can be used effectively because it is limited by the fact that the traditional heavy duty diesel trucks are not suitable for frequent quick and continuous transformation of the working conditions and gear shifting of internal combustion engines and have no regenerative braking energy recovery function. However, the ACE heavy duty trucks of the invention can effectively utilize various ranges of electronic horizons ranging from 10 km to 1000 km. Refer to the following for details.

For the ACE heavy duty truck running on highways with active braking or acceleration seldom performed, its speed is basically constant, and the time variation of vehicle road load power is mainly originated from the grade power change brought about by the longitudinal slope change of the highways. However, since both the vehicle running path and the distribution function of the longitudinal slope along the highway are fixed and known in advance, the VCU of ACE heavy duty truck may be within 0.1s; the change of demand for vehicle road load power in the future is effectively predicted by quickly refreshing and calculating the time-varying function of vehicle road load power within the vehicle electronic horizon according to the vehicle kinetic equation (1-1), electronic horizon and actual road conditions. The fuel saving robot device of ACE heavy duty truck and control method of the invention transform the problem of fuel saving of heavy duty trucks for long haul logistics into the equivalent artificial intelligence (AI) problem of AlphaGo. The AI brains of cloud and vehicle-end fuel-saving robots can be trained using the dedicated structured big data generated by operation of many ACE heavy duty trucks combined with various deep learning algorithms and cloud computing power, and the fuel saving robot of the heavy duty truck can achieve lower fuel consumption than human drivers. The details will be described later.

According to the predictive power control system for the ACE heavy duty trucks presented by the invention, an electrical power split device (ePSD) is commanded through a vehicle control unit, and 100-kilowatt level electrical power can be accurately and continuously allocated among four electromechanical power sources (internal combustion engine, generator, battery pack and driving motor) within tens of milliseconds of system response time so that the internal combustion engine condition is stably set to its high efficiency condition point for a long time; and the 100-kilowatt level transient change of the grade power within the sub-second time is offset through 100-kilowatt level fast charging and discharging of the battery pack in real time as well as peak-load shifting, and the road load power required by a vehicle dynamic equation (1-1) is provided at any time. Compared with traditional heavy duty diesel vehicles, the overall fuel consumption for actual operation of the ACE heavy duty truck can be decreased by 30% on the premise of ensuring the power, freight timeliness and safety of the vehicle.

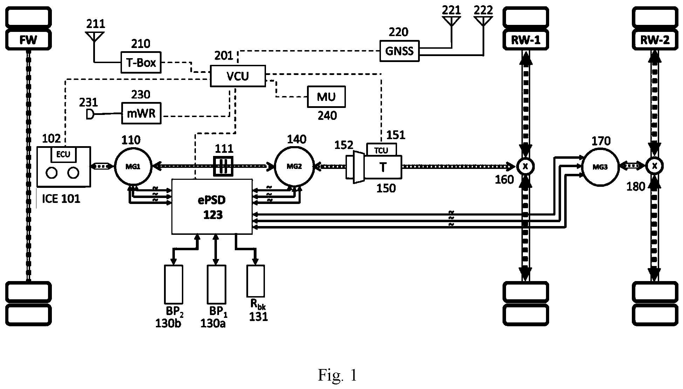

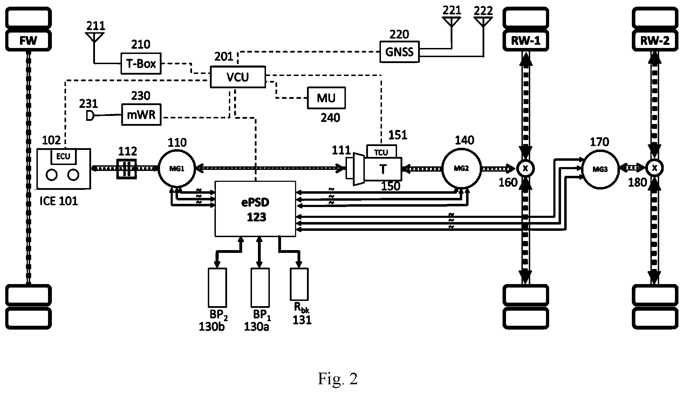

The ACE heavy duty truck of the invention is of a double-motor and single-clutch mixed hybrid system architecture, as shown in subsequent Figures 1 and 2. The ACE heavy duty truck can command the clutch to be disengaged or engaged through the vehicle control unit (VCU) to realize the series hybrid architecture and parallel hybrid architecture separately. Vehicles under urban conditions have low average speed (less than 45 km/h) and frequent active acceleration or deceleration, the working conditions of the internal combustion engine and the working conditions of the vehicle road load can be decoupled completely by using the series hybrid architecture, so that the internal combustion engine is enabled to stably work at its high-efficiency point, there are also many opportunities for the driving motor to recover energy through regenerative braking, and series hybrid vehicles have a more obvious fuel saving effect (more than 30%) than that of the traditional fuel vehicles. Vehicles under high speed conditions have high average speed (more than 50 km/h) and infrequent active acceleration or deceleration, and the internal combustion engine can stably work at its high-efficiency point even if it is mechanically coupled with the driving wheel. From the perspectives of fuel saving and power performance, hybrid vehicles directly driven by internal combustion engines or parallel hybrid vehicles are better than series hybrid vehicles under high speed conditions. The power-split hybrid system represented by Toyota Prius has both series and parallel hybrid functions and gives consideration to optimization of both power and fuel saving of the vehicle. It has been the international benchmark of hybrid power for passenger vehicles for twenty years. However, it is difficult for the planetary gear, the core component of the power-split hybrid system, to bear the simultaneous force application of the internal combustion engine with the peak power of greater than 150 kW, generator and driving motor subject to the current metal materials and production processes, so it is difficult for the mechanical power-split hybrid system based on planetary gear to be extended to large commercial vehicles in a cost effective way. Even Toyota has not applied its unique power-split hybrid powertrain technology with single planetary gear unit to large commercial vehicles.

The present invention provides a mixed hybrid vehicle capable of time division switching of series or parallel architecture, see subsequent Figure 1 and Figure 2; the mixed hybrid vehicle comprises: a generator set consisting of a generator (MG1) directly driven by the internal combustion engine, used for converting chemical energy of vehicle fuel into electric energy; an electrical power split device (ePSD), configured as a power electronic network with three ports, wherein the first port of the ePSD is in bidirectional AC electric connection with the output end of the generator set; the second port of ePSD is in bidirectional AC electric connection with at least one driving motor (MG2); the third port of ePSD is in bidirectional electric connection with at least one power type battery pack; an automatic transmission, with an output shaft connected with a driving axle of the vehicle bidirectionally and mechanically; a map unit, storing a 3D map in advance, containing the 3D information of longitude, latitude and longitudinal slope of the road where the vehicle is running; at least one main driving motor (MG2), connected with the second port of ePSD bidirectionally and electrically, with the output shaft of the driving motor connected with the input shaft of the automatic transmission bidirectionally and mechanically through a flexible coupling, wherein the main driving motor (MG2) can be operated for converting the electric energy into the mechanical energy for driving the vehicle (driving mode), or converting the mechanical energy of the vehicle into the electric energy (regenerative braking mode), and charging the battery pack through the ePSD, wherein the output shaft at the flywheel end of the internal combustion engine is bidirectionally and mechanically connected with the mechanical shaft of the generator (MG1), and the mechanical connection is either a single shaft with the same speed (coaxial) or parallel double shaft with a fixed gear ratio; the output shaft of the internal combustion engine is also bidirectionally and mechanically connected with the main driving motor (MG2) through a clutch, and the mechanical connection is either a single shaft in a coaxial mode or parallel double shaft with a fixed gear ratio; the main driving motor is also bidirectionally and mechanically connected with the input shaft of the automatic transmission through a flexible coupling, and the output shaft of the transmission is mechanically connected with the driving axle of the vehicle; the vehicle further comprises: a vehicle control unit (VCU), and the vehicle control unit is used for controlling at least one of the internal combustion engine, the generator, the clutch, the ePSD, the driving motor, the automatic transmission and the battery pack based on 3D map data in a vehicle-mounted Global Navigation Satellite System (GNSS) and/or the map unit (MU) independently.

The ACE heavy duty truck hybrid system architecture of the disclosure is a double-motor and single-clutch mixed hybrid system, this hybrid system controls the amplitude and flow direction of mechanical or electric power among the 100 kW level internal combustion engine, generator, battery pack and driving motor dynamically through the 100 kW level large clutch combined with the electrical power split device (ePSD), switches between series hybrid mode and parallel hybrid mode by disengaging and engaging the clutch, effectively integrates the respective advantages of series hybrid and parallel hybrid system architectures and optimizes the power and fuel saving performance of the vehicle, and the hybrid system is more cost-effective than a pure series hybrid system. The generator (MG1) is configured in the position P1 familiar to the automotive industry (behind the flywheel of the internal combustion engine and in front of the clutch), the main driving motor (Mg2) is configured in the position P2 (behind the clutch and in front of the transmission), and the optional auxiliary driving motor (GM3) is configured in either position P3 (behind the transmission, in front of the transmission shaft) or P4 (behind the transmission shaft, at the wheel side).

The ACE heavy duty truck of a mixed hybrid architecture realizes the all-digital software defined powertrain with ePSD as the core. During the hardware design of ePSD three-port power electronic network, a margin is reserved for the function and performance, plasticity is increased, and the product is continuously upgraded and evolved through the software remote update iteration (OTA) of each ACE heavy duty truck throughout its full operation life cycle. Relying on continuous software remote update (OTA), the actual performance of the powertrain of each ACE heavy duty truck is corrected continuously in a tailored manner based on big data plus artificial intelligence of cloud-vehicle interaction, that is, ensure that each ACE heavy duty truck can not only meet the emission regulation limits (RDE) at all times and places, but also realize the optimization of the fuel saving effect of the heavy duty truck and intelligent operation and maintenance (M&R) within the 700,000 km warranty period required by the emission regulations.

In some embodiments, the ePSD is configured as a three-port power electronic network which contains three 100kW level unique functional modules: the first port is internally connected with a bidirectional AC-DC converter (also known as an inverter), the second port is internally connected with at least one bidirectional AC-DC converter (also known as an inverter), and the third port is internally connected with at least one bidirectional Boost-Buck DC-DC converter (also known as a chopper). The disclosure focuses on the main peripheral input/output characteristics of the ACE heavy duty truck ePSD and contains three functional modules. The collection of various topological structures of power electronic circuits realizing the above three functional modules belongs to the scope of the invention. The physical packaging form of ePSD is that the above three functional modules are either packaged in a metal box in a centralized way, or separately packaged and arranged with the generator (MG1), the main driving motor (MG2) and the battery pack in a decentralized way.

The above hybrid powertrain of the ACE heavy duty truck realizes two unique system architectures: series hybrid (clutch disengaged) and parallel hybrid (clutch engaged) respectively by controlling the on-off state of the clutch, and there are many different operation modes under each system architecture. The vehicle controller (VCU) commands the electromechanical Clutch-by-wire by electric control (rather than mechanically) to switch between series architecture and parallel architecture accurately and smoothly. The two architectures are separately described below. To optimize both fuel saving and power of the vehicle, the parallel architecture is preferred under high speed conditions (smooth highway, at the speed of above 50 km/h, infrequent active acceleration or braking) or any conditions (at any speed, slowdown function is required) with long-distance downslope (the absolute value of longitudinal slope on the way is greater than 2.0 degrees, the slope length is greater than 10 km); and the series architecture is preferred under urban conditions (at the speed of below 50 km/h, with frequent active acceleration or braking).

Firstly, under the series hybrid architecture, the clutch is disengaged, there is only an electric power flow circuit rather than mechanical power flow circuit from the internal combustion engine to the driving wheel, all the DC ports of the three functional modules inside the ePSD are connected to the DC bus junction X bidirectionally and electrically, the product of the DC voltage and current time-varying function at this junction is the time-varying function of the electric power of the corresponding energy conversion device, and these power items satisfy the following three equations at all times:

$$P_V = _{dt} P_{MG2} \qquad (2\text{-}1)$$

$$P_{BAT} + P_{MG1} + P_{MG2} = 0 \qquad (2\text{-}2)$$

$$P_{ICE} = -P_{MG1}/_g \qquad (2\text{-}3)$$

All the above power items are 100 kW level time-varying functions, and it is assumed that the energy conversion factor for a round trip of the generator (MG1), battery pack and driving motor (GM2) may be almost equal to 1.0. where

$P_{MG1} > 0$, the driving power of the generator (MG1) (the load is the start-stop or in-cylinder braking of the internal combustion engine, and the electric energy is converted into mechanical energy); $P_{MG1} < 0$, the generated power (power generation directly driven by the internal combustion engine, mechanical energy is converted into electrical energy);

$P_{MG2} > 0$, the driving power (electric energy is converted into mechanical energy) of the main driving motor (MG2); $P_{MG2} < 0$, the regenerative braking power (mechanical energy is converted into electric energy), the battery pack is charged and energy is recovered;

$P_{BAT} > 0$, the total charging power of all battery packs (electric energy is converted into chemical energy); $P_{BAT} < 0$, the total discharge power (chemical energy is converted into electric energy);

$P_{ICE} > 0$, the net output power of the internal combustion engine (chemical energy is converted into mechanical energy); $P_{ICE} < 0$, the equivalent load power of start-stop drag or in-cylinder braking when there is no fuel injection in the internal combustion engine;

Preferred power configuration principle of four energy conversion devices: $P_{ICE\text{-}p} >= P_{MG2\text{-}m} >= P_{MG1\text{-}m}$; $P_{BAT\text{-}m} > P_{MG2\text{-}m}$. Where $P_{ICE\text{-}p}$ is the peak power (maximum continuous power) of the internal combustion engine, and $P_{MG1\text{-}m}$, $P_{MG2\text{-}m}$ and $P_{BAT\text{-}m}$ are the power ratings (i.e. maximum continuous power) of the generator, driving motor and battery pack, respectively. The difference between the motor and the internal combustion engine is that the motor can withstand short time overload, and its pulse peak power (minute level) is usually more than 25% higher than the rated power; the pulse peak power (15 seconds) of the battery pack can be 100% higher than its rated power. The system peak power (i.e. maximum continuous driving power) of the powertrain is completely determined by the $P_{MG2-m}$ of the standard main driving motor under the series hybrid structure. An optional auxiliary driving motor (MG3) may be considered in order to improve the power, fuel saving and safety of the vehicle. MG3 is arranged either in the position P3 (between the transmission output and the first driving axle) or in the position P4 (second driving axle). Of course, the addition of a third motor will not only improve the vehicle power performance, but also increase the system cost.

$P_{MG2}$ is an independent variable, which is directly proportional to the road load power $P_v$ of the vehicle, $\eta_{dt}$ is the drive train efficiency (a positive number less than 1.0). $P_{MG1}$ is another independent variable, which is directly proportional to the net output power $P_{ICE}$ of the internal combustion engine, and $\eta_g$ is the engine efficiency (a positive number less than 1.0). The internal combustion engine (ICE) and the generator (MG1) can be actively set to operate at the high-efficiency condition points of specific speed and torque to ensure the highest combustion thermal efficiency of the internal combustion engine and optimized exhaust emission at this moment; under the unified command of the vehicle control unit (VCU), the three power electronics function modules inside the ePSD and related subsystems such as internal combustion engine, generator, driving motor, automatic transmission and battery pack dynamically adjust the independent variable $P_{BAT}$ and perform peak load shifting according to the power control strategy of the whole vehicle to meet the vehicle dynamics equation (1-1) in real time and achieve the optimal fuel saving effect on the premise of ensuring the power performance and freight timeliness of the vehicle.

The preferred range of rated voltage Vbuso of ePSD internal DC bus is between 600V and 800V. The third port of the ePSD can be connected to at least one power type battery pack bidirectionally and electrically, the rated voltage of each battery pack $V_{bat} < V_{bus0}$, and the third port can also be connected with a 100kW brake resistor $R_{bk}$ equipped with a radiator unidirectionally and electrically as the effective load when the ACE heavy duty truck runs on a long-downhill path, the driving motor realizes the retarder function through regenerative braking, and the battery pack is fully charged (SOC=100%).

In some embodiments, the port III of ePSD can be connected with multiple battery packs with different rated voltages or even cells with different electrochemical components bidirectionally and electrically, which brings multiple benefits to optimize the cost effectiveness of ACE heavy duty truck system. The battery pack of the ACE heavy duty truck is a Peak Power Source with ultra long cycle life and sustainable high-rate (greater than 3C) charge and discharge at both high and low temperatures. Its main function is to provide 100kW "peak load shifting" transient electric power, superimposed with the steady-state average electric power supplied by the generator set to ensure that the driving motor can provide the required vehicle road load power in real time and satisfy the vehicle dynamics equation (1-1). The capacity of this power type battery pack is generally within 100 kWh. This will be described in detail later.

The battery pack capacity of the hybrid heavy duty truck is generally only dozens of kWh. If the heavy duty truck for long haul logistics encounters the extreme case of climbing a mountain (with the longitudinal slope of greater than 2.0 degrees) continuously for dozens of kilometers, it is likely that the battery pack charge is exhausted before the vehicle reaches the summit of the mountain, and the gradeability of the vehicle will depend on the maximum continuous power of the generator set at this moment. To maintain the same power performance as the traditional heavy duty truck with internal combustion engine in the extreme case of climbing a mountain, the series hybrid heavy duty truck should be equipped with the generator (MG1), driving motor (MG2) and inverter as options with power ratings equal to the maximum power of the internal combustion engine. At present, the peak powers of internal combustion engines (displacement 11L~15L) of all mainstream heavy duty trucks for long haul logistics exceed 350 kW, and the peak power of a top-level 15L internal combustion engine can be up to 450 kW. However, although the onboard large generator or driving motor and inverter with the rated power (refers to the maximum continuous power of the motor) of more than 350 kW have been industrialized, they are still very expensive because they cannot be used with new energy passenger vehicles with greater consumption. The cost of a vehicle gauge level motor with the rated power of 350 kW is significantly higher than the total cost of two motors with the rated power of 175 kW. The cost of such high-power and high-configuration pure series hybrid systems will be high for a long time and difficult to fall, and the overall cost performance is unsatisfactory.

Secondly, under the parallel hybrid architecture, the clutch is closed and locked. From the internal combustion engine to the driving wheel, both the mechanical power flow circuit and the electric power flow circuit are closed-loop, allowing joint force application. All the DC ports of the three functional modules inside the ePSD are connected to the DC bus junction X bidirectionally and electrically, the product of the DC voltage and current time-varying function at this junction is the time-varying function of the electric power of the corresponding energy conversion device, and these power items satisfy the following two equations at all times:

$$P_V = \eta_{dt} \left( P_{ICE} + P_{MG1} + P_{MG2} \right) \qquad (3\text{-}1)$$

$$P_{BAT} + P_{MG1} + P_{MG2} = 0 \qquad (3\text{-}2)$$

There is a mechanical connection between the internal combustion engine and the driving axle under the parallel hybrid architecture. The road load power Pv is an independent variable, which is directly proportional to the product of the speed and torque of the vehicle transmission shaft. In other words, when the vehicle is running normally (no tire slip detected), its tire speed is an independent variable. At this time, the speed of the internal combustion engine is a dependent variable directly proportional to the tire speed, and its torque may be an independent variable within a certain range to be set independently according to the control strategy. From the perspective of fuel saving, the series architecture is preferred under urban conditions (the average speed is less than 50 km/h, with frequent active acceleration and braking); while the parallel architecture is preferred under high speed conditions (the average speed is greater than 50 km/h, with infrequent active acceleration and braking).

More than 90% of the internal combustion engines of heavy duty trucks are diesel engines. The high efficiency range of the diesel engine of the heavy duty truck is generally in the speed range of 1200 ~ 1800 revolutions per minute (rpm), and the torque is within the maximum torque range of 50% ~ 85%. The specific fuel consumption (gram/kilowatt hours; g/KWh) of the internal combustion engine beyond the high efficiency range will significantly rise. Fuel consumption reduction through engine Down speed or Down size is a trend of the heavy duty truck industry in Europe and America in recent ten year, but these two measures contradict the improvement of vehicle power performance. Fortunately, two 100 kW level generators and driving motors can apply force together with the internal combustion engine under the parallel architecture, and at this time, the power performance of the mixed hybrid heavy duty truck is much better than that of the traditional heavy duty truck with internal combustion engine or the pure series hybrid heavy duty truck.

When the mixed hybrid ACE heavy duty truck for long haul logistics encounters a limit road condition of climbing a mountain continuously for dozens of kilometers, the clutch may be engaged in advance to switch to the parallel hybrid architecture according to the onboard 3D map and vehicle positioning when the vehicle gets to the bottom of the mountain, then the vehicle is directly driven by the internal combustion engine, thus eliminating multiple energy conversion from the internal combustion engine to the driving wheel and improving the driving efficiency. If the battery pack charge is exhausted before the mixed hybrid heavy duty truck reaches the summit, both the generator and the driving motor can be configured as no-load idling, and at this time, the power performance of the vehicle only depends on the peak power (greater than 350 kW) of the internal combustion engine. Under the mixed hybrid architecture of the invention, the configuration condition for peak power parameter is: $P_{ICE-p} > P_{MG2-m} > P_{MG1-m}$, with $P_{ICE-p} > 350$ KW, $P_{MG2-m} < 300$KW, $P_{MG1-m} < 200$KW as options. The cost of the motor and inverter can be significantly reduced at the motor rated power of less than 250 kW. In addition to the extreme case of climbing a mountain, the parallel mixed hybrid architecture can operate in a Charge-Sustaining (CS) mode for a long time on flat and hilly lands. The state of charge (SOC) of the battery pack is maintained within a reasonable range (e.g. 20% - 80%) through the start-stop control of the internal combustion engine at high speed (1200 rpm). At this time, the internal combustion engine and dual motors (MG1, MG2) can jointly apply force and drive the vehicle, and the maximum continuous power of the parallel powertrain can be up to more than 500 kW. The power performance and fuel saving of the mixed hybrid heavy duty truck are significantly better than those of both the traditional heavy duty truck with internal combustion engine and the series hybrid heavy duty truck with high configuration.

Under the parallel architecture, when the ACE heavy duty truck encounters going down a long slope (e.g. the absolute value of longitudinal slope is greater than 2.0 degrees, and the continuous downhill length is more than 5 km), the in-cylinder braking power of the internal combustion engine and the total regenerative braking power of dual motors (generator and driving motor) can be superimposed. At this time, the ACE heavy duty truck has non-friction effective brake power of more than 500 kW stably for a long time in the case of going down a long slope at high or low speed, and its retarder function is obviously better than that of the series hybrid heavy duty truck and the traditional heavy duty truck with internal combustion engine with retarder (e.g. hydraulic retarder, eddy-current electromagnetic retarder). It also overcomes the disadvantages of low non-friction braking power and weak slowdown function of the prior art, such as in-cylinder braking slowdown, hydraulic slowdown or eddy-current electromagnetic slowdown of the traditional heavy duty truck with internal combustion engine while the vehicle is going down a slope at low speed (e.g. less than 30 km/h).

Routine examination and regular (calculated by accumulated mileage) replacement of brake pads are one of the main cost items of Maintenance and Repairs (M&R) for heavy duty trucks for long haul logistics. The mixed hybrid heavy duty trucks recover energy through regenerative braking, save fuel or slow down while going down long slopes, obviously reduce the usage frequency of brake pads, prolong the service life of the brake pads by more than 100%, and reduce the M&R costs.

Most of the new heavy duty trucks in Europe and America are configured with automatic transmissions, especially the automatic mechanical transmission (AMT) with more than ten gears. The proportion of automatic transmission options for new heavy duty trucks in China is also increased year by year. Most of the clutches of heavy duty trucks for long haul logistics are friction clutches, and hydraulic clutches are rarely used. The actual service life of the friction clutch is highly related to the driving habits of heavy duty truck drivers. The main reasons for the short service life of the friction clutch are the mechanical wear, vibration and impact brought by frequent disengagement or engagement at high speed difference and large torque. The service life of the friction clutch for the traditional heavy duty truck with internal combustion engine is less than that of the internal combustion engine and the automatic transmission, which is one of the high cost items in M&R of heavy duty trucks.

The clutch in the present disclosure is a novel Clutch-by-wire. The pressing, engagement, locking and separation and other control mechanisms of the clutch use electromechanical or electromagnetic control-by-wire instead of the traditional mechanical control. The drive end and the driven end of the clutch can transmit torque and power either in a flexible connection mode through frictional contact or in a rigid connection mode through dog engaged gear contact. Different from the clutch connection and control of the traditional heavy duty truck with internal combustion engine, the drive end of the clutch of the mixed hybrid ACE heavy duty truck in the present disclosure is always mechanically connected with the driving motor in the position P2 and the input shaft of the transmission. Its driven end is always connected with the generator in the position P1 and the flywheel of the internal combustion engine mechanically. The motor speed and the speed and accuracy of torque adjustment are significantly higher than those of the internal combustion engine. During clutch switching, fuel injection of the internal combustion engine is suspended to idle, the generator (MG1) in the position P1 gets electric energy from the battery pack in the driving mode and drags the internal combustion engine to realize precise synchronization of the drive end and driven end of the clutch or maintain a small speed difference (the speed difference is less than 10 rpm), and the torque of the generator is gradually increased during the transient process of clutch engagement until the drive end and driven end of the clutch are completely and synchronously closed and locked. At this time, the internal combustion engine restarts fuel injection and ignition (compression ignition for the diesel engine), gradual loading and output of mechanical power. When the clutch is disengaged, the control modes for the internal combustion engine and the generator are similar, the internal combustion engine stops injecting fuel, the generator towing internal combustion engine and the driven end and its drive end of the clutch rotate synchronously, the torque is gradually reduced to interrupt the torque transmission between the drive end and driven end of the clutch (torque interrupt), and then the clutch is disengaged. In the parallel mode, the generator and driving motor can apply force to drive the vehicle simultaneously, the sum of the power ratings of the dual motors is much greater than the peak power of the internal combustion engine, making it certainly possible to undertake 100% of the vehicle driving task in a short time (at minute level). At this time, the torque and net output power of the internal combustion engine can be completely decoupled from the driving conditions of the vehicle, and the adverse consequence of flameout or irregular start-stop conversion due to insufficient torque after fuel injection and compression ignition of the diesel engine again.

To optimize the fuel saving, power and active safety of the vehicle concurrently, the following clutch control strategy may be used: it is preferred to engage and lock the clutch under high speed conditions without high mountain areas (at the speed of greater than 50 km/h) and under the condition of going down a long slope (without speed limitation; the absolute value of longitudinal slope is greater than 2.0 degrees, and the slope length is greater than 10 km) to realize the parallel hybrid architecture. The clutch is preferably disengaged under other road conditions and vehicle conditions to realize the series hybrid architecture.

In some embodiments, the hybrid vehicle further comprises a Global Navigation Satellite System (GNSS) which is a dual-antenna carrier phase real-time kinematic (RTK) differential receiver, capable of calculating the longitude, latitude, altitude, longitudinal slope, linear velocity and other parameters of a longitudinal road in the running process of the vehicle in real time; or a high precision single-antenna Global Navigation Satellite System, capable of calculating the longitude, latitude and linear velocity of the road at the meter-level positioning precision in the running process of the vehicle in real time; and an inertial measurement unit (IMU) containing a dynamic roll-angle sensor, capable of measuring the longitudinal slope of a road in real time with the measurement accuracy of 0.1%.

In some embodiments, the VCU is configured for predictive control over the generator set (internal combustion engine + generator), clutch, driving motor, automatic transmission, ePSD and battery pack (collectively referred to as the "mixed hybrid powertrain") of the ACE heavy duty truck based on the longitude, latitude, longitudinal slope and speed calculated by the Global Navigation Satellite System (GNSS) in real time in the running process of the vehicle in combination with the 3D road information (longitude, latitude, longitudinal slope, etc.) within the electronic horizon ahead of the vehicle stored in the 3D map; and/or predictive control over the mixed hybrid powertrain based on the longitude, latitude, longitudinal slope and linear velocity of the longitudinal road in the running process of the vehicle calculated by the RTK receiver in combination with the longitude, latitude and longitudinal slope of the longitudinal road within the electronic horizon ahead of the vehicle stored in the 3D map.

There are two kinds of charges stored in the battery pack: one is the high-cost charge from the generator set, and the other is the low-cost charge recovered from the regenerative braking of the driving motor, with the cost of approximately zero. The power control strategy for the fuel saving robot of the ACE heavy duty truck has two key points: the first is to maximize the charge throughput of the battery pack per mileage (kWh/highway; i.e. the charge inventory turnover ratio) for driving the vehicle, and the second is to increase the proportion of low-cost charge as far as possible.

VCU can command the Clutch-by-wire and dynamically switch the series or parallel architecture of the vehicle according to the highway 3D data (longitude, latitude, longitudinal slope) and real-time traffic conditions within the electronic horizon. The mixed hybrid ACE heavy duty truck of the invention can work in the mixed driving mode of Charge Sustaining for a long time through the power control strategy of PAC (Predicative-Adaptive Control) over Start-Stop of the internal combustion engine under any architecture or at any speed to increase the charge throughput, improve the low-cost charge proportion and further reduce the fuel consumption.

In some embodiments, the VCU is further configured for predictive control over the hybrid powertrain based on the longitudinal slope calculated by the RTK receiver and the data of the Electronic Horizon 3D map in the running process of the vehicle when it is detected that the difference between the longitudinal slope calculated by the RTK receiver and the longitudinal slope of the same position stored in the 3D map exceeds the allowable tolerance. Then, it distinguishes right from wrong timely according to the vehicle dynamics equation and makes a record at any time for subsequent update and error correction of the 3D map.

In some embodiments, the VCU is further configured for calibrating built-in clocks comprising the built-in clocks of the VCU, of subsystem microprocessors based on the time service of the RTK receiver in real time, and annotating all operating data of ACE heavy duty trucks in the unique time series to measure and store signals with a sampling frequency of higher than 5 Hz; aligning and assembling into a data set the measurement parameters and/or operating parameters of at least two subsystems of the RTK receiver, the map unit, the generator set, the ePSD, the clutch, the driving motor, the automatic transmission and the battery pack on the first dimension; calibrating and arranging a plurality of data sets on the second dimension according to the time series provided by the calibrated clock so as to form a structured big data packet used for describing the dynamic operating condition of ACE heavy-duty trucks.

In other words, the VCU is configured for calibrating built-in clocks comprising the built-in clocks of the VCU, of subsystem microprocessors based on accurate time service of the RTK receiver, and annotating the data in the unique time series; assembling the measurement parameters and/or operating parameters of at least two subsystems of the RTK receiver, the map unit, the generator set, the ePSD, the clutch, the driving motor, the automatic transmission and the battery pack into the structured big data packet used for describing the dynamic operating condition of ACE heavy duty trucks.

Optionally, the dedicated structured big data packet can be encrypted, and accordingly uploaded in a safer way to the cloud computing platform for storage through the mobile Internet in real time (sub-second level delay) or in time (hour level delay) afterwards for subsequent big data analysis and processing.

In some embodiments, the generator set is composed of an internal combustion engine and an alternator, wherein the internal combustion engine is directly connected to the alternator (MG1) bidirectionally and mechanically, and the alternator is connected to the AC terminal of the AC-DC converter module in the first port of ePSD unidirectionally and electrically. The output shaft of the internal combustion engine is also connected with the input shaft of the automatic transmission through a clutch and a flexible coupling bidirectionally and mechanically; the mechanical shaft of the main driving motor (MG2) in the position P2 is connected with the clutch bidirectionally and mechanically and with the input shaft of the automatic transmission through a flexible coupling bidirectionally and mechanically. The hybrid powertrain with dual motors and single clutch can realize multiple driving modes separately under the two architectures of series hybrid and parallel hybrid which can be switched through the clutch, and optimize the power and fuel saving under various complex and changeable vehicle driving conditions and road longitudinal slope distribution functions according to the power control strategy selected by the driver.

In addition to the basic power generation mode of generator MG1 driven by the internal combustion engine, the 100kW MG1 can completely replace the 10kW starting motor of the heavy duty truck configured for the traditional internal combustion engine under the series hybrid architecture (with the clutch disengaged) to reduce the system cost. In the driving mode, MG1 can easily drive the internal combustion engine from a static state without fuel injection to the designated speed quickly and accurately, followed by fuel injection and ignition (compression ignition for diesel oil) of the internal combustion engine, and the Start-Stop mode switching of the internal combustion engine of the heavy duty truck can be realized smoothly with high performance at any speed of the flywheel for the internal combustion engine; the vehicle is driven by the driving motor (MG2) electrically in the battery pack charge consumption mode (CD); when the state of charge (SOC) of the battery pack drops to the lower limit, the MG1 starts the internal combustion engine to start generating power and enters the charge sustaining (CS) working mode for further fuel saving under urban conditions with serious highway congestion. MG1 can also take the internal combustion engine having the function of in-cylinder braking as a payload in its driving mode, consume DC power through the inverter, and provide another redundant payload in addition to the battery pack and brake resistor for the main driving motor (MG2) to realize the retarder function through regenerative braking power generation when the heavy duty truck is going down a long slope.

In some embodiments, the VCU is configured for control over at least one of the internal combustion engine, the generator, the battery pack, the ePSD, the automatic transmission and the driving motor based on at least one of a path longitudinal slope distribution function within the electronic horizon of 3D map, a universal characteristic curve digital model of the internal combustion engine, a digital model of generator characteristics, a digital model of the battery pack charge-discharge characteristic, a digital model of automatic transmission characteristics and a digital model of driving motor characteristics correspondingly.

In some embodiments, the universal characteristic curve digital model of the internal combustion engine comprises an idle working point without road load, and several high efficiency working points with the minimum specific fuel consumption in the internal combustion engine, and the VCU is further configured for enabling the internal combustion engine to work at the idle working point or several high efficiency working points, thus enabling the internal combustion engine to work stably at several high efficiency working points for a long term; the surface condition is changed into the point condition, and smooth switching among different condition points can be achieved.

In some embodiments, the VCU is further configured for commanding the Internet Of Vehicle (IOV) for real-time collection and local storage of the dedicated structured big data packet of the ACE heavy duty truck operations in the running process of the vehicle; and sending and storing the stored structured big data packet onboard to the remote cloud computing platform via a wireless mobile Internet in real time (sub-second delay) or in time (hour level delay) for subsequent cloud analysis and processing of big data. Deep learning algorithm, cloud platform computing power, and numerous ACE heavy duty truck operated structured big data are integrated on the cloud platform to train the cloud AI brain of the fuel-saving robot of the ACE heavy duty truck and the local AI brain of a specific vehicle. According to a specific ACE heavy duty truck and a specific freight path combined with the operation big data of all ACE heavy duty trucks in the history of the same path, the cloud AI brain quickly calculates the default optimal fuel saving power control plan for the vehicle running on the path and downloads and pushes the plan to the vehicle, and then the vehicle AI brain makes real time correction according to the specific vehicle and road conditions.

The second aspect of the invention provides a cloud computing platform, comprising at least one cloud server; each server comprises a processing unit; and a memory, coupled to the processing unit and comprising computer program codes; when the computer program codes are executed through the processing unit, the server executes the following operations of:

receiving and storing the dedicated structured big data from multiple ACE heavy duty trucks via the wireless mobile Internet, wherein each ACE heavy duty truck is provided with a hybrid powertrain with dual motors and single clutch, and at least comprises:

- - a generator set (generator in position P1 directly driven by the internal combustion engine), used for converting chemical energy of vehicle fuel into electric energy;
- an electrical power split device (ePSD), configured as a power network with three ports, wherein the first port of the ePSD is connected with the output end of the generator set bidirectionally and electrically;
- a battery pack, connected with the third port of the ePSD bidirectionally and electrically;
- an automatic transmission, with its output shaft connected with a transmission shaft of the vehicle bidirectionally and mechanically;
- a map unit, used for prestoring an electronic navigation 3D map comprising the 3D information of the longitude, latitude and longitudinal slope of the longitudinal road at the road section where the vehicle runs;
- at least one driving motor in the position P2, connected with the second port of ePSD bidirectionally and electrically, with the output shaft of the driving motor connected with the transmission bidirectionally and mechanically. The driving motor can be operated to: convert the electric energy from the generator set and/or battery pack into mechanical energy for driving the vehicle; or convert the mechanical energy of the vehicle into electric energy through regenerative braking power generation, and charge the battery pack through ePSD. The flywheel for the internal combustion engine is connected with the input shaft of the transmission through a clutch-by-wire bidirectionally and mechanically;
- a vehicle control unit (VCU) used for controlling at least one of the navigator, the generator set, the clutch, the ePSD, the driving motor, the automatic transmission and the battery pack based on 3D road data (especially longitudinal slope function in Electronic Horizon) from a global navigation satellite system (GNSS) and/or the map unit (MU) through a data bus (e.g. CAN bus) of the vehicle independently;

forming dedicated deep learning algorithms for the fuel saving robot of the heavy duty truck based on the dedicated structured big data of operation for multiple ACE heavy duty trucks stored on cloud;
conducting training on the artificial intelligence (AI) brain of a cloud fuel-saving robot based on the formed dedicated deep learning algorithms through the computing capability of the cloud platform, wherein the structured big data comprises the operating data related to at least one of the generator set, the clutch, the ePSD, the driving motor, the automatic transmission and the battery pack; and
making a response to the request of a certain ACE heavy duty truck; aiming at the vehicle-specific driving path, the AI brain of the cloud fuel saving robot will give a customized power control scheme as the default initial control scheme for the fuel saving strategies of the VCU. The VCU of the vehicle modifies the default fuel saving control solution in real time according to the real-time road conditions to achieve the optimal fuel saving effect.

In some embodiments, each of the multiple ACE heavy duty trucks further comprises: a high precision Global Navigation Satellite System (GNSS), configured as a dual-antenna carrier phase real-time kinematic (RTK) differential receiver or a single-antenna GNSS together with an inertial measurement unit (IMU) containing a dynamic longitudinal slope function, used for calculating the longitude, latitude, altitude, longitudinal slope and vehicle linear velocity of a longitudinal road in the running process of the vehicle in real time. The measurement data received from multiple vehicles further comprises: road 3D data comprising the longitude, latitude and longitudinal slope, measured by the multiple vehicles at the same road section of a running way, of a plurality of longitudinal roads, and the operations further comprise: dynamically judging the accuracy of 3D map through the vehicle dynamics equation, vehicle operation big data and the dynamic error value between measured road 3D data and 3D map road data, timely transmitting the updated values or out-of-limit error values of road 3D data to electronic navigation 3D map manufacturers; and updating the 3D map stored in the vehicle navigator. Thus, the precision of the 3D map can be improved in a crowd-sourcing mode continuously, and the freshness of the 3D map is kept; and the 3D map stored in the vehicle navigator is updated continuously.

The post-processing system of the China VI diesel engine of the heavy duty truck consists of three subsystems: diesel oxidation catalyst (DOC), diesel particulate filter (DPF) and selective catalytic reducer (SCR) for eliminating nitrogen oxides (NOx), which are connected in series successively from front to back. The high efficiency temperature range for catalyst emission reduction conversion is generally between 250°C (Celsius degree) and 550°C. The exhaust temperature of the diesel engine is generally 300°C to 500°C. During cold start of the internal combustion engine (which means that the surface temperature of the catalysts inside the post-processing system is below 100°C), the surface temperature of various catalysts in the post-processing system cannot reach 300°C immediately, and at this time, the conversion efficiency of the catalysts is not high (e.g. less than 50%), and the emission pollution of pollutants (particles, NOx, etc.) is high. A large portion of the accumulative emission pollution from the vehicle comes from the cold start of its internal combustion engine and other transient states of sudden changes in speed and torque. Beijing Public Transport released a number of plug-in hybrid electric vehicles (PHEVs) from service in advance in 2018 in response to the "three-year action plan for winning the blue sky defense war" mainly because the frequent zero starts of the diesel engine of the PHEV generated higher actual pollution emissions than those of the traditional diesel engine bus under urban conditions.

The modern heavy duty truck controlled by the On-Board Diagnostics-II (OBD-II) module for monitoring the vehicle exhaust emission in real time must stop to complete Active Regeneration of DPF and remove carbon particles deposited in DPF every once in a while. The frequency of Active Regeneration (times/100 km) mainly depends on the configuration parameters of the vehicle and its mainstream Duty Cycle. The Active Regeneration of DPF is both time consuming (idling stop of diesel engine for about 30 minutes) and fuel consuming with useless work, which has always been one of the pain points for European and American heavy duty truck drivers and transportation companies, and will also become one of the pain points for Chinese drivers and fleets using new China VI heavy duty trucks.

The mixed hybrid ACE heavy duty truck of the invention can set the internal combustion engine at its high efficiency operating point for combustion stably for a long time throughout its operational life cycle, and can reduce the active regeneration frequency by more than 80% compared with the plug-in parallel heavy duty truck or the traditional heavy duty truck with internal combustion engine; it can also ensure that the surface temperature of catalysts inside the emission post-processing system falls within the efficient conversion temperature range stably for a long time through the high speed start-stop control strategy for the internal combustion engine under the parallel architecture (e.g. fuel injection switching at 1200 rpm) while optimizing the fuel consumption, so that the number of cold start times of the internal combustion engine is controlled and reduced by more than 75% compared with the plug-in parallel heavy duty truck; it can not only reduce the fuel consumption, but also reduce the pollutant emission in the actual operation of heavy duty trucks to meet the Real Drive Emission (RDE) requirements under actual driving in the China VI emission regulations stably for a long time.

Various typical driving modes possessed by series hybrid vehicles, parallel hybrid vehicles and mixed hybrid (series-parallel) hybrid vehicles shall be familiar to those skilled in the art and will not be further introduced. As described above, the overall fuel consumption (L/100 km) of the double-motor single-clutch mixed hybrid heavy duty truck of the disclosure in the application scenarios of long haul logistics is reduced by 30% compared with that of the traditional heavy duty truck with internal combustion engine, and the former has better power, active safety and RDE emission compliance. Also, the mixed hybrid heavy duty truck has more advantages in fuel saving, power, active safety, cost competitiveness, etc. compared with the extended-range mixed hybrid heavy duty truck (i.e. pure series hybrid heavy duty truck).

All the core subsystems or parts and components of the ACE heavy duty truck of the disclosure are based on industrialized products and technologies. Compared with the diesel heavy duty truck in the prior art, the ACE heavy duty truck of the disclosure can achieve the beneficial effects of energy saving and emission reduction with the overall fuel saving ratio of 30% in the application scenario of long haul logistics on highways on the premise of ensuring the power, active safety, freight timeliness and attendance of vehicles. ACE heavy duty trucks enable fleets or individual vehicle owners to recover the cost difference (refers to the price difference of Total Owning Cost (TOC) between ACE heavy duty truck and traditional diesel heavy duty truck) within two years or 500,000 km highway freight mileages by saving the fuel and M&R costs of the vehicles and improving the labor productivity of heavy duty truck drivers without subsidies.

The mass production of new ACE heavy duty trucks (i.e. original ACE heavy duty trucks) can meet the 2025 carbon emission target value of Euro VII regulations issued by EU in 2019 and the 2027 carbon emission target value of the American GHG-II two years in advance. In America, the total service life of a heavy duty truck is up to 15 years or 1.5 million miles, a set of frame of each heavy duty truck may be configured with two to three sets of powertrains throughout the life cycle (internal combustion engine + transmission; reliable operation life of the powertrain is 500,000 mile), and the second or third set of powertrain is mostly an overhauled powertrain. The average annual sales of new heavy duty trucks in North America is about 200,000, while the number of modified heavy duty trucks (second-hand heavy duty trucks with replaced powertrains) exceeds 200,000 every year. Thanks to the "Easy in and Strict out" traffic laws and regulations system in America, which allows modified heavy duty trucks to run directly on the road for commercial operation without re-certification, the fuel saving robot of the ACE heavy duty truck of the invention can also be used for modifying nearly 2 million used heavy duty trucks in the market stock of America in batches, so that a large number of modified ACE heavy duty trucks can also achieve the 2027 carbon emission target value of GHG-II regulations several years in advance, just like the new original ACE heavy duty trucks. This is of great and far-reaching significance to the energy saving and emission reduction of American long haul logistics industry.

Brief Description of the Drawings

Figure 1 illustrates a system block diagram (type I) of the mixed hybrid ACE heavy duty truck disclosed by one embodiment of the invention;
Figure 2 is a system block diagram (type II) of the hybrid ACE heavy duty truck disclosed by another embodiment of the invention;
Figure 3 is a subsystem block diagram of the electrical power split device (ePSD) of the ACE heavy duty truck disclosed by one embodiment of the invention; and
Figure 4 is a system block diagram of data switching between the ACE heavy duty truck and the mobile Internet and the cloud computing platform disclosed by one embodiment of the invention;

In these figures, the same or similar reference symbols are used for representing the same or simile elements.

Detailed Description of the Preferred Embodiments

The following is the description of the embodiments by reference to some examples. It should be known that the description of these embodiments is only for those skilled in the art to properly understand the invention and accordingly achieve the invention, and are not hints of limitations to the invention.
For example, the term "including" and the variants thereof should be interpreted as the open term of "including but not limited to". The term "based on" should be interpreted as "at least partially based on". The terms "an embodiment" and "a kind of embodiment" should be interpreted as "at least one embodiment". The term "another embodiment" should be interpreted as "at least one other embodiment". The terms "first", "second" and the like can refer to different or the same objects. The followings may include other definite and implicit definitions. In this paper, "unidirectional" or "bidirectional" connection refers to whether the direction of the electric or mechanical power flow or energy flow flowing from the power source to the load is reversible or not, and whether the roles of the power source and the load can be exchanged with each other or not. During unidirectional connection, the roles of the power source and the load are fixed, and the power flow from the source to the load is unidirectional and irreversible; during bidirectional connection, the roles of the power source and the load can be switched, and the direction of power flow is reversible or bidirectional.
The following is the description of the basic principles and some embodiment of the invention by reference to the figures. Figure 1 shows the power assembly, the vehicle control unit, core sensors and other devices of the hybrid heavy duty truck disclosed by the embodiment of the invention. The system is either a set of 6x2 powertrain system with only one drive driving axle and one driven driving axle, or a 6x4 powertrain system with one drive driving axle and one auxiliary driving axle. The heavy duty truck adopting the powertrain systems in Figure 1 can be called the ACE (Automated, Connected, Electrified) heavy duty truck. In some embodiments, the heavy duty truck can be, for example, the hybrid heavy duty truck with the gross weight of larger than 15 tons for long haul logistics.
Figure 1 illustrates a system block diagram (type II and type I) of the mixed hybrid ACE heavy duty truck disclosed by one embodiment of the invention. As shown in Figure 1, generally, the ACE heavy duty truck comprises an internal combustion engine 101, a generator set (MG1) 110, an electrical power split device (ePSD) 123, a clutch 111, at least one main battery pack 130a, an automatic transmission (Tran) 150, at least one main driving motor (MG2) 140 and a vehicle control unit (VCU) 201. The main battery pack 130a and the main driving motor 140 are required (standard), while the auxiliary battery pack 130b and the auxiliary driving motor 170 are options (optional).

Specifically, the flywheel end of the internal combustion engine 101 is connected with the generator (MG1) 110 configured in the position P1 bidirectionally and mechanically and controlled by the engine control unit (ECU) 102 and mainly used for converting the chemical energy of onboard fuel such as diesel or natural gas into electric energy. The combination of the internal combustion engine 101 and the generator 110 may be collectively referred to as a generator set. The flywheel end of the internal combustion engine 101 and the mechanical shaft of the generator 110 are also connected with one end of the clutch-by-wire 111 bidirectionally and mechanically, and the bidirectional and mechanical connection among the three (101, 110, 111) is either single-axis Coaxial arrangement or multi-axis parallel arrangement. The multi-axis parallel arrangement is preferred. At this time, the flywheel output end of the internal combustion engine 101 is connected with one end of the clutch 111 directly, bidirectionally and mechanically, and the generator 110 can be connected with the flywheel output end of the internal combustion engine 101 and one end of the clutch 111 bidirectionally and mechanically through a reducer with a fixed gear ratio.

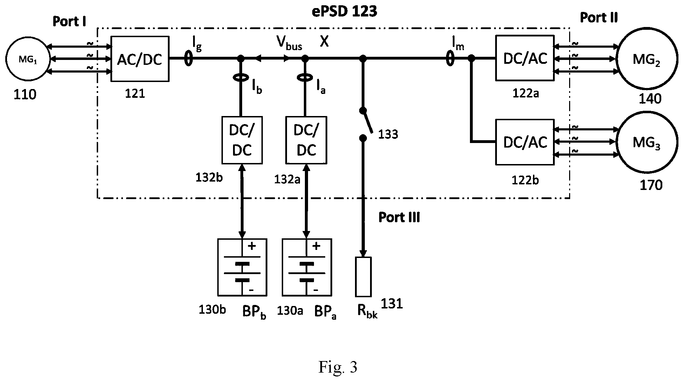

As shown in Figure 3, the electrical power split device (ePSD) 123 is a Power Electronics Network with three ports, wherein the AC terminal of the inverter 121 in the port I (also called "the first port") of the ePSD is connected with the three-phase AC output end of the generator 110 bidirectionally and electrically. The battery packs 130a and 130b are in DC connection with the chopper (also known as DC-DC converter) 132a and 132b in the port III (also known as the "third port") of the ePSD 123 bidirectionally and electrically; the 100 kW level brake resistor 131 with radiator is in DC connection with the port III unidirectionally and electrically. The driving motors 140 and 170 are AC-connected with the AC terminals of the inverters 122a and 122b inside the port II (also called the "second port") of the ePSD bidirectionally and electrically. All the DC terminals of the inverters 121, 122a and 122b are connected to the DC bus junction X bidirectionally and electrically. One end of the 100 kW level soft switch 133 is connected with the junction X electrically, and the other end is connected with the brake resistor unidirectionally and electrically.

As shown in Figure 1, the output shaft of the automatic transmission 150 is connected with an input shaft of a driving axle 160 of the vehicle bidirectionally and mechanically, and controlled by the transmission control unit (TCU) 151. The standard main driving motor 140 configured in the position P2 is connected with the other end of the clutch 111 bidirectionally and mechanically, and connected with the input shaft of the transmission 150 through the flexible coupling or clutch-by-wire 152 bidirectionally and mechanically. The other end of the clutch 111 and the mechanical shaft of the driving motor 140 are also connected with the input shaft of the transmission 150 bidirectionally and mechanically, and the bidirectional and mechanical connection among the three (111, 140, 150) is either single-axis Coaxial arrangement or multi-axis parallel arrangement. When the multi-axis parallel arrangement is adopted, the output shaft of the driving motor 140 can be connected with the input shaft of the transmission 150 and the drive end of the clutch 111 bidirectionally and mechanically through a reducer with a fixed gear ratio. The main driving motor 140 can be operated for converting the electric energy into the mechanical energy for driving the ACE heavy duty truck, or converting the mechanical energy of the ACE heavy duty truck into the electric energy (regenerative braking) to charge the battery pack 130a through the function modules, i.e. the inverter 122a and the chopper 132a, in the ePSD 123. The optional auxiliary driving motor (MG3) 170 configured in the position P4 is connected with the second driving axle 180 bidirectionally and mechanically. MG3 may not be selected with focus on reducing the system cost.

Figure 2 illustrates a system block diagram (type II and type I) of the mixed hybrid ACE heavy duty truck disclosed by the other embodiment of the invention. Specifically, the flywheel end of the internal combustion engine 101 is connected with one end of the clutch-by-wire 112 bidirectionally and mechanically, and the other end of the clutch 112 is connected with the mechanical shaft of the generator (MG1) 110 configured in the position P2 bidirectionally and mechanically. The generator set consisting of the internal combustion engine 101 and the generator 110 is mainly used to convert the chemical energy of onboard fuels such as diesel or natural gas into electric energy. When the clutch 112 is engaged, the flywheel end of the internal combustion engine 101 and the mechanical shaft of the generator 110 can be connected bidirectionally and mechanically by engaging and locking one end of the clutch 111, the other end of the clutch 111 is connected with the input shaft of the transmission 150 bidirectionally and mechanically, and the bidirectional and mechanical connection among the five (the output shaft of the internal combustion engine 101, the clutch 112, the mechanical shaft of the generator 110, the clutch 111 and the input shaft of the transmission 150) is either single-axis Coaxial sequential arrangement or multi-axis parallel arrangement. The multi-axis parallel arrangement may be preferred, and the mechanical shaft of the generator 110 can be connected with the output shaft of the internal combustion engine 101 and the double clutches 111 and 112 through a reducer with a fixed gear ratio bidirectionally and mechanically. The mechanical shaft of the generator (MG1) 110 is also connected with the input shaft of the automatic transmission 150 through another clutch-by-wire 111 bidirectionally and mechanically. When both clutches 111 and 112 are engaged, the internal combustion engine 101, the motor 110 and the transmission 150 are in a mechanical parallel state, and at this time, the motor 110 can be used as either a generator or a driving motor. When the clutch 112 is disengaged and the clutch 111 is engaged, the motor 110 is mainly used as a driving motor, and at this time, the internal combustion engine is in an idle or shutdown state; when the clutch 112 is engaged and the clutch 111 is disengaged, the motor 110 is mainly used as a generator, which is the load of the internal combustion engine 101 and is not directly involved in mechanical driving of the vehicle. At least one of the dual clutches 111 and 112 must be in an engaged state at any moment, and disengagement of both of the dual clutches 111 and 112 is not allowed.

The output shaft of the automatic transmission 150 is connected with a driving axle 160 of the vehicle bidirectionally and mechanically, and controlled by the transmission control unit (TCU) 151. The main driving motor (MG2) 140 configured in the hybrid position P3 is connected with the output shaft of the transmission 150 bidirectionally and mechanically, and the bidirectional and mechanical connection between the two (150 and 140) is either single-axis Coaxial arrangement or multi-axis parallel arrangement. The multi-axis parallel arrangement is preferred, and at this time, the driving motor 140 is connected with the output shaft of the transmission 150 bidirectionally and mechanically through a reducer with a fixed gear ratio. The optional auxiliary driving motor (MG3) 170 configured in the position P4 is connected with the second driving axle 180 bidirectionally and mechanically. In the system of Figure 2, MG1 is a required standard motor, while either MG2 or MG3 can be a standard motor, and the other is an optional motor. If we focus on reducing the system cost, we can only use two standard motors and remove the optional motor. The embodiment of type II ACE heavy duty truck configured with dual motors can only retain either the generator (MG1) 110 and the driving motor (MG2) 140 in the position P3, or the generator (MG1) 110 and the driving motor (MG3) 170 in the position P4. The main driving motor (MG2) 140 or (MG3) 170 can be operated for converting the electric energy into the mechanical energy for driving the ACE heavy duty truck, or converting the mechanical energy of the ACE heavy duty truck into the electric energy (regenerative braking) to charge the battery pack 130a through the function modules, i.e. the inverter 122a and the chopper 132a, in the ePSD 123.

The I-type mixed hybrid system shown in Figure 1 is more suitable for vehicles mainly operating in the series architecture, while the I-type I mixed hybrid system shown in Figure 2 is more suitable for vehicles mainly operating in the parallel architecture. The main difference between II-type I-type and II-type I-type I mixed hybrid systems is that the three motors MG1 110, MG2 140 and MG3 170 with rated power of 100 kW level have different configured mechanical positions in a mechanical connection mode different from those of the internal combustion engine 101, transmission 150, and driving axles 160 and 180. In other words, the above two types of mixed hybrid systems have different mechanical power circuits. Also, the above two types of mixed hybrid systems have the same electric power circuit, and the motors MG1, MG2 and MG3 have the same bidirectional and electrical connection as that of the ports I and II of the electrical power split device (ePSD) 123.

The vehicle control unit (VCU) 201 as one of the key components of the disclosure is used for controlling one or more of the above internal combustion engine 101, generator 110, ePSD 123, clutch 111 or 112, driving motors 140 and 170, automatic transmission 150 and battery packs 130a and 130b separately or simultaneously in an "independent" manner through for example the vehicle-mounted data bus (not shown, such as CAN bus) based on analysis and calculation of the locating data (longitude, latitude and longitudinal slope) received from the onboard Global Navigation Satellite System (GNSS) 220 and the 3D map stored data within the electronic horizon stored in the map unit (MU) 240.

In some embodiments, the VCU 201 can be an automotive high-performance embedded single-core or multi-core microprocessor. It should be known that, non-restrictively, the VCU 201 can be also an isomeric microelectronics hardware logic unit, comprising a field-programmable gate array (FPGA), an application-specific integrated circuit (ASIC), a application-specific standard product (ASSP), a system on chip (SOC), a complex programmable logic device (CPLD), etc.

For example, the internal combustion engine 101 and the generator 110 can be commanded by the VCU 201 for converting the chemical energy of the vehicle fuel into the mechanical energy and then into electric energy. Such electric energy is expensive and helpless for fuel saving of vehicles due to multiple energy conversions. For another example, the clutch 111 or 112 and ePSD 123 can also be especially controlled through the VCU 201 to achieve quick and smooth switching (subsequently described in detail) among different working modes of the hybrid power assembly under two different hybrid system architectures, meet the vehicle longitudinal dynamic equation (1-1) and achieve the beneficial effects of fuel saving, environmental protection and improvement of active safety of the vehicle.

Preferably, the internal combustion engine 101 is a diesel or natural gas internal combustion engine for six-cylinder heavy duty trucks, with the displacement of 8L-11L and the peak power between 280-380 kilowatts. The internal combustion engine with larger displacement (13L-15L) can also be used, the peak power of the engine is higher than 400 kW, a higher power margin is reserved, the climbing power performance of the vehicle is better when the vehicle encounters an uphill road condition on a highway (climbing a hill tens of kilometers in a row, with the longitudinal slope of greater than 2.0 degrees), but the fuel saving effect will be slightly weaker than that of the internal combustion engine with preferred displacement, the system cost is higher, and the cost effectiveness is suboptimal. The internal combustion engine with small displacement (lower than 7L) generally has a peak power of less than 300 kW; though the fuel-saving effect is obvious and the cost is low, the power margin of the internal combustion engine is insufficient; if the power in the battery pack is exhausted and it is impossible to continue to provide top-up electricity power for the driving motor when the vehicle encounters a large upslope condition on a highway, the power performance of the ACE heavy duty truck will be obviously insufficient, and the vehicle cannot continue to go up a slope until it is shifted into a lower gear and slowed down. It should be known that, optionally, the internal combustion engine 101 can also be a vehicle gas turbine meeting the above power requirements. The gasoline engine is obviously inferior to the diesel engine in terms of both thermal efficiency of combustion and service life (kilometers for B10 life), so it is not suitable for heavy duty trucks for long haul logistics.

It is noted that, as shown in Figure 1, in the embodiments of the invention, the system is of a series hybrid architecture when the clutch 111 is disengaged, no mechanical connection between the internal combustion engine 101 and the driving shaft 160 of the vehicle is provided at this time, and accordingly the operating conditions of the internal combustion engine and the vehicle running conditions are decoupled completely, so that the internal combustion engine 101 is enabled to stably work at several operating points (specified speed/torque) specified in the high efficiency range (including the optimal fuel efficiency range and/or the optimal emission range) of the universal characteristic curve for a long time. When clutches 111 and 112 are engaged and locked, the ACE heavy duty truck powertrain is switched to the parallel hybrid architecture. At this time, the internal combustion engine 101 is connected with the first driving axle 160 of the vehicle through the transmission 150 bidirectionally and mechanically, the speed of the internal combustion engine 101 is determined by the vehicle speed and the gear of the transmission 150, and the output torque of the internal combustion engine 101 can still be set independently and is not subject to the driving conditions of the vehicle. The internal combustion engine can work at several preset high efficiency operating points stably under high-speed conditions. The sum of the power ratings of the generator 110 and the driving motor 140 is greater than the peak power of the internal combustion engine 101, and the driving power of the dual motors (110 and 140) can be adjusted absolutely and dynamically for peak load shifting to dynamically meet the vehicle dynamic equation (1-1). The parallel hybrid architecture is preferred for the control strategy of clutches 111 and 112 under high speed conditions (average speed is above 50 km/h; active acceleration or braking is infrequent); the series hybrid architecture is preferred under urban conditions (the average speed is below 40 km/h; active acceleration or braking is frequent).

The difficulty in the electronic control of the traditional internal combustion engine of the heavy duty truck is simultaneous optimization of multiple contradictory targets such as power, fuel saving, emission behavior and cost under surface working conditions (all speed and torque ranges) to meet the increasingly stringent emission regulations (pollutant and carbon emissions) of all countries in the world. If the operating range of the internal combustion engine can be changed from the surface condition to the point condition, it will open up a new field for it to break through the current upper limit of thermal efficiency of the internal combustion engine and optimize the fuel consumption and emissions to the maximum extent through technological innovation, and it is also possible to effectively meet the severe challenges of surging complexity and costs of design, calibration and manufacturing of the internal combustion engine body, ECU and tail gas processing system of the heavy duty truck in order to meet the stricter mandatory regulations on new vehicle emissions (pollutant and carbon emissions) continuously introduced by all countries in the world in the next 20 years.

Compared with an spark-ignition gasoline engine (SI), a compression ignition diesel engine (CI), with the advantages of fuel saving, low speed, large torque, practicality, durability, ultra-long life, high performance cost and the like, becomes the preferred internal combustion engine for most heavy duty trucks (exceeding 95%) in the world. However, in the aspect of pollutant emissions, especially pollutant emissions of nitrogen oxides (NOx) and particulate matter (PM) harmful to atmospheric environment and human health, the diesel engine is inferior to the gasoline engine. The world's mainstream post-processing technologies for reducing NOx and PM emissions from the diesel engines of heavy duty trucks include selective catalytic reduction (SCR) and diesel particulate filter (DPF), and the emission reduction system can work normally and efficiently provided that both the SCR and the DPF reach the specified high temperature inside such as hundreds of degrees Celsius. Both the pollutant emissions and specific fuel consumption (g/KWH) of the diesel engine are greatly increased during cold start and instantaneous substantial regulation of output power; while the internal combustion engine can work stably in the high efficiency combustion working area under the working condition of highways, and both the pollutant emissions and the specific fuel consumption of the diesel engine are small at the moment. For the traditional heavy duty truck, it is difficult to optimize both the fuel consumption and the pollutant emission within the whole range of speed/torque of the universal characteristic curve of the internal combustion engine. The ACE heavy duty truck of the invention can specify that the internal combustion engine of the ACE heavy duty truck stably works at several high efficiency combustion points for a long time, so that the transient conditions of internal combustion engine cold start and rapid change in the speed and torque are basically eliminated, and the emissions of pollutants (NOx, PM) can be reduced effectively while the specific fuel consumption and carbon emissions are reduced to realize the synergistic effect of energy conservation and emission reduction. The SCR system can reduce the consumption of the consumable, i.e. AdBlue (g/100km), due to less NOx in the tail gas of the ACE heavy duty truck, thus further reducing the operating costs. The DPF of the hybrid heavy duty truck also works stably in its high efficiency range for a long time, DPF Active Regeneration performed through periodic parking for 30~45 minutes and the idling of the diesel engine with more injected diesel is basically eliminated to eliminate the user shortcoming of deposition of a large number of particles inside the DPF with excessive time and fuel consumption, and further reduce the fleet operating cost.

For most domestic internal combustion engines and key power assembly component suppliers with insufficient technological accumulation, the Limits and Measurement Methods for Emissions from Light-duty Vehicles (China VI) coming into force in China in 2021 for heavy duty diesel trucks are huge technical and business challenges. On the premise of ensuring that the complete vehicle reaches and continuously meets the requirements of China VI, especially the warranty period of the 700,000 km for the discharge system when leaving the factory, the technical performance requirements of the diesel engine used by the ACE heavy duty truck of the invention are much lower or relaxed than the technical requirements of traditional heavy duty diesel trucks after dimensional reduction from surface condition to point condition. There are many feasible high cost effectiveness technologies, which provides another new field for survival and development of broad heavy duty truck powertrain and key component suppliers in China in the later period of China VI.

The power of the motor is directly proportional to the product of its speed and torque, and the volume, weight and cost of the motor have positive association with its maximum torque. Hybrid or electric passenger vehicles (with a gross weight of less than 3.5 tons) mostly use motors with a high speed (with peak value of greater than 12,000 rpm) and a low torque (with peak value of less than 350 Nm); hybrid heavy duty trucks usually use motors with a low speed (with peak value of less than 6,000 rpm) and a high torque (with peak value of greater than 2,000 Nm). Both the output power of the motor I with the speed of 1,200 rpm and peak torque of 2000 Nm and that of the motor II with the speed of 12,000 rpm and peak torque of 200 Nm are 251 kW. However, the volume, weight and cost of the motor I are significantly higher than those of the motor II. Compared with the applications of passenger vehicles, the heavy duty truck has less restrictions on the volumes and weights of its motor and other subsystems, but both are very sensitive to cost. The annual production and sales of passenger vehicles are dozens of times higher than those of heavy duty trucks. Currently, all power ratings of high-speed and low-torque motors used in new energy passenger vehicles are basically less than 200 kW, and the cost is decreased year by year. The low-speed and low-torque large motors with the power rating up to more than 250 kW used in hybrid commercial vehicles (with a gross weight of more than 15t) will still be expensive in the next decade. If the hybrid heavy duty truck keeps close to the requirements of new energy passenger vehicles in terms of model selection of three major electronic systems (motor, battery and electric control), it will be in favor of cost reduction and quality and supply guarantee of the three electronic systems of the hybrid heavy duty truck year by year.

Preferably, for the embodiment in Figure 1 (Type II and Type I), the standard alternator (MG1) 110 is a permanent magnet synchronous motor (PMSM), and the rated power is 150-250 kilowatts; and the AC induction motor or reluctance motor meeting the above rated power requirements can also be selected. A permanent magnet synchronous motor (PMSM), AC asynchronous motor or switched reluctance motor with rated power of 200 kW to 350 kW is optional for the standard main driving motor (MG2) 140. A permanent magnet synchronous motor (PMSM), AC asynchronous motor or switched reluctance motor with rated power of 150 kW to 250 kW is optional for the optional auxiliary driving motor (MG3) 170. For the embodiment in Figure 2 (II-type I-type I), the standard alternator (MG1) 110 is preferably a permanent magnet synchronous motor (PMSM), and the rated power is 200-350 kilowatts; and the AC induction motor or switched reluctance motor meeting the above rated power requirements can also be selected. A permanent magnet synchronous motor (PMSM), AC asynchronous motor or switched reluctance motor with rated power of 150 kW to 250 kW is preferred for the driving motors (MG2) 140 and (MG3)170. The ACE heavy duty truck can still work normally when the power ratings of the three motors (110, 140 and 170) exceed the above preferred parameter range respectively in various embodiments in Figure 1 and Figure 2. The motor cost is reduced when the rated power is lower than the lower limit, but the power and fuel saving ratio of the vehicle are also significantly degraded; the power and fuel saving ratio of the vehicle are improved when the rated power is higher than the upper limit, but the motor cost is significantly increased.

The electrical power split device (ePSD) 123 shown in Figure 3 is a 100-kilowatt high-power power electronics network with three ports, wherein the power electronics network comprises at least one IGBT or SiC power module, but can exclude any power source or electric energy storage device. Various power electronics circuit topology designs are available to achieve the input/output characteristic and various system functions of the three-port network. It should be noted that the invention is not aimed at limiting the implementation of specific circuit topology of the three-port network comprising the IGBT or SiC module, but all power electronic circuit topology designs capable of realizing the core input/output functions of the ePSD in the invention should be within the range of the invention. In view of the integrated design flexibility of the power electronics modules, the inverters 121, 122a and 122b and the choppers 132a and 132b inside the ePSD123 are either integrated in one metal box, or dispersed in multiple metal boxes, and packaged and arranged in a decentralized way in order to improve the system performance and/or reduce the cost. At present, IGBT is the most cost-effective mainstream power electronic power module. The SiC module is a rising star with better performance but higher cost in the near future. Its commercial proportion will gradually increase. The IGBT modules mentioned in the invention can generally refer to various industrialized power electronic power modules, including IGBT and SiC.

In the embodiment shown in Figure 3, the AC port of the inverter 121 connected in the port I of the ePSD is connected with the three-phase AC output end of the generator (MG1) 110 bidirectionally and electrically; the AC port of the inverter 122a connected in the port II is connected with the main driving motor (MG2) 140 bidirectionally and electrically, and the AC port of the inverter 122b is connected with the auxiliary driving motor (MG3) 170 bidirectionally and electrically; one end (the end with lower DC voltage) of the chopper 132a connected in the port III is DC-connected with the battery pack 130a bidirectionally and electrically, and one end (the end with lower DC voltage) of the chopper 132b is DC-connected with the battery pack 130b bidirectionally and electrically. The DC ends of all the inverters are DC-connected to the DC bus junction X of the ePSD bidirectionally, and the other ends (generally the ends with higher DC voltage) of all the choppers are also DC-connected to the DC bus junction X of the ePSD bidirectionally and electrically. One end of the 100 kW level electronic switch 133 is connected with the junction X electrically, and the other end is connected with the 100 kW level brake resistor with radiator electrically.

When the rated voltage $V_{bp}$ of the battery packs 130a and 130b is equal to the rated voltage Vbuso of the DC bus of the ePSD, it is considered that the choppers 132a and 132b are omitted in order to simplify the system and reduce the cost, and the battery packs are directly connected to the junction X bidirectionally and electrically. However, the rated voltage of the battery packs must be equal to the rated voltage of the DC bus, and the function of actively adjusting the 100 kW level charge-discharge power will be lost; moreover, ePSD 123 also loses the capability of flexibly matching various types of battery packs with different rated voltages through software definition (on-site or OTA remote iteration). It is a suboptimal option.

The DC bus junction X in the ePSD of the invention is the power nerve center of the ACE heavy duty truck powertrain. One time-varying function of DC voltage at this junction and a set of three DC current time-varying functions mathematically describe the dynamic working state of the electric power circuit of the ACE heavy duty truck completely and accurately, which is the key point of energy saving, emission reduction and safety control of ACE heavy duty truck operation. The junction X is a point on circuit topology, but it may be a metal busbar or a section of multi-joint high-power cable in physical implementation.

The ePSD 123 can be subjected to pulse-width modulation (PWM) through several major function modules (inverter 121, inverter 122a and 122b, choppers 132a and 132b) contained within it, and the accurate, continuous and adjustable distribution of electric power at the level of hundreds of kilowatts is achieved among the three ports within the response time at the level of tens of milliseconds to dynamically match the time-varying function of Road Load Power Pv transiently changing in the vehicle running process and satisfy the vehicle dynamics equation (1-1) in real time. Thus, the clutch 111 or 112 and ePSD 123 are controlled by the VCU 201, enabling quick and smooth switching among different working modes of the under the two different system architectures: series hybrid and parallel hybrid architectures of the vehicle separately; and the fuel consumption and emissions of the internal combustion engine are optimized (i.e. minimized) on the premise of meeting the vehicle driving power performance, safety and freight timeliness.

Optionally or additionally, the ePSD can be further provided with a plurality of sensors and memories so as to measure and record the dynamic voltage $V_{bus}(t)$ and currents $I_g(t)$, $I_m(t)$ and $I_b(t)$ at the DC bus junction X for example at the measuring frequency higher than 10 Hz, and the data of the sensors and the memories is regarded as a part of the dedicated structured big data, and uploaded to the cloud computing platform 001 for storage through the vehicle-mounted wireless communication gateway 210 in time for subsequent analysis and processing. The following is the description of the implementation mode of the dedicated structured big data.

It is known that the electric power equilibrium equation at the DC bus junction X in the ePSD 123 is: $P_g+P_b+P_m=0$ (4-1). Where $P_g \in [-P_{igx}, Pigx]$, $P_b \in [-P_{bx}, P_{bx}]$, $P_m \in [-P_{imx}, P_{imx}]$. $P_{igx}$ is the peak power of the inverter 121, $P_{bx}$ is the aggregated peak charge-discharge power of the main battery pack 130a and the auxiliary battery pack 130b, $P_{imx}$ is the aggregated peak power of inverters 122a and 122b, $P_{bx}>P_{imx}$. $P_g$ is the electric power of the generator (MG1) 110, $P_{gx}$ is its peak power ($P_{igx} > P_{gx}$), the positive value is the driving power (electric energy into mechanical energy), and the negative value is the generated power (mechanical energy into electric energy). $P_b$ is the battery power, the positive value is charging power (electric energy into chemical energy), and the negative value is discharge power (chemical energy into electric energy). $P_m$ is the electric power of the driving motor (MG2) 140, $P_{mx}$ is its peak power ($P_{imx} > P_{mx}$), the positive value is the driving power (electric energy into mechanical energy), and the negative value is the regenerative braking power (mechanical energy into electric energy, recovered energy). In the present disclosure, the peak power is the maximum continuous power for the internal combustion engine unless specially noted; the peak power refers to the maximum pulse power in 15 seconds for the motor, inverter, chopper or battery pack.

The embodiment of the invention is described by focusing on the scenario in which there are only the standard main driving motor (MG2) 140 and main battery pack 130a. If the ACE heavy duty truck system also comprises the optional auxiliary driving motor (MG3) 170 and/or the auxiliary battery pack 130b, it is easy for ordinary technicians in the industry to extend the description. It is preferred to engage the clutches 111 and 112 to realize the parallel hybrid architecture for the ACE heavy duty truck under high speed conditions (the average speed is above 50 km/h, with few active acceleration or braking); it is preferred to disengage the clutch 111 to realize the series architecture under urban/suburban conditions and on congested highways (the average speed is below 35 km/h, with frequent active acceleration or braking). For vehicle driving safety and power considerations, the parallel hybrid architecture is preferred regardless of average speed when the ACE heavy duty truck is going uphill or downhill (the longitudinal slope is greater than 2.0 degrees, the continuous uphill or downhill journey is more than 15 km). In the application scenario of long haul logistics, nearly 95% of mileages are high speed conditions, and the clutch 111 of the ACE heavy duty truck for long haul logistics does not need to be switched frequently (several times a day). Thanks to the dual motors (MG1 and MG2), the torque of the vehicle powertrain will not be interrupted in the transient state of switching between engaged and disengaged states of the clutch 111. Various working modes are also available for the ACE heavy duty truck under the series hybrid architecture (A) or parallel hybrid architecture (B). The two architectures are briefly described below.

The vehicle is electrically driven under the series hybrid architecture (A), and at this time $P_m=P_v$.

Working mode A-1: The vehicle is static, $P_m=P_v=0$, $P_g+P_b=0$, the internal combustion engine 101 drives the generator 110 to charge the battery packs 130a and 130b through the ePSD 123.

Working mode, A-2: The vehicle is running on a flat road, $P_g+P_b+ P_m=0$. When $|P_g|> P_m>0$, the generator 110 first supplies power to the driving motor 140 to provide the power required by the vehicle, and charges the battery packs 130a and 130b with the remaining electric power. When $|P_g|< P_m$, the driving motor 140 is powered through the generator 110 and the battery pack 130a simultaneously, and then the power requirements of the vehicle can be met. If the fuel saving needs to be maximized, the internal combustion engine 101 should work at several specified high efficiency condition points (specific torque/speed) stably for a long time, or the internal combustion engine should be idle, even shut down completely. By dynamically adjusting the 100 kW level electric power through the ePSD 123, $P_b$ can follow the real-time inverse change of $P_m$, and maintain $P_g$ as a constant ($Pg(t) = -P_m(t)-P_b(t)$) on the premise of meeting the vehicle power requirements at all times. In other words, the CVU 201 can be used for stably setting the working point of the internal combustion engine 101 to be at the high efficiency point where the specific fuel consumption (g/KWH) is minimum for a long time, and commanding the electrical power split device (ePSD) 123 to precisely regulate the direction and value of charge and discharge power of the battery packs 130a and 130b in real time for peak load shifting, so as to offset the transient change of the power of the driving motors 140 and 170 and achieve the objective of fuel saving. If the vehicle is going uphill or climbing a large upslope (with the longitudinal slope of more than +2.0 degrees and the slope length of more than 10 km), since the total capacity of the battery packs 130a and 130b is limited, the battery packs may be run off in the Charge Depleting working mode and temporarily lose the ability to continue to provide upgrade power assistance; at the moment, the vehicle can only be directly driven by the generator $P_{gx}$ under the series hybrid architecture, the power is insufficient, the vehicle fails to constantly reach the road load power $P_v$ for running uphill at constant speed, and the vehicle cannot continue to go up a slope until it is shifted into a lower gear and slowed down. At the moment, the power and freight timeliness of the ACE heavy duty truck are reduced momentarily. The ACE heavy duty truck for long haul logistics will not encounter large and long slopes on most highways. For ACE heavy duty trucks which often run on highways in mountainous areas, installation of one or more power type auxiliary battery packs with a capacity of more than 10 KWh may be considered to improve the power performance of the vehicles which often work in the scenario of going up a long slope at high speed under heavy loads.

Working mode A-3: When the vehicle runs on a downhill, the internal combustion engine can be shut down, and the electric power output $P_g$ of the internal combustion engine is zero; at the moment, the grade power item $P_{gd}$ is negative, and the grade power part exceeding the power $P_r+P_d$ for driving the vehicle can be absorbed through the regenerative braking function of the driving motors 140 and 170 and used for charging the battery packs 130a and 130b. At the moment, the vehicle runs downhill, and can reach the maximum speed allowed by laws for making up for part of lost time taken by the vehicle speeding down on an upslope. When the vehicle runs on a large downhill, the regenerative braking of the driving motors will fully charge (SoC=100%) all battery packs when the vehicle is on the way down the slope. At the moment, the high-power power electronic switch (SS) 133 in the ePSD three-port Power Electronics Network is on, the choppers 132a and 132b disconnect the battery packs 130a and 130b, switch the charging current generated by regenerative braking of the driving motor 140 to the 100-kilowatt-class brake resistor 131 with radiator, and the electric energy is changed into heat energy and consumed to realize the retarder function of the ACE heavy duty truck (non-mechanical braking). At the moment, the inverter 121 can also drive the motor 110, take the in-cylinder braking function of the internal combustion engine 101 as the effective load of the motor 110, consume the excess regenerative electric energy from the main driving motor 140 to realize the retarder function, and provide redundant load for the high-power brake resistor 131.

Both the I-type system in Figure 1 and the II-type system in Figure 2 can realize the parallel hybrid architecture by engaging the clutches 111 and 112. Under the parallel hybrid architecture, the mechanical driving power of the internal combustion engine 101 and the electric driving power of the dual motors 110 and 140 can be directly superimposed, and at this time, the total driving continuous power of the ACE heavy duty truck powertrain is much higher than 500 kW, and its power performance (overtaking capability on flat roads or full-load high-speed climbing capability) is significantly better than that of the traditional 15L diesel heavy duty truck with large displacement and top level configuration. The total capacity of the battery packs 130a and 130b carried on the ACE heavy duty truck generally ranges from 20 kWh to 60 kWh, which can support the high power electric driving of the vehicle for 15~40 km. Ordinary technicians in the industry are familiar with various typical working modes of parallel hybrid vehicles, which will not be repeated one by one. During long-distance driving for several hundred kilometers on smooth highways, the speed of the internal combustion engine 101 for the ACE heavy duty truck under the parallel hybrid architecture depends on the running speed of the vehicle and the gear of the transmission 150, and fuel saving is achieved by controlling the start-stop of the internal combustion engine 101 at high speed.

The electric energy recovered by regenerative braking of the battery packs 130a and 130b is "quasi zero cost electric energy", while the electric energy provided by power generation of the internal combustion engine is "high cost electric energy". The essential of fuel saving control for the ACE heavy duty truck is to continuously improve the charge turnover rate of battery packs 130a and 130b in the vehicle running process, especially to continuously improve the charge turnover rate of regenerative braking while minimizing the charge turnover rate of the internal combustion engine. The ACE heavy duty truck can dynamically adjust the injection quantity of the internal combustion engine 101 (injection or no injection) according to the road 3D information (longitude, latitude and longitudinal slope) within the electronic horizon of 100 kilometers ahead, the predictive adaptive cruise mode (fuel-saving mode Eco, normal mode N, high-performance mode P) selected by the driver, road conditions and vehicle conditions, make it possible to charge and discharge the battery packs 130a and 130b whenever we like, provide the driving power required for vehicle running, reduce the turnover rate of high-cost "internal combustion engine charge" through the high-speed start-stop of the internal combustion engine 101, and improve the turnover rate of low-cost "regenerative braking charge" for further fuel saving. The so-called high speed start-stop of the internal combustion engine 101 means that the internal combustion engine 101 is operating at a speed range of 800 RPM to 2000 RPM; by intermittently cutting off its fuel injection, and dynamically adjusting the time delay or angle of the in-cylinder inlet valve and outlet valve, the internal combustion engine can smoothly switch between the two different working conditions of reactive low load (no fuel injection, no output mechanical power and low tractor rotation load) and active high load (normal fuel injection, with output mechanical power and high driving rotation load) at minute intervals. In this way, the traditional auxiliary subsystems of various vehicles attached to the internal combustion engine 101 can continuously obtain mechanical power through the continuous rotation of the flywheel of the internal combustion engine 101 and maintain normal operation.

The technical requirements for battery cell and battery pack of ACE heavy duty trucks are obviously different from those of hybrid passenger vehicles. The ACE heavy duty truck needs to be provided with the power type battery pack with super long service life, low temperature resistance, high safety and high cost effectiveness, and the battery cell must withstand 5C-10C rate of continuous charge-discharge and 15C-30C rate of peak charge-discharge (15s pulse); moreover, the charge rate is often higher than the discharge rate, the working environment temperature outside the vehicle is -30°C ~ +55°C, and the equivalent deep charge-discharge (DoD 100%) cycle life is more than 12,000 times. The battery pack shall be able to work normally after the vehicle is turned off for 24 hours outdoors at -30°C in cold winter and the internal combustion engine 101 is cold-started, within three minutes of warm-up at idle speed in place, and after the vehicle is started to run. At the moment, the charge and discharge ability of the battery pack can be temporarily reduced. When the internal temperature of the battery cell rises to 10°C, the full charge and discharge ability is restored. However, the battery cell cannot be damaged due to low temperature and high rate charging, or even lead to the major hidden danger of thermal runaway of the battery cell.

Mainstream lithium-ion power cells, such as lithium iron phosphate (LFP) and ternary lithium (NCM or NCA), are generally protected against cold. When the cell temperature is lower than 0°C, the high rate discharge ability above 2C of the cell decreases obviously. The low-temperature discharge does not damage the cell; at the moment, however, charging at low temperature with the high rate of above 2C easily causes Lithium Plating on the negative electrode of the cell and serious damage to the cell life The damage mechanism is that the metallic lithium dendrites of the negative electrode puncture the diaphragm, which results in a short circuit in the cell and leads to the hidden danger of thermal runaway. The battery management system (BMS) will monitor the temperature of the battery cell in real time. It is forbidden to charge the battery cell at high rate at low temperature. It is impossible for the LFP, NCM or NCA mainstream power cell to undertake the important mission of the ACE heavy duty truck battery pack alone.

The lithium titanate oxide (LTO; positive ternary lithium/negative lithium titanate oxide) cell is currently the only mass-production power cell that can fully meet all technical requirements of the ACE heavy duty truck. After comparing the several mainstream lithium-ion cells mentioned above, LTO has the disadvantages of low specific energy (65wh/KG) and high cost ($/KWh three times more than LFP). There is no need to worry about the disadvantage of low specific energy of LTO and large volume because the ACE heavy duty truck has no arrangement limitation on the volume and weight of the battery pack only with a total capacity of dozens of KWH; however, the disadvantage of high cost may seriously affect the mass commercial use of ACE heavy duty trucks. By mixing and matching LTO main battery pack (10°-20°) and the low-cost LFP or NCM auxiliary battery pack (20°-50°), the cost effectiveness of ACE heavy duty truck system can be optimized according to the specific application scenarios of the ACE heavy duty truck. The LTO main battery pack 130a is involved in work immediately after cold start of the vehicle parked outdoors for a long time in winter; the auxiliary battery pack 130b of LFP or ternary lithium is not involved in work temporarily. After the internal cell of the auxiliary battery pack 130b is heated to above 10°C in more than ten minutes, the auxiliary battery pack 130b is involved in work. The battery packs 130a and 130b are the most expensive subsystems in the ACE heavy duty truck. Mixing and matching two or more battery packs with different electrochemical cells is good for improving the overall performance of battery packs, reducing the total cost of battery packs and crucial to optimize the comprehensive cost effectiveness of the ACE heavy duty truck.

The single cell voltage of the LTO is only 2.2V, which is lower than the single cell voltage 3.3V of the LFP and the single cell voltage 3.7V of the NCM. Compared with a battery pack of a structure with low rated voltage and more cells connected in parallel and less cells connected in series, battery pack of a structure with high rated voltage, more cells connected in parallel and less cells connected in series and the same capacity is complex in design, high in material and manufacturing cost, and poor in system redundancy and robustness. Mixing and matching two or more battery packs with at least two different electrochemical cells connected in parallel is good for improving the cost effectiveness of the ACE heavy duty truck system. The rated voltages of the power battery packs used in most new energy passenger vehicles range from 200V to 400V. The peak power of the ePSD of the invention is up to 500 kW, and the preferred range of rated voltage of the DC bus is 600V~800V. The preferred rated voltage value of the battery pack used in the invention is between 350V and 500V, as far as possible to coincide with the rated voltage range of the battery packs used in popular new energy passenger vehicles with the huge annual total production and sales to facilitate making full use of the mature power battery supply chain of the new energy passenger vehicles nowadays, reducing the cost and guaranteeing the supply. These battery packs can match the ePSD 123 DC bus through the 100-kilowatt-class bidirectional Boost-Buck DC-DC converter (Boost-Buck, also called the chopper) 132a and 132b in the port III of the ePSD. In addition to DC voltage transformation, the chopper has another function of regulating the charge-discharge current amplitude of the battery pack 130a and 130b actively, continuously and accurately through pulse width modulation (PWM) within 0%~100% of the charge-discharge current peak value.

Preferably, the main battery pack 130a can adopt lithium titanate oxide (LTO) cells with the capacity of 10KWh~30KWh, and can be charged and discharged for 5C~10C continuously; the peak charge-discharge current is 15C~30C in 15 seconds, and the equivalent deep charge-discharge (100% DoD) life exceeds 12, 000 times; and the outdoor working environment temperature is -30~+55°C. Among known commercialized automotive power cells of various electrochemical formulations, only a set of lithium titanate oxide (LTO) cells can meet the above strict requirements, especially the requirements of ultra-long cycle life. The disadvantage of low specific energy (Wh/KG) of LTO cells has little effect on the application of ACE heavy duty trucks, but the cost (yuan/Wh) of the cells per kilowatt-hour (KWh or degree) is above three times the cost of other mainstream automotive lithium ion cells (such as LFP, NCM, NCA), which will lead to high cost of LTO battery packs and seriously limit the wide application of ACE heavy duty truck. The following power cells, such as NiMH battery, LFP battery, NCM/NCA battery or PbC battery, suitable for HRPSoC applications in severe working environment can be further selected. Two sets of such four kinds of cells may be required for meeting the requirements of the 100% DoD ultra-long cycle life exceeding 12 thousand times. The hybrid collocation of the above several kinds of cells can be taken into consideration, and the gross capacity of the battery pack is increased to 50KWh~95KWh so as to achieve the optimal cost effectiveness of the battery pack within the whole life cycle of ACE heavy duty trucks.

Preferably, the auxiliary battery pack 130b can adopt mainstream lithium ion power type cells (continuous charge-discharge 3C+) with the capacity of 20KWh~60KWh, such as lithium iron phosphate (LFP) or ternary lithium (NCM or NCA). Of course, an auxiliary battery pack with a capacity of larger than 100KWh can be also selected, which is in favor of improving the power performance of the complete vehicle and reducing the upper limit value and the charge-discharge rate peak of the equivalent cycle life of the battery pack, but the weight, volume and cost of the large battery pack are all increased. Comprehensive consideration is required. In the invention, the function of the battery pack is like a high-power internal combustion engine with a small fuel tank, and the explosive power is high, but the endurance is insufficient. The battery pack can be used for providing the 100-kilowatt level rated power of the driving motor for a long time (within 5~20 minutes) continuously, or providing the peak power of the driving motor above 300kW for a short time (within 60 seconds). Provided that the capacity of the battery pack is 30 KWh, and the rated power of the driving motor is 300 KW; the battery pack (the capacity is 30 KWh) in the 100% state of charge (100% SoC) can be used for power supply (10C discharge) to the driving motor for 6 minutes at the 300-KW strength continuously so that the full load hybrid heavy duty truck (40 tons) runs for approximately 10km at the China's statutory speed limit of 90 km/h on a smooth clear highway.

There are two types of electric energy stored in battery packs 130a and 130b, one is the "internal combustion engine charge" generated by the alternator 110 driven by the internal combustion engine 101, which is "high cost electric energy"; the other is the "regenerative braking charge" generated by the regenerative braking and energy recovery of the driving motor 140 and 170, which can be regarded as "quasi-zero electric energy". If the rate of fuel saving needs to be improved, the electric energy (charge) in the battery pack should be discharged and charged whenever we like to improve the cumulative throughput capacity or turnover rate of electric energy or charge of the battery pack. It is better to reduce the cumulative internal combustion engine charge throughput of the battery pack and make full use of the longitudinal slope power of 100kW-class brought by the longitudinal slope change along the road to continuously improve the cumulative regenerative braking charge throughput of the battery pack and minimize the cumulative internal combustion engine throughput to achieve the best fuel saving effect. When the battery pack 130a and 130b are discharged, power is supplied for ACE heavy duty trucks running through the driving motors 140 and 170, and when charging, the energy is recovered through the regenerative braking of the driving motors 140 and 170. Under the parallel structure (clutch 111 and 112 are connected and locked), generator 110 can also contribute to regenerative braking to recover energy, which can further increase the regenerative braking charge throughput and improve the fuel saving effect. However, when the state of charge (SoC) of the battery pack is lower than 20% and the vehicle still needs to continuously speed up to overtake or run on a large slope, the road load power $P_v$ of the ACE heavy duty truck is greater than the rated power of the generator set; and at the moment, the battery pack must be continuously discharged to make up for the power difference ($P_b=P_v-|P_g|$). If the battery pack 130a and 130b are under a charge depleting condition (SoC=0%), the power performance of the ACE heavy duty truck is completely dependent on the peak power of the internal combustion engine 101 (operating in parallel and mixed structure); if the peak power of the internal combustion engine is not large enough, it has to shift to a lower gear to speed down, temporarily reducing the power performance and freight timeliness of the vehicle. The alternator 110 and/or the driving motors 140 and 170 can take a chance for charging the battery packs 130a and 130b again until there is a level road or downslope.

In the next 20 years, the annual cost effectiveness improvement rate of power electronic power module based on silicon IGBT or silicon carbide (SiC) MOSFET will be significantly higher than that of motors or battery packs. Continuously refer to Figure 3, priority should be given during the design of several 100kW-class power electronic power modules of the ePSD (the port I is internally connected with the inverter 121 of the standard generator 110, the port II is internally connected with the standard main inverter 122a and the optional auxiliary inverter 122b, the port III is internally connected with the soft switch 133, the standard main chopper 132a and the optional auxiliary chopper 132b) to leave adequate room in the function and performance of power electronic hardware (Over-design). The peak power $P_{igx}$ of the inverter 121 should be nearly 25% higher than the peak power $P_{gx}$ of the generator 110, the peak power $P_{imx}$ of the main inverter 122a should be nearly 15% higher than the peak power $P_{pmx}$ of the main driving motor 140, and the peak power of the auxiliary inverter 122b should be nearly 25% higher than the peak power $P_{smx}$ of the auxiliary driving motor 170, $P_{pmx} > P_{smx}$. The sum of the peak power of main chopper 132a and the auxiliary chopper 132b should be nearly 20% higher than the peak power $P_{pmx}$ of the main driving motor 140.

Power semiconductor modules such as IGBT or SiC can improve the cost effectiveness more quickly than the battery pack, motor and brake resistor. The continuous innovation and upgrading of the high-power semiconductor industry can be fully utilized to achieve a cost-effective ePSD 123 by using a variety of power electronic topologies. The ePSD 123 with hardware design margin is a software defined electrical power split device from the beginning, and the ePSD can be continuously improved and evolved through remote software update iteration (OTA). With the above modular design strategy, the three ports of the ePSD and external electrical loads such as motors and battery packs adopt standard mechanical and electrical interfaces, which are convenient and flexible for adapting to various motors and battery packs provided by many high-quality suppliers that meet the performance requirements, the target cost and can guarantee the quality and supply; and the cost effectiveness of ACE heavy duty trucks can be continuously improved.

The inverter is the critical part of the MCU. In this disclosure, inverter and motor control unit are used as synonyms so that there is no ambiguity for those skilled in the art. The inverters (121, 122a, 122b) control the speed and torque of the motors (110, 140, 170) in a Vector Control mode accurately, so that the amplitude and flow direction of 100kW electric power can be regulated continuously in real time (millisecond-level). The chopper (132a, 132b) is a bidirectional buck boost DC-DC converter (Boost-Buck), one side is bidirectionally and electrically connected with the DC bus of ePSD 123, preferably the rated voltage range is 650V~750V; the other side is bidirectionally and electrically connected with the battery packs 130a and 130b, preferably the rated voltage range is 350V~650V. The choppers 132a and 132b can not only be connected and matched with battery packs 130a and 130b with different rated voltages, but also provide the function of accurate and continuous regulation of the charge/discharge current amplitude of 100-ampere-class current for battery pack 130a and 130b. The VCU 201 of ACE heavy duty truck can enable ePSD 123 to regulate three independent 100kW-class electric power time functions (generator power $P_g(t)$ with independent variables, driving motor power $P_m(t)$ with independent variables, and battery pack charge/discharge power $P_b(t)$ with dependent variables) continuously in real time according to the fuel saving control strategy to meet the electric power balance equation at the ePSD DC bus junction X at any time:

$$P_m(t) + P_g(t) + P_b(t) = 0 \qquad (5\text{-}1).$$

Preferably, the standard main driving motor 140 is a permanent magnet synchronous motor, with a rated power of 200KW~300KW, peak power of 300KW~450KW and peak torque of 2000NM - 2500NM. The driving motor 140 can be also an AC induction motor or a reluctance motor meeting the power and torque requirements. The peak power of the main inverter 122a must be higher than that of the main driving motor. Since the annual sales of the hybrid passenger vehicles is higher two orders of magnitude than the annual sales of the hybrid commercial vehicles, some core components shared with the commercial vehicles are selected as far as possible, the cost of the hybrid commercial vehicles can be reduced effectively and supply in batch can be assured. The rated power of a single motor and inverter for the electric (hybrid) passenger vehicles is generally lower than 150KW. One preferred embodiment is to select a six-phase or nine-phase permanent magnet AC motor and a multi-phase AC inverter matched with the six-phase or nine-phase permanent magnet AC motor. The nine-phase permanent magnet AC motor is actually formed by integrating three smaller three-phase permanent magnet AC motors in the coaxial/same shell mode, and the corresponding nine-phase inverter is formed by integrating three independent smaller inverters in the same shell. Such multi-phase motor + multi-phase controller structure has redundancy, the performance and reliability of the system are improved; and the comprehensive cost of the whole system is reduced. If the power parameters of the motor and the control unit are beyond the above preferred range, the hybrid heavy duty truck can also work. But the economy of the ultra-low configuration is improved but the power performance is reduced, or the power performance of the over-high configuration is improved but the economy is reduced.

For the 6x2 or 6x4 ACE heavy duty truck Type I system in Figure 1, a standard engine motor (MG1) 110 is connected bidirectionally and mechanically to the flywheel end of the internal combustion engine 101 (the so-called hybrid P1 position) and to the end of the clutch 111. The specific mechanical connection structure can be divided into two types: Type I is the single-axis coaxial structure, in which the three (internal combustion engine, generator and clutch) are connected to the same mechanical transmission shaft. At this time, the speed of generator 110 is exactly the same as that of internal combustion engine 101 (speed ratio 1.0); Type II is parallel axis structure (multi-axis), and the three are connected through gears bidirectional and mechanically. At this time, the generator 110 and the internal combustion engine 101 are connected through gears, and the speed ratio is fixed. The speed of high efficiency area of heavy duty truck internal combustion engine is generally: 1000 rpm ~ 1600 rpm. The internal combustion engine has a stable low speed and its specific fuel consumption (diesel g/KWh) is the lowest when working under high load. The power of the engine and motor is proportional to the product of its speed and torque. At the same time, the maximum torque of the engine and generator is positively correlated with its volume, mass and price. The use of Type II multi-parallel shaft structure can increase the speed ratio between generator 110 and internal combustion engine 101 to 2.0 ~ 5.0 through the constant speed ratio reducer, so that it is possible to select a high-power permanent magnet synchronous motor in the new energy passenger vehicle system, which greatly reduces the volume, mass and price of the generator 110. The generator 110 can be preferably a medium-speed (maximum speed 12000 RPM) vehicle gauge level permanent magnet synchronous motor with a rated power of 150KW ~ 250KW and a peak torque of less than 500NM.

The standard main driving motor (MG2) 140 is connected with the other end of clutch 111 bidirectionally and mechanically (the so-called hybrid P2 position), and is connected with the input shaft of the automatic transmission 150 through the flexible coupler 152 bidirectionally and mechanically. The specific mechanical connection structure can be divided into two types: Type I is the single-axis coaxial structure, in which the three (clutch, generator and transmission) are connected to the same mechanical transmission shaft. At this time, the speed of driving motor 140 is exactly the same as the speed of the transmission 150 input shaft (speed ratio 1.0); Type II is parallel axis structure (multi-axis), and the three are connected through gears bidirectional and mechanically. At this time, the speed ratio of the driving motor 140 and the transmission 150 input shaft is fixed. When the clutch 111 is closed, the output shaft of the flywheel end of the internal combustion engine 101 and the input shaft of the transmission 150 are bidirectionally and mechanically connected concentrically and coaxially. The speed of the two is the same, and the speed ratio is 1.0. The maximum input torque of the heavy duty truck transmission input shaft is generally less than 2500NM. The use of Type II parallel shaft structure can increase the speed ratio between driving motor 140 and transmission 150 input shaft to 2.0 ~ 6.0 through the constant speed ratio reducer, so that it is possible to select a high-power permanent magnet synchronous motor in the new energy passenger vehicle system, which greatly reduces the volume and price of the driving motor 140. At the moment, the main driving motor (MG2) 140 can be preferably a permanent magnet synchronous motor with a rated power of 175KW ~ 280KW. Under Type I structure, the driving motor 140 is a permanent magnet synchronous motor or AC asynchronous motor with a low speed (maximum speed below 6000 RPM) and a high torque (peak torque above 2000NM); Under Type II structure, the driving motor 140 is a permanent magnet synchronous motor or AC asynchronous motor with a medium-to-high speed (maximum speed below 12000 RMP) and a medium torque (peak torque below 500NM). The latter is smaller in size and mass and cheaper than the former.

The optional auxiliary driving motor (MG3) 170 can be configured between the output shaft of the transmission 150 and the driving axle 160 (the so-called hybrid P3 position) or in front of the second driving axle 180 (the so-called hybrid P4 position); both are connected bidirectionally and mechanically. The peak torque at the input end of the driving axle of heavy duty truck can be up to more than 20000NM. A speed reducer should be installed between the driving motor (MG3) 170 and the driving axle (160 or 180), and the speed ratio range is 5.0 ~ 15.0. The permanent magnet synchronous motor or AC asynchronous motor with a rated power of 100KW ~ 150KW and peak torque less than 1000NM (Newton meter) are preferred.

In Figure 1, the input end of the transmission 150 is connected with the output end of the main driving motor 140 through the flexible mechanical coupler 152 bidirectionally and mechanically, and the output end of the transmission is connected with a first driving axle 160 bidirectionally and mechanically. Preferably, the heavy-duty 5 to 12-speed automatic transmission (AMT-5 ~ AMT-12) with the input end maximum torque of less than 2500Nm is adopted, or the heavy-duty double-clutch transmission (DCT) or the automatic transmission (AT) with a hydraulic torque converter can also be selected. Different from the dynamic characteristic that the torque is smaller at low speed of the internal combustion engine, the torque of the driving motor is the maximum at low speed, so the forward speed gears 5~8 of the automatic transmission are sufficient, and excessive gears are not required. However, the driving rotation system of the ACE heavy duty truck including the transmission in the invention is not the traditional one-way mechanical power transfer of the traditional internal combustion engine heavy duty truck but two-way mechanical power transfer, so the design and manufacturing of the main bearings and gears in the automatic transmission should be strengthened, and then it can be ensured that the performance and life of the automatic transmission can reach the standard.

The following description is for the 6x2 or 6x4 ACE heavy duty truck Type II system in Figure 2, a standard engine motor (MG1) 110 is mechanically connected bidirectionally to the flywheel end of the internal combustion engine 101 (the so-called hybrid P2 position) and to the end of the clutch 111. A clutch 112 can be optionally installed between the flywheel end of the internal combustion engine 101 and the generator 110 to increase the control degree of freedom of Type II hybrid system. If clutch 112 is not installed, the generator 110 is configured in the so-called hybrid P1 position. The specific mechanical connection structure can be divided into two types: Type I is the single-axis coaxial structure, in which the three (internal combustion engine, generator and clutch) are connected in series on the same mechanical transmission shaft. At this time, the speed of generator 110 is exactly the same as that of internal combustion engine 101 (speed ratio 1.0); Type II is multi-axis structure, and the three are connected through gears bidirectional and mechanically. At this time, the speed ratio between generator 110 and internal combustion engine 101 is fixed, and the preferred speed ratio range is 2.0 ~ 6.0. The generator 110 can be preferably a medium-speed (maximum speed 12000 RPM) vehicle gauge level permanent magnet synchronous motor or AC asynchronous motor with a rated power of 150KW ~ 250KW and a peak torque of less than 500NM.

The standard main driving motor (MG2) 140 in Figure 2 is connected bidirectionally and mechanically to the output shaft of the transmission 150 and the first driving axle 160 respectively (hybrid P3 position). When the heavy duty truck is running, the peak torque of the transmission 150 output shaft can be up to more than 20000NM, while the motor with a peak torque above 2000NM is large and heavy, and expensive. At this time, Type I single-axis coaxial structure is not applicable, and Type II multi-axis structure is preferred. The three (transmission output shaft, main driving motor mechanical shaft, first driving axle input shaft) are connected bidirectional and mechanically through a set of gears. At this time, the speed ratio of the driving motor 140 and the output shaft of the transmission 150 is fixed, and the speed ratio ranges is 3.0 ~ 10.0. It is possible to select a high-power permanent magnet synchronous motor in the new energy passenger vehicle system, in order to greatly reduce the volume and price of the driving motor 140 and guarantee the quality and supply. At the moment, the main driving motor (MG2)140 can be preferably a permanent magnet synchronous motor or AC asynchronous motor with a rated power of 175KW ~ 280KW and a medium-to-high speed (maximum speed below 12000 RPM) and a medium-to-high torque (peak torque below 1000NM).

The optional auxiliary driving motor (MG3) 170 in Figure 2 can be configured in front of the second driving axle 180 (the so-called hybrid P4 position) and are connected bidirectionally and mechanically. The peak torque at the input end of the driving axle of heavy duty truck can be up to more than 10000NM. A multiple gear speed reducer should be installed between the driving motor (MG3) 170 and the driving axle (160 or 180), and the fixed speed ratio range is 5.0 ~ 15.0. The permanent magnet synchronous motor or AC asynchronous motor with a rated power of 100KW ~ 175KW and peak torque less than 1000NM (Newton meter) are preferred. As a simplified version of the Type II hybrid system shown in Figure 2, an embodiment of the Type II double-motor and single-clutch hybrid system is shown below, removes the main driving motor (MG2) 140 and only retain the standard generator (MG1) 110 and the auxiliary driving motor (MG3) 170.

The difference between Type I hybrid system (Figure 1) and Type II hybrid system (Figure 2) is mainly due to the different configuration positions and parameter matching of the three motors 110,140 and 170. The position, connection mode, and parameter selection of other main subsystems in Type I and Type II hybrid system are basically the same. In this disclosure, the auxiliary driving motor 170, the MCU including the inverter 122b and the second mechanical driving axle 180 can be combined to form an "Integrated e-Axle". The heavy duty truck with internal combustion engine can also be equipped with an integrated e-axle to become a hybrid heavy duty truck, but at this time, the pure mechanical powertrain of internal combustion engine and transmission and the integrated e-axle operate independently of each other, and the fuel saving effect is not the best. Unlike prior art, the ACE heavy duty truck in Figure 1 or Figure 2 of this disclosure, its integrated e-axle is dynamically strongly coupled and closely coordinated with at least one subsystem including internal combustion engine 101, engine control unit 101, generator 110, ePSD 123, main driving motor 140, battery packs 130a and 130b, clutch 111 and 112, transmission 150 and transmission control unit 151, and are jointly controlled by VCU 201. Depending on specific vehicle conditions and the road conditions, through the dynamic adjustment of the two major circuits of mechanical power flow and electrical power flow to jointly drive ACE heavy duty trucks to achieve the beneficial effect of simultaneously optimizing vehicle dynamics and fuel saving, while also improving vehicle dynamics and braking safety, and increasing the redundancy of the vehicle dynamic system and brake system.

The above content describes the ACE heavy duty truck system according to this disclosure, which is the hybrid system architecture and hardware system foundation to realize the ACE heavy duty truck fuel saving and emission reduction in the long haul logistics application scenario. Next, we will further describe how to use particularly the three-dimensional map, vehicle-mounted navigation equipment and ACE heavy duty truck structured big data stored on the cloud computing platform (such as the cloud server) in combination with the machine learning algorithm and cloud platform computing power for training the cloud and vehicle-mounted fuel saving AI brain to further achieve the predictive adaptive cruise (PAC) of the ACE heavy duty truck in the same lane on a highway and to achieve the beneficial effect of energy saving and emission reduction.

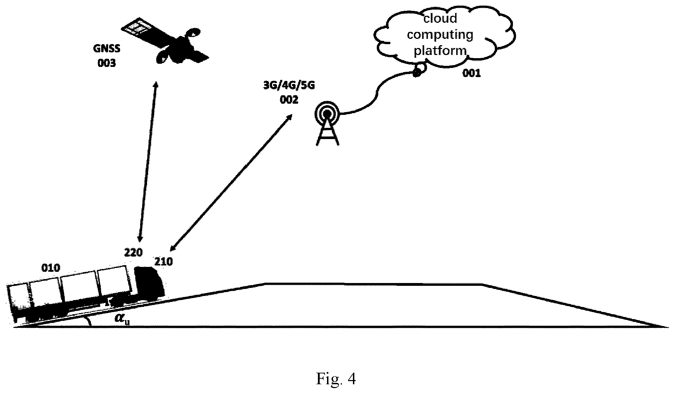

In some embodiments of Figure 1 or 2, the ACE heavy duty truck is equipped with a map unit (MU) 240 and a satellite navigation receiver (GNSS) 220. The map unit (or GNSS) 240 prestores a three-dimensional electronic map (or 3D map) covering all highways and other main semi-closed roads, while the 3D map information comprises, but not limited to: the longitude and latitude of a whole journey highway describing the absolute position of the vehicle, especially the information indicating the longitudinal slope of the road (such as the uphill Angle $\alpha_u$ and downhill Angle $\alpha_d$ shown in Figure 4). For example, the memory of the vehicle-mounted map unit 240 shown in Figure 1 or 2 can comprise the 3D map with the road meter-level positioning precision (longitude and latitude) and longitudinal slope precision with 0.1 degree accuracy. Various advanced driver assistance system (ADAS) maps containing the above road 3D information have already been commercialized and applied in batches in major global automotive markets.

The GNSS 220 is used for measuring in real time the longitude, latitude, altitude, longitudinal road slope, longitudinal linear speed and other information of the position (namely the current position) where the ACE heavy duty truck 010 is located. In some embodiments, the satellite navigation receiver adopting a dual-antenna 221 and 222 input carrier phase real-time kinematic (RTK) differential technology ("RTK receiver" for short) 220 can be used for real-time accurate positioning and attitude determination of the heavy duty truck at the measuring speed of ten times per second (the measuring frequency is 10 Hz). At present, GNSS has four independent systems, namely GPS of America, Glonass of Russia, Galileo of European Union and Beidou (BD) of China. At present, the Beidou Navigation Satellite System III can provide latest satellite navigation services for many countries, and it is predicted that the global coverage can be finished in 2020. In addition, the agreement of compatibility for the Beidou navigation satellite system in China with other three satellite navigation systems has been signed. Preferably, the satellite navigation receiver (GNSS) 220 comprising the latest BDS-3 RTK chip is matched with the two satellite antennas 221 and 222 installed on the top of the heavy duty truck cab at the interval of at least 1m, and the time service, speed, position (longitude/latitude), and longitudinal attitude (namely road longitudinal slope angle) of the vehicle are calculated in real time. The RTK chips can finish calculation of satellite navigation positioning and attitude determination according to the received independent signals of four navigation satellites combined in the four systems of the GNSS. The timing accuracy is 50 nanoseconds, and the speed measuring accuracy is 0.2 m/s; the longitude and latitude positioning accuracy of the horizontal plane is smaller than 2.5m, and the longitudinal grade accuracy of the highway is smaller than 0.15 degree; and the maximum measuring frequency is 10 Hz. The vertical altitude of the road surface under the wheels cannot be measured through the RTK navigator real-timely and accurately. In addition, the surveying, mapping and issuing of accurate altitude information are controlled in many countries in the world strictly. Fortunately, the absolute altitude measuring accuracy of the vehicle road surface in the invention is required to be 10-meter level. In some embodiments, the single-antenna GNSS plus inertial measurement unit (IMU) can also be used to complete vehicle 3D positioning and navigation. The IMU based on multiple MEMS acceleration sensors and Gyro plus processing chip can measure the longitudinal slope function of the road where the ACE heavy duty truck runs in real time with the measurement frequency higher than 10Hz and the measurement accuracy of 0.1 degree. It needs to be emphasized that real-time and accurate measurement of longitudinal slope distribution function along expressway is essential because the instantaneous small 0.1-degree-level change of road longitudinal slope is the secret source of substantial fuel saving and emission reduction when the ACE heavy duty truck is running at high speed.

The actual fuel consumption of each ACE heavy duty truck is only directly related to the performance parameter constant of each important subsystem of the heavy duty truck, the discrete variable of gross vehicle weight (tractor and trailer), the two continuous variables of vehicle speed and acceleration, the continuous variable of longitude, latitude and longitudinal slope distribution function of driving path and other limited parameters or variables, and is not directly related to the macro average fuel consumption which includes all ACE heavy duty trucks on all roads. Before an ACE heavy duty truck departs for freight transport, if a default optimal fuel saving control strategy customized for the vehicle and the specific path can be timely (second-class delay) calculated and downloaded from the artificial intelligence (AI) brain of the cloud-based fuel saving robot by entering the starting point and finishing point of the freight route that very day with the help of structured big data on operation gathering the historical experiences of each ACE heavy duty trucks operating in this road section, then every ACE heavy duty truck can consistently achieve the optimal fuel consumption each time relying on the collective intelligence and wisdom of all ACE heavy duty trucks regardless of whether the driver has driving experience of the particular path.

One of the core parts of the structured big data of ACE heavy duty truck operation is the big data of ePSD operation, comprising the following: the sampling frequency is at least 10.0Hz, the clocks of all subsystem controllers are calibrated according to the timing of the satellite navigation receiver 220, and each microcontroller of the ACE heavy duty truck at each sampling time point ti commands the sensor to collect and store at least the following variable values locally: the road longitude $L_{lg}(t_i)$, latitude $L_{lat}(t_i)$, longitudinal slope $G(t_i)$, vehicle speed $v(ti)$, vehicle acceleration $a(ti)$, generator (MG1) DC $I_g(t_i)$, driving motor (MG2) DC $I_m(t_i)$, battery packs 130 and 130b DC $I_{bat}(t_i)$, DC bus voltage $V_{bus}(t_i)$,

battery packs 130 and 130b state of charge $C_{bat}(t_i)$, brake resistor DC $I_{bk}(t_i)$, ambient temperature $T(t_i)$, ambient wind speed and wind direction $v_{xyz}(t_i)$. The main time variable operating parameters (such as speed, torque, gear) of each motors (generator 110, main driving engine 140, auxiliary engine 170), the engine 101 and the automatic transmission 150 at sampling time point (ti) can also be sampled and stored locally. It should be emphasized that the structured big data of ACE heavy duty truck operation must be collected and stored locally (onboard) and dynamically in real time by using the hybrid system shown in Figures 1 or 2 of the disclosure. It is not possible to collect or simulate the data in a decentralize way (in different time, road and subsystems on more than one heavy duty truck) before splicing to form the desired data. In the subsequent training of artificial intelligence (AI) brain of cloud and vehicle-mounted fuel saving robots, a variety of open source or dedicated algorithms and computing power can be used, combined with the above-mentioned dedicated structured big data. The structured big data of ACE heavy duty truck operation is non-public proprietary data. The more you accumulate, the greater value you get, which can continuously raise the entry barriers of other competitors for the enterprise authorized to use the invention.

In some embodiments, the VCU 201 can be configured for predictive power control over the ePSD 123, the internal combustion engine 101, the generator 110, the driving motors 140 and 170, the clutch 111, the transmission 150 and the battery packs 130a and 130b in an "independent" way based on the longitude and latitude (equivalent meter-class positioning accuracy) of the electronic horizon (meter-level interval density), the longitudinal road slope ("longitudinal slope" for short, accuracy 0.1 degree) along the full journey road based on the 3D map prestored in the map unit 240, and/or based on the longitude, latitude, altitude and longitudinal slope measured by the GNSS 220 of the position where the vehicle is located in pursuit of minimized actual fuel consumption of ACE heavy duty truck on the premise of ensuring driving safety and freight transport timeliness.

Optionally or additionally, under the condition that the deviation between the road information prestored in the 3D map in the navigator 240 and the road information actually measured by the GNSS 220 is beyond the range of allowable tolerance, especially when the deviation of the current longitudinal slope data (as key information of fuel saving) of the vehicle is beyond the range of allowable tolerance, the VCU 201 can control the transient power distribution among the three ports of the ePSD 123 subject to the longitudinal slope data actually measured by the GNSS 220. If in fact the GNSS 220 measurement data is wrong and the 3D map is correct, the VCU 201 can make a judgment after vehicle-in-the-loop simulation calculation according to the transient power distribution parameters of the three ports of the ePSD 123 of the ACE heavy duty truck, the longitudinal linear speed and acceleration of the vehicle 010 and in combination with the vehicle dynamics equation, reelection shall be subject to the onboard 3D electronic map, so as to achieve the automatic error correction function.

Of course, to reduce the system cost, a satellite navigation receiver 220 with only a single antenna 221 can be selected instead of no antenna 222; then, an inertial measurement unit (IMU) with single-axis or multi-axis dynamic tilt sensor can be selected to measure the running vehicle's absolute positioning (longitude/latitude) and road longitudinal slope in real time. There are many ways to realize the dynamic tilt sensor. One of the cost-effective embodiments is the acceleration sensor of the vehicle gauge level micro-electro-mechanical system (MEMS), the Gyroscope and the special-purpose chip integration. In several embodiments below, the following is the exemplary description on how to achieve the automatic predictive fuel saving control through the VCU 201 using the vehicle dynamic 3D navigation information (especially the road longitudinal slope distribution function). It is indicated that the following specific examples should not be interpreted as restrictions on the protective range of the invention, but for those in the art to understand the invention properly.

For example, in some embodiments, when it is measured that the slope of the slope road section in front of the vehicle is smaller than the predefined first slope threshold (for example, the slope is smaller than 2.0°) and the length of the slope road section is larger than the predefined first length threshold (for example, the length is larger than 15 kilometers), the internal combustion engine 101 can be commanded through the VCU 201 to drive the generator 110, the generated power is increased in advance; most of the generated electric power is used for supplying power for the driving motor 140 to provide the power for vehicle 010 to run at constant speed, the residual electric power is used for charging the battery packs 130a and 130b to ensure the battery packs 130a and 130b are fully charged (SoC 100%) before the vehicle starts to climb a large slope and there is enough electric energy for the vehicle to climb. It is especially suitable for the scenarios that the road section in front of the vehicle has a "long gentle slope".

In some embodiments, when there are only short slope of the highway within 100 kilometers ahead of the vehicle, short slope refers to the road section whose slope is less than the predefined second slope threshold (e.g., less than 3.0°) and the length of slope section is less than the predefined second length threshold (e.g., less than 10km, or even less than 2km), the internal combustion engine 101 can be commanded through the VCU 201 to switch to the idle working point (speed below 800 RPM) and stop fuel injection; at the moment, the output power of the generator 110 is zero, the driving motor 140 is powered only through the battery packs 130a and/or 130b in the form of discharge consumption to provide the power required for the vehicle to run at constant speed. It is especially suitable for the scenarios that the road section in front of the vehicle has a "short slope" (also called "small slope"). Since the slope length is shorter (for example, the slope length is smaller than 2km), the vehicle has climbed to the top of the slope before the release of the stored electric energy in the battery packs 130a and 130b is finished; and the battery packs 130a and 130b can be soon recharged through 100-kilowatt level regenerative braking power of the driving motor 140 in the subsequent downhill phase, and the KWH-level energy is recovered. In this way, the electric energy in the power type battery pack of dozens of KWH class is fully utilized and charged and discharged for many times, so that the power throughput turnover is increased, especially the power throughput turnover of regenerative charge with quasi-zero cost is increased, and the cost effectiveness is higher than that of the solution of using a high-capacity battery pack (large volume/weight, high price) of hundreds of kilowatt hours to prestore a lot of electric energy.

Since the flywheel of the internal combustion engine 101 also needs to keep rotating to provide mechanical power to various auxiliary electromechanical systems of the vehicle, such as the air compressor of the braking system, the compressor of the air conditioning system, the water pump, the fuel pump, etc. During the running of the vehicle 010, based on fuel-saving control strategy, even if the output mechanical power of the internal combustion engine 101 is not required to drive the vehicle for a period of time, the generator 110 is also required to work in the driving mode to provide power to drive the internal combustion engine 101 to idling without fuel (for example, 800 RPM). In order to avoid the driving load of the generator 110 due to the pumping effect of the compressed air in the cylinder when the internal combustion engine 101 is idling without fuel and consumes electric energy, it is preferable to use the internal combustion engine 101 with VVT to reduce the pumping loss of the internal combustion engine at idle by dynamically adjusting the opening and closing timing and angle of the inlet valve and the outlet valve of the internal combustion engine. When the hybrid vehicles of prior art save fuel through internal combustion engine Stop-Start Technology, the internal combustion engine switches back and forth between a zero-speed stop state and an idle speed (a fixed speed less than 1200 RPM). When the internal combustion engine is stopped for too long (more than 10 seconds), all auxiliary subsystems on the vehicle that rely on the internal combustion engine to provide mechanical power will not work properly. The "Fuelless Idle Stop-Start Technology (FISS)" of the internal combustion engine of the disclosure is obviously different from the existing hybrid vehicle engine start-stop technology. Its characteristic is that when the ACE heavy duty truck is running in serial hybrid structure, make full use of the dynamic coordination between the 100-kilowatt-class generator 110, the ePSD 123 and the high-power battery packs 130a and 130b at the 10-kilowatt class to keep the internal combustion engine 101 at idle speed (for example, 800 RPM). ECU 102 dynamically controls the fuel injection (100% or 0.0%) to adjust the internal combustion engine 101 to switch back and forth between two working conditions of reactive low load and active high load, while optimizing the vehicle power performance and fuel saving without affecting the normal operation of each auxiliary subsystem of the vehicle. The so-called "reactive low load" means that the internal combustion engine 101 keeps idling, there is no fuel injection in the cylinder and no mechanical power output, which is a low load for the generator 110 in the driving mode; "active high load" means the internal combustion engine 101 works at high efficiency operating points, there is fuel injection in the cylinder, and runs at high load (50%~90% maximum torque) with generator 110 in power generation mode as the load.

As mentioned above, the inventor finds that, depending on the ten-kilometer level electronic horizon of the vehicle-mounted 3D map, fuel saving strategies for existing traditional fuel heavy duty trucks can save fuel by 3% or below through the predictive cruise control on highways in hilly or alpine areas; however, the predictive cruise strategies of the traditional heavy duty truck cannot be applied to such conditions that the length of the slope road section is shorter and the slope is smaller, namely the conditions of "small slope" (for example, the length of the slope road section is smaller 2km and the longitudinal slope is smaller than 2.0 degrees). This is mainly because the mechanical connection is still maintained between the internal combustion engine and the transmission shaft of the traditional fuel heavy duty truck, and the pure mechanical power assembly is inappropriate to change the output power (i.e. speed and/or torque) of the internal combustion engine greatly and instantaneously (sub-second level) and shift gears of the automatic transmission in view of fuel saving. Thus, the traditional predictive cruise control is only suitable for the called "large slope" with the longitudinal slope of larger 2.0 degrees and the slope length of the several-kilometer level, but ignores more widespread "small slopes". In addition, the traditional fuel heavy duty truck has no regenerative braking function, and the energy cannot be recovered as the vehicle runs downhill, and mechanical brake is the only way to avoid overspeed when the vehicle runs downhill. In this way, the traditional fuel heavy duty truck implements predictive power control in long haul logistics scenarios, and will lose lots of chances of accumulative micro fast-changing fuel saving; and the overall fuel consumption drop of the traditional fuel heavy duty truck is hard to exceed 3%. As mentioned above, a traditional fuel heavy duty truck can use the Electronic Horizon within 10km only. The Electronic Horizon 3D road information within the range of smaller than 1km and larger 10km has no practical significance to the fuel saving through predictive control.

In some embodiments, when the slope of the road within the electronic horizon ahead of the vehicle (e.g., 50 km or more) is small (e.g., longitudinal slope $\alpha$ is between $\pm$ 1.0 degrees) or there are only "small slopes" as described above and no "large and long slopes" or high mountains, the VCU 201 can dynamically control the operating point of internal combustion engine 101 based on the SOC of battery packs 130a and 130b and the electronic horizon 3D road information. For example, when the SOC of the battery packs 130a and 130b higher than the first charge threshold (e.g., SOC is higher than 80%) is detected, the internal combustion engine can be adjusted to the reactive low load operating point (no fuel injection) through the Fuelless Idle Stop-Start control of the internal combustion engine and the driving motors 140 and 170 are mainly powered by the discharge power $P_{bat}$ of the battery packs 130a and 130b to supply vehicle running power and operated in Charge Depleting Mode. If the SOC of the battery packs 130a and 130b lower than the second charge threshold (e.g., SOC is lower than 20%) is detected, the internal combustion engine should be adjusted to the high thermal efficiency operating point of the active high load until its peak value $P_{gx}$ is reached in order to increase the output power Pg of the generator (MG1) 110, and the electric energy generated should be used to supply power to the driving motors 140 and 170 to supply vehicle power; the remaining electric power should be used to charge the battery packs 130a and 130b and operated in Charge Depleting Mode. With this control method, it is ensured that the charge in the battery packs 130a and 130b would not be depleted prematurely, and a certain charge is always stored to supply explosive power required for vehicle acceleration or running uphill at constant speed.

In some embodiments, when a "long slope" with the slope larger than the first slope threshold (e.g., the slope is larger than 2.0°) and the slope length larger than 10 km appears in the Electronic Horizon (e.g., the front position of 10 km above) from the vehicle map unit (MU), the VCU 201 can predictably command the internal combustion engine 101 and the generator 110 to generate electricity with the maximum power $P_{gx}$ in advance, and use a part of the electric energy generated to drive the motor to supply vehicle power, and the remaining part is basically used to charge the battery pack, so that the battery pack 130a and 30b are fully charged (SOC=100%) when the vehicle runs to the start point of the road section with this "long slope". In this way, the battery pack 130a and 130b can supply power to the driving motor 140 and 170 with the generator set (101, 110) through the ePSD 123 in the working mode of charge depleting after the vehicle enters a long slope section, so as to meet the requirements of vehicle driving power and freight timeliness. When the remaining electric energy of the battery packs 130a and 130b predicted by the VCU 201 is sufficient to drive the vehicle to the top of slope, the VCU 201 commands the internal combustion engine 101 to switch to the reactive low load operating point, uses up the charges in the battery packs 130a and 130b basically where the vehicle runs downhill, and then quickly charges the battery packs 130a and 130b through regenerative braking by means of hundreds of kilowatts of negative grade power in long downhill to recover dozens of 10-kilowatt class of electric energy, thus achieving fuel saving.

With reference to Figure 1 and Figure 2, in view of driving safety, in some embodiments, the ACE heavy duty truck can further comprise an automotive millimeter-wave radar module (mWR) 230 and an radar antenna 231 that are mounted in the front end of the heavy duty truck, used for monitoring in real time the absolute distance and the relative speed between the heavy duty truck and the vehicle just ahead in the same lane. The forward detection distance range of the said long distance millimeter wave radar (LRR): 200m ~ 500m; the field of view (FOV) range: +/- 10 degrees. The millimeter wave radar 230 also includes the vehicle gauge level SRR with a detection distance of 70m and a viewing angle range of +/- 65 degrees. The vehicle gauge level forward monocular or binocular camera and a processing chip can also be used for integrating with the forward-looking millimeter wave radar (LRR, SRR) to enhance the front-end speed and distance measurement properties of the vehicle and the system robustness. For redundancy and robustness of the vehicle's forward speed and distance sensor system, a LiDAR with a small viewing angle (FOV +/- 10 degrees) forward 16-line or 32-line can also be installed. The mWR 230 in Figure 1 and 2 of the disclosure should be understood as any combination of the above three types of sensors for measuring speed and distance.

In some embodiments, the heavy duty truck can further comprise a vehicle-mounted wireless communication gateway (T-Box) 210 and an external antenna 211, used for connecting the heavy duty truck with a cloud computing platform 001 through, for example, WiFi and the 3rd/4th/5th (3G/4G/5G) generation cellular mobile network 002 (see Figure 4).

In this way, the VCU 201 can receive signals from numerous vehicle sensors including the GNSS 220 and the millimeter wave radar 230 for real-time control of numerous modules or subsystems including the internal combustion engine 101 and its ECU 102, the generator 110, the ePSD 123 (including the inverters 121, 122a&122b, the high power soft switch 133, the choppers 132a&132b), the battery packs 130a&130b, the driving motors 140 & 170, the automatic transmission 150 plus the TCU 151 and the map unit 240, thus achieving the PAC function of the vehicle in the same highway lane through the "symphony orchestra type" multi-module real time dynamic coordination, liberating the driver's feet while optimizing the vehicle's power and fuel efficiency, and reduce vehicle exhaust emissions.

Under the premise of ensuring the vehicle dynamic performance, the VCU 201 can achieve minimized comprehensive fuel consumption for the whole journey by making use of electronic horizon 3D road information within 50 km and even 500 km effectively, and through the granularity real-time predictive adaptive power control for an accumulative sequence of 100 m road section.

In addition, the driver can manually turn on or off the additional Predicative-Adaptive-Cruise (PAC) function, also called the L1.5 level automatic drive function when the ACE heavy duty truck is running on a closed expressway. This function (PAC) used for automatic control of longitudinal vehicle driving on the same lane relaxes driver's feet, alleviates the driving labor intensity, and achieves automatic acceleration, deceleration, cruise and slide of the ACE heavy duty truck in the same highway lane. From the perspective of driving safety, the PAC function can only be enabled in closed highway conditions without congestion (average speed is not less than 45 km/h).

In some embodiments, the above PAC can include the following three modes: 1) N (Normal Mode), 2) Eco (Eco Mode) and 3) P (Power Mode, also called Sport Mode).

For example, for a passenger vehicle with a gross weight of 2 tons, its maximum driving power exceeds 100KW; but for a fully loaded heavy duty truck with a gross weight up to 40 tons, its maximum driving power is only 350KW. The driving power per unit weight (KW/ton) of the heavy duty truck is far less than that of the passenger vehicle, and the dynamic driving characteristics of the two vehicles are quite different. It is difficult for a heavy duty truck to maintain a constant speed of more than 1.0 degrees up and down the longitudinal slope and follow the passenger vehicle straight ahead with a constant distance when running on an open highway. In cruise control of ACE heavy duty truck, it needs to set the upper and lower limits of cruise speed zones and determine the cruise speed zone of the heavy duty truck to control the vehicle within the cruise speed zone with the rated cruise speed Vc selected by drivers as an intermediate value. The three PAC modes have different focuses, wherein, the normal mode (N) gives consideration to fuel saving and freight transport timeliness (i.e. vehicle power performance); the fuel-saving mode (Eco) emphasizes fuel consumption but relaxes the power performance requirement; the high-performance mode (P) emphasizes freight transport timeliness but relaxes the fuel-saving requirement. Preferably, the upper and lower limits of the following cruise speed zones can be selected.

In the normal mode (N), the cruise speed (1.0-0.08) Vc < V < (1.0+0.08) Vc and cannot exceed the legal maximum speed at this section; in the fuel-saving mode (Eco), the cruise speed (1.0-0.12) Vc < V < (1.0+0.08) Vc and cannot exceed the legal maximum speed; in the high-performance mode (P), the cruise speed (1.0-0.05) Vc < V < (1.0+0.05) Vc and cannot exceed the legal maximum speed.

The VCU 201 dynamically adjusts the safe following distance $L_s$ of adaptive cruise control according to the vehicle configuration and state information including the gross weight and vehicle speed, and combining with the current 3D road information (longitude, latitude and longitudinal slope) of the vehicle as well as the longitudinal slope distribution function, bend curvature and other three-dimensional information of roads within the vehicle electronic horizon stored in the map unit 240. The road longitudinal slope data (positive and negative/size) has a great influence on the power performance and braking effectiveness of ACE heavy duty trucks. Although it is not necessary to dynamically adjust the safe following distance $L_s$ of passenger vehicle according to the longitudinal slope distribution function of the road because of their large driving power and braking power per unit mass, dynamic adjustment of $L_s$ is very important for the safety of ACE heavy duty truck in the above PAC mode The safe following distance $L_s$ can be subdivided into three specific distances: L1 is the early warning distance, L2 is the warning distance, L3 is the dangerous distance, where L1 > L2 > L3. The VCU 201 can dynamically calculate the above three following distances (LI, L2, L3) according to the vehicle parameter and operating condition (e.g., vehicle gross weight and vehicle speed), real-time weather (wind, rain, snow, ice, temperature, etc.) and the 3D road data (longitude, latitude and longitudinal slope, etc.) within 500m ahead of the vehicle.

When the distance $L_s$ between an ACE heavy duty truck and a vehicle right ahead is gradually less than L1, L2 and L3 and the relative speed v>0 (indicating the continuous shortening of the following distance between two vehicles), the VCU 201 will remind drivers by enhancing its warning intensity gradually through internal acoustic, visual, tactile and other physical signals. At the same time, the VCU 201 controls the generator set (101 and 110) and the driving motors 140 and 170 to reduce the output power of each power source gradually, and increase the regenerative braking power gradually to slow down the vehicle after the output power of the driving motors 140 and 170 reduce to zero, and recover energy by charging the battery packs 130a and 130b. However, the 500 KW maximum regenerative braking power of the driving motor can only meet the auxiliary braking and deceleration requirement with a deceleration of about 0.1 g (g is acceleration of gravity) for a full load heavy duty truck running at high speed. In emergencies, the driver must step on the brake pedal and start the mechanical braking system of the heavy duty truck to achieve emergency braking with deceleration larger than 0.2 g. The sum of the driver's braking reaction time and the response time of the mechanical braking (pneumatic braking) system of the heavy duty truck is about 1.0 second. However, the system response time of the VCU 201 from 100kW class driving mode to 100kWclass regenerative braking mode can be completed in 25.0ms, dozens of times faster than the response speed of the traditional heavy duty truck driver + mechanical braking system, and the power regenerative braking system and the mechanical braking system are completely independent of each other. The regenerative braking function of the driving motor of ACE heavy duty truck not only improves the comprehensive braking performance of the vehicle, but also provides safety redundancy. In addition to fuel saving and emission reduction, the predictive adaptive cruise system (PAC) of the ACE heavy duty truck can improve driving safety and reduce rear-end collisions. When the ACE heavy duty truck is running in parallel (clutch 111 and 112 closed and locked), the generator 110 and the driving motors 140 and 170 can all participate in vehicle driving or regenerative braking, at this time, the power performance and braking effectiveness of the vehicle are better than that of the series architecture (clutch 111 disengaged).

The predictive adaptive cruise system (PAC) work is divided into two categories. The first one is that when there is no vehicle within 200 meters ahead in the same lane, the vehicle controls the ACE heavy duty truck to move within the specified speed zone according to the fuel saving control algorithm. The second category is that the ACE heavy duty truck should be controlled beyond the safe following distance $L_s$ when there are preceding vehicles 200 meters right ahead in the same lane, and then the fuel saving control algorithm should be considered.

Heavy duty trucks for long haul logistics will encounter congested roads due to rush hour traffic, road repairing or traffic accidents and other factors from time to time (the average speed is less than 35 km/h; frequent active acceleration and deceleration); at the moment, both the driver's driving labor intensity and the fuel consumption of the heavy duty truck are increased sharply. Congested expressways are one of the "pain points" in the road logistics industry. The average congestion degree of highways in China is higher than that in America. At the moment, the ACE heavy duty truck can enable the "intelligent following" function, which can only be used when driving at low speed on a closed road (the average speed is less than 30 km/h), not suitable for use on open urban or suburban roads. By using the SRR and the camera, a set safety following distance L0 is kept with the lead vehicle right ahead in the same lane in a closed congested highway section, which is realized by commanding the clutch 111 of the ACE heavy duty truck to disconnect and running in a series hybrid architecture to achieve frequent active acceleration and braking. The driving motors 140 and 170 can maintain the maximum torque output from zero speed to rated speed. Both the starting acceleration and braking deceleration of the ACE heavy duty truck are significantly higher than those of the traditional heavy duty truck with internal combustion engine and even comparable with the acceleration and deceleration performances of the ordinary light duty trucks with traditional internal combustion engine. At the moment, the heavy duty truck frequently brakes at low speed, which is very conducive to the 100 kW-class regenerative braking and energy recovery. In the "intelligent following" mode, the ACE heavy duty truck can save more fuel than the traditional heavy duty truck with internal combustion engine (the fuel saving rate is more than 30%) and greatly reduce the driving labor intensity of drivers.

When a loaded heavy duty truck runs along a long-downhill path of a highway, the risk of performance degradation in the mechanical brake system due to long-time braking friction and heating, or even complete failure, cannot be overlooked. In March 2018, 17 people were killed and 34 injured in a traffic accident at the South Toll station of Lanzhou, China's Lanhai highway, when a heavy duty truck's braking system overheated and failed as it was driving along a 17-kilometer downhill section. European regulations require that retarders must be installed for heavy duty trucks for long haul logistics. Although there is no mandatory regulation requirement for heavy duty trucks in America and China, more and more users choose heavy duty truck retarders. The existing mass-produced retarders, such as eddy current retarder, hydraulic retarder and internal combustion in-cylinder brake retarder, have their own advantages and disadvantages. Both the eddy current retarder and the hydraulic retarder have only one retarding function, which makes no contribution to vehicle driving, increases the vehicle weight and cost more than ten thousand yuan, and leads to a bad retarding effect when the vehicle is running at low speed. The internal combustion engine in-cylinder brake retarder has the advantage of one machine serving several purposes, but the retarder braking brings great noise, the braking power is below the peak power of the internal combustion engine, and the retarding effect decreases when the vehicle is running at low speed. In addition to the beneficial effects of fuel saving and emission reduction, the ACE heavy duty truck powertrain of the disclosure can also realize the long-downhill retarder function of ACE heavy duty truck without adding any hardware. It can completely replace the eddy current retarder and the hydraulic retarder, and the price ratio is higher than that of several commercial heavy duty truck retarders. It can also integrate the two different requirements of internal combustion engine "reactive low load" and "in-cylinder braking"; one machine can be used for multiple purposes without significantly increasing the cost of the system hardware through the VVT device to achieve the beneficial effect of adding a retarder for heavy duty truck.

When the ACE heavy duty truck encounters a long-downhill path, the VCU201 commands the clutch 111 to close and lock, the vehicle runs in parallel hybrid architecture, the internal combustion engine 101 operates at reactive low load or reactive high load (no fuel injection; low pumping effect idling; high pumping response in-cylinder braking), the generator 110 and the driving motors 140 and 170 recover the mechanical energy of vehicle and internal combustion engine operation through regenerative braking and charge the battery packs 130a and 130b through ePSD 123. When the battery packs 130a&130b are fully charged (SoC is 100%), the choppers 132a&132b disconnect the battery packs 130a&130b, the soft switch 133 is switched from disconnect state to conducting state and connected to the brake resistor 131, and the excess electric energy is converted into thermal energy consumption as an effective electric load. If the internal combustion engine 101 has the function of in-cylinder braking at the moment, the generator 110 can also be driven through the inverter 121, and the internal combustion engine 101 is used as an effective mechanical load, consuming regenerative electric energy and providing another redundant retarder. In addition to energy recovery for fuel saving and emission reduction at near zero cost, the regenerative braking can also significantly prolong the life of mechanical brake pads and reduce the total operation and maintenance costs of the braking system within the whole life cycle of ACE heavy duty trucks.

The ACE heavy duty truck hybrid powertrain system of the disclosure is a fully digital software-defined powertrain system, including L1~L2 automatic driving functions. The bulk commercialization of ACE heavy duty truck will have a profound impact on the heavy duty truck industry for global long haul logistics, similar to the industrial upgrading of the global mobile communications industry from feature phones to smart phones. The ACE heavy truck can be easily upgraded from L1.5 to L3 or L4 by installing a variety of environment sensors, wire-controlled automatic steering device, autonomous driving AI chips and other hardware and software upgrades. Industry experts agree that it will be difficult for L5 unmanned heavy duty truck to enter bulk commercialization in major global markets by 2030. All automatic driving heavy duty trucks of L1 to L4 must comply with the functional safety standard ISO26262 for road vehicles to achieve a specific safety level (ASIL safety level). The ACE heavy duty truck is based on system integration including drive motors 140 and 170, battery packs 130a and 130b, and ePSD 123 to achieve the pure electric driving, the regenerative braking and energy recovery, the AEBA and the long-downhill retarder function. Besides the traditional internal combustion engine and mechanical brake systems of the vehicle, a set of completely independent and redundant active safety system is installed, as well as a redundant vehicle electric driving system (internal combustion engine with multiple motors). Compared with the traditional heavy duty truck with internal combustion engine based on the prior art, the ACE heavy duty truck of this disclosure can improve the three ultimate goals of automobiles simultaneously with high cost effectiveness: safety, energy saving and environmental protection.

It is predicted that the preliminary large-scale business of "Truck Platooning" of heavy duty truck can be implemented in relatively open closed highway areas in Europe and America from 2019. The "Truck Platooning" of heavy duty truck means reducing the safe following distance between two heavy duty trucks running at a high speed from the regulatory 45 m above to 15 m below greatly through a complete set of advanced driving assistant system (ADAS) + a real-time reliable wireless mobile communication (V2V, V2X) between vehicles as well as between the vehicle and cloud, which helps to reduce the air drag power between the two heavy duty trucks ahead and behind obviously, save 4% fuel of the leading heavy duty truck and save 10% fuel of the following heavy duty truck. In view of safety, the emergency braking performance of the following heavy duty truck should be superior to the leading heavy duty truck, so as to avoid rear-end collisions. The high speed emergency braking performance in the same lane of the ACE heavy duty truck is significantly superior to traditional fuel heavy duty truck with the same gross weight, therefore the ACE heavy duty truck is applicable for serving as following heavy duty truck in the truck platooning of heavy duty truck, which may further save fuel. In view of fuel saving, smaller following distance in truck platooning is not better. When the following distance is less than 7 m, the effective wind speed of the front water tank of the following heavy duty truck will be reduced, and the heat dissipation effect will be lowered; and at the moment, it is required to start the water tank fan with a power dissipation of tens of kilowatts to provide the dynamic heat dissipation power required for the heavy duty truck diesel engine, which may result in no reduction and rise of comprehensive fuel consumption of the following heavy duty truck. The internal combustion engine displacement of the ACE heavy duty truck is reduced by about 25% than the internal combustion engine displacement of the traditional heavy duty truck, which means both cross section area and heat dissipation power of its water tank are reduced by about 25%; and compared with traditional heavy duty truck, the ACE heavy duty truck has faster emergency braking response, and shorter braking distance. Therefore, serving as a following vehicle, the ACE heavy duty truck can shorten the safe following distance of a truck platooning of the ACE heavy duty trucks to 6 m in an expressway section without significantly going uphill and downhill (longitudinal slope +/- 2.0 degrees), and may achieve more than 10% additional fuel saving rate by reducing the air drag power.

In the North American or European markets, the heavy duty truck driver for long haul logistics are subject to mandatory traffic regulations. They are on duty for 14 hours a day and after 11 hours of continuous driving, they must park and rest for 10 hours. In China, heavy duty truck drivers (single or double drivers) also need to stop for several hours on the way. When parking, a heavy duty truck is the driver's hotel. Parking requires electricity and air conditioning, which is cooled in summer and heated in winter. For energy saving and emission reduction, Europe has strict Anti Idling regulation, while China and the United States currently do not have any Anti Idling regulation. In order to meet the EU Anti Idling regulations and/or improve the quality of life for heavy duty truck drivers during long haul, each European heavy duty truck is equipped with a battery pack or pocket diesel engine based APU worth tens of thousands of yuan, and some American and Chinese trucks are gradually equipped with the above-mentioned system. The ACE heavy duty truck of the invention can fully charge the battery packs 130a and 130b (SoC 100%) before a long parking rest. The ePSD 123 can completely replace the above-mentioned APU. On the premise of not increasing the hardware cost, it can support all the Hotel Load power demand of heavy duty truck drivers when they park and stop their internal combustion engines for ten hours, such as heating, refrigeration, TV, refrigerator, microwave, induction cooker, etc. It saves energy and reduces emissions, and significantly improves the quality of life for heavy duty truck drivers during long haul.

It needs to be emphasized that the realization of beneficial effect of 30% reduction in comprehensive fuel consumption (L/100km) of the ACE heavy duty truck than traditional heavy fuel truck through the PAC in the same highway lane described in the invention mainly depends on the gas-electric hybrid powertrain technology, plus the proprietary structured big data, artificial intelligence fuel saving algorithm and 3D map electronic horizon. Human drivers can manually control the ACE heavy duty truck to basically achieve a fuel saving rate of 25%+ (compared with traditional heavy duty diesel truck); it is commanded by the "fuel-saving robot" AI brain to achieve L1.5 or L2 automatic driving in the same lane on highways (PAC) so as to ensure that the comprehensive fuel consumption (L/100 km) of each ACE heavy duty truck has nothing to do with the driver's personal ability and work attitude and is consistently lower than the level of an optimal human driver. Different from the L4/L5 automatic drive vehicles, the ACE heavy duty truck of the invention adopts the mature and batch commercial core components and system integration technology, which has obvious fuel-saving effect, high cost effectiveness and the ACE heavy duty truck can be industrialized within three years without relying on subsidies to realize large-scale commercial use. Other commercialized fuel saving technologies of heavy duty trucks for long haul logistics, such as low rolling friction tires, lightweight and wind drag reducing aerodynamics (tractor and trailer) and the like, can be directly superposition-applied to ACE heavy duty trucks. It is expected that the ACE heavy duty truck that will be commercialized in bulk around 2021 will reduce the overall fuel consumption (L/100 km) of the baseline for 2017 version of the traditional heavy duty diesel truck by more than 25%.

Unlike prior art, the ACE heavy duty truck of the embodiments shown in Figure 1 to 4 in this disclosure effectively integrates several ADAS functions such as PAC, LDW, FCW, AEBA and retarding function of the heavy duty truck for the long downhill. In addition to the two benefits of improving vehicle safety and reducing the labor intensity of the human driver for long-distance driving, it also adds dynamic linkage between the cloud and the vehicle-mounted "fuel-saving robot" AI brain, just like AlphaGo Zero plays chess, the autonomic learning evolves and commands the ACE heavy duty truck to achieve the beneficial effects of vehicle comprehensive fuel consumption over human drivers.

Besides, for an ACE heavy duty truck with battery pack capacity of only dozens of kilowatts, more than 1000 degrees (KWH) of power are consumed for the high-speed loaded battery-driven running for 800 km, and the plug-in hybrid technology is technologically feasible but doesn't make much business sense. As discussed above, when running on a loaded highway, the ACE heavy duty truck can harvest kilowatt-hours of "zero cost electric energy" (regenerative braking charge) from each downhill between tens of meters and several kilometers through charging the battery packs 130a and 130b by driving motors 140 and 170 regenerative braking and skillfully using the grade power with downhill negatives between tens of kilowatts and hundreds of kilowatts generated from subtle change along the longitudinal slope 0.1° that frequently occurs. Every little help. In addition, the comprehensive energy conversion efficiency from the battery to the driving wheel in ACE heavy duty truck is as two times as that from the fuel tank to the driving wheel. In other words, compared with the chemical energy in the fuel tank, the electric energy in the battery pack of the ACE heavy duty truck can make one to three in the aspect of vehicle driving. The secret of the ACE heavy duty truck saving fuel under the working condition of highways is to maximize the approximately zero cost "regenerative braking charge" accumulated in the battery packs 130a and 130b, supply the driving power of partial vehicles, and increase the total charging and discharging electric energy of the whole journey of the battery packs 130a and 130b through the fast turn around method of discharging with charging, so as to achieve the fuel saving effect.

The VCU 201 evaluates the situation in real time according to the 3D electronic map of the whole journey road, so as to ensures that there is sufficient time to command clutches 111 and 112 to engage and lock before it encounters a long uphill with a length of more than 10 km, a longitudinal slope of more than 2.0% and a length of more than 10 km. When switching to parallel and mixed architecture, the internal combustion engine 101 and the generator (MG1) 110 can fully charge the battery packs 130a and 130b in advance and safely increase the vehicle speed to the legal speed limit before the vehicle reaches a long uphill, so as to delay and reduce the ACE heavy duty truck 010 to the maximum extent on the way uphill, and avoid the peak power of the internal combustion engine is insufficient to independently support the vehicle to run uphill at constant high speed after the battery pack is used up in the vehicle climbing process, which affects the vehicle power performance and transportation timeliness of the vehicle. According to the vehicle-mounted 3D map, especially the high precision distribution information of longitudinal slope in the whole journey, the VCU 201 can real-timely and dynamically predict the time functions of the vehicle grade power and vehicle road load in the whole journey under the 10-kilowatt level precision, so as to dynamically and predictively adjust the SoC of the battery packs 130a and 130b; under the premise of ensuring driving safety and RDE compliance at all times, pursue the optimal balance among the fuel saving effect and the power performance of the ACE heavy duty truck at the predictive adaptive cruise (PAC) mode selected by drivers and meet the vehicle dynamic equation (1-1) in real time. It needs to be emphasized that the optimal value of the daily driving comprehensive fuel consumption of an ACE heavy duty truck is closely related to the configuration and load of this vehicle, longitudinal slope space-time function along the way of the specific journey (or route), weather conditions along the way on that day, traffic condition along the way, etc., but has no direct relation with the macroscopic average fuel consumption value of the heavy duty trucks with similar configuration and load in the whole province and even throughout the country. If the average fuel consumption per minute per road section is the minimum, it can ensure the cumulative comprehensive fuel consumption of this ACE heavy duty truck is optimal daily, monthly, annual and throughout its full life cycle from month to month. For all ACE heavy duty trucks with different configurations and loads, the dedicated structured big data of running in a specific freight route that are formed from month to month have common guiding significance for each ACE heavy duty truck that is operated in this journey.

How to quasi real-timely (minute or hour-level delay) upload the dedicated structured big data that are recorded in the above numerous ACE heavy duty trucks during the driving period to the cloud computing platform 001 for storage via a mobile Internet 002 through a vehicle-mounted wireless gateway 210 after desensitization and encryption for subsequent analysis and processing is described below. The cloud platform 001 assembles enough computing power of public or private clouds through the specific open source or algorithm of optimal machine learning, trains the cloud "heavy duty truck fuel-saving robot" AI brain through the increasingly accumulated dedicated structured big data of the ACE heavy duty truck, seeks the optimal fuel-saving control strategy for specific journeys by focusing on collective intelligence, and serves for individual ACE heavy duty trucks, providing fuel consumption reference value and default fuel-saving control strategy for specific journeys for them so that each ACE heavy duty truck can benefit from them. Each ACE heavy duty truck performs "Edge Computing" on vehicle end by means of its VCU 201, and real-timely and dynamically modifies the fuel-saving strategy according to the current environment, road conditions and vehicle operating data, achieving minimized comprehensive fuel consumption of this vehicle for the journey.

In some embodiments, the operating data from the above generator set (101, 102, 110, 121), the ePSD 123, the clutch 111, the driving motors 140 and 170, the automatic transmission 150, battery packs 130a and 130b and other main powertrain subsystems may be measured and collected (the measuring frequency is above 5 Hz) by the vehicle-mounted multi-sensor "IOT" on the ACE heavy duty truck in real time during the running of ACE heavy duty truck 010, and stored in the format of structured big data commonly used in the industry, such as the vehicle-mounted VCU 201 memory and other vehicle-mounted memory. Of course, it is also feasible to store the measurement data in the memorizers of microprocessors corresponding to subsystems in a distributed way. The so-called "structured big data" refers to the multi-dimensional time series data of various subsystems during the operation of ACE heavy duty truck that are "relatively" recorded through a "mapping relation".

For example, it can dynamically calibrate microprocessor clocks of all vehicle-mounted subsystems including the VCU 201 clock by means of 10-nanosecond level ultrahigh precision time service of the GNSS 220, and annotate and synchronize the structured big data of each subsystem of ACE heavy duty truck with the unique time series. As shown in Figures 1~4, all important subsystems on the vehicle 010, including the VCU201, the internal combustion engine 101, the internal combustion engine control module 102, the generator 110, the electrical power split device (ePSD) 123 (including the inverters 121, 122a&122b; the soft switch 133; the choppers 132a&132b), the clutch 111, the driving motors 140 & 170, the battery packs 130a & 130b, the transmission 150, the transmission controller 151, the millimeter wave radar 230, the mobile communication module 210, the map unit 240, the GNSS 220, etc. have dedicated microprocessors, memorizers and sensors. All these subsystems can measure, calculate and record their main operating parameters annotated with time in real time at the local vehicle end within a measurement frequency ($f_m$) range of 1.0 Hz< $f_m$ <50.0. For example, the internal combustion engine control module 102 may calculate and record the operating data such as vehicle speed and speed, torque and brake specific fuel consumption (BSFC) of the internal combustion engine 101 at a measurement frequency of 20 Hz; the generator control unit (inverter) 121 may record the data such as input shaft mechanical speed and torque and internal temperature of the alternator 110 and output DC voltage, current and internal temperature of the generator control unit 121 at a measurement frequency of 20 Hz; the ePSD 123 can record the data such as one DC voltage function at the DC bus junction X and various DC functions at a measurement frequency of 20 Hz; the battery management module (BMS) of battery packs 130a and 130b can record data such as its output DC voltage and current, and current, voltage, temperature and SoC of its internal cell and battery module levels at a measurement frequency of 10.0 Hz; the inverters 122a and 122b can record the data such as output shaft mechanical speed and torque and internal temperature of the driving motors 140 and 170 at a measurement frequency of 20 Hz; the TCU 151 can record the data such as transmission position, input end speed and output end speed at a measurement frequency of above 10 Hz; the satellite navigator 220 can record the data such as speed per hour, longitude and latitude, longitudinal slope and time service of the vehicle at the maximum measurement frequency of 10 Hz; the millimeter wave radar 230 can record the data such as distance and relative speed between the vehicle and the front vehicle at a measurement frequency of 10 Hz. The sensor measurement parameters of subsystems may have overlapping each other, and data overlapping redundancy helps to improve the fault tolerance and error correction of the whole system.

Next, as shown in Figures 1~4, the VCU 201 collects and assembles the dedicated structured big data ("fuel saving data packet" for short) related to the vehicle fuel saving of ACE heavy duty trucks that is generated in the running process of the ACE heavy duty truck 010 with the time series annotation as the reference of all subsystem measurement data. Later, the "fuel saving data packet" will be "real-timely" (subsecond-level delay) or "timely" (hour-level delay) uploaded to the cloud computing platform 001 for centralized or distributed storage via a mobile Internet 002 or wired Internet, for subsequent data analysis and processing.

For example, the fuel saving data packet can be "quasi real-timely" uploaded to the server of the cloud computing platform 001 via the wireless communication gateway 210 (as shown in Figures 1~2) and the cellular mobile network 002 (as shown in Figure 4) for subsequent data processing. The "quasi real-time" indicates that the delay of uploading the fuel saving data packet is within several hours. Optionally, the data packet can be desensitized and encrypted before being uploaded to ensure data security and protect customer privacy and trade secrets. The cloud platform 001 will collect all fuel saving data packets of numerous ACE heavy duty trucks using the invention. The cloud platform trains the artificial intelligence (AI) brain ("fuel-saving AI brain" for short) of the "fuel saving robot" by means of these increasingly accumulated structured big data of ACE heavy duty truck groups and by allocating the corresponding computing power through the specific algorithm of machine learning, and seeks the optimal fuel-saving control strategy and effect of ACE heavy duty trucks. The real-time connection of cloud fuel-saving AI brain and vehicle-mounted fuel-saving AI brain can perform tens of millions of calculations per second according to the constantly changed running conditions of the ACE heavy duty truck, seek a dynamically optimal fuel-saving control strategy in each second and minute of time frame (corresponding to 20 m to 1000 m of driving distance), command the ePSD 123 to dynamically adjust the charging and discharging power of the battery packs (130a&130b) with an amplitude of hundreds of kilowatts within tens of milliseconds of system response time for peak load shifting, keep the internal combustion engine 101 working stably at the high efficiency point for a long time, and meet the vehicle dynamic equation (1-1) in real time. The fuel-saving AI brain finally achieves the macroscopically optimal fuel saving effect of the whole journey through the microcosmically optimal fuel saving in each period, constant accumulation and linear superposition. The vehicle-mounted fuel-saving AI brain (VCU 201) commands the ACE heavy duty truck 010 running in the same highway lane to achieve the optimal fuel saving effect through predictive adaptive cruise (PAC), and this problem is mathematically equivalent to AlphaGo of Google. Just as AlphaGo defeated humans, the ACE heavy duty truck "fuel saving robot" of the disclosure can surpass the human drivers in fuel saving of the heavy duty truck. It should also be emphasized that the "fuel saving robot" of the invention will be a good assistant of the heavy duty truck driver in long haul logistics rather than completely replacing the human driver.

Both the starting point and finishing point of the journey for the heavy duty truck for long haul logistics are known in advance, not changing randomly. Before start of freight, the VCU 201 of the ACE heavy duty truck 010 can automatically require the "fuel-saving AI brain" of the cloud platform 001 through wireless mobile gateway 210 to download the optimal fuel-saving control default program and optimal fuel consumption value (L/100 km) for a journey, to serve as a reference for locally real-time operation (edge computing) and the dynamic regulation of the vehicle-mounted fuel-saving AI brain included in the VCU 201. In this way, we can enjoy the collective intelligence of running in the same road section of ACE heavy duty trucks in the whole industry, so as to achieve the optimal fuel saving effect of long haul logistics industry. After driving the ACE heavy duty truck to a closed highway, drivers can select mode (normal mode/fuel-saving mode/high-performance mode), activate the PAC function, and replace partial driving functions of drivers with the fuel-saving AI brain of the VCU 201, so as to achieve drive (acceleration/cruise/slide/deceleration) automation (L1.5) in the same lane of the ACE heavy duty truck, relax driver's feet, reduce the fatigue strength in drivers' long-way driving, and achieve the optimal fuel saving effect. Drivers are still responsible for turning and emergency braking of the vehicle and for keeping all-around monitoring on driving of the heavy duty truck constantly. The other beneficial effect of the invention is that the well-known long haul logistics industrial pain point of the actual comprehensive fuel consumption discreteness up to 25% of the vehicle caused due to human factors of the drivers is eliminated through the control of fuel-saving AI brain, so as to ensure all ACE heavy duty trucks can highly and uniformly achieve the optimal fuel saving effect when running on the same road section. This highlight is very important to transport companies in terms of reducing cost and increasing efficiency.

In a word, the essential difference between the ACE heavy duty truck 010 with PAC function in the invention and other hybrid vehicles and traditional heavy duty diesel trucks with similar technical features available on the market today is that the former highly focuses on comprehensive fuel saving under expressway conditions, can effectively solve the worldwide problem of no obvious fuel saving effect (the fuel saving rate is always less than 10%) of hybrid heavy duty trucks under the working condition of highways than traditional fuel heavy duty trucks that is recognized in the automobile industry, and can achieve the beneficial effect that the actual comprehensive fuel consumption in long haul logistics is reduced by more than 30%, and significantly improve the active safety of the vehicle, and ensure that ACE heavy trucks meet the pollutant emission and carbon emission regulations for a long life (700,000 km emission standard warranty period) under the actual driving environment (RDE) of the three major heavy truck markets in China/US/EU.

The heavy duty truck fuel-saving robot of this disclosure will not replace the human driver, and it is always a loyal and reliable assistant of human driver. The Operational Design Domain (ODD) is closed highways. Under highway conditions (average speed is higher than 50 km/h; rarely active acceleration or braking), the fuel-saving robot of heavy duty truck drives through the "Predictive Adaptive Cruise" of the leading vehicle to realize autonomous refueling and acceleration, braking and deceleration, constant speed cruise (L1.5 vehicle longitudinal automatic control) of the ACE heavy duty truck in the same highway lane and achieving multiple beneficial effects such as energy saving and emission reduction, alleviates the labor intensity of heavy duty truck drivers in long-distance driving, and improving the active safety performance of vehicles.

The invention does not directly involve the lateral automatic control of vehicle driving, and the vehicle steering control (i.e. lateral control) of ACE heavy duty truck is always completely dominated by human drivers. The ACE heavy duty truck of the present disclosure is easily upgraded to level L3 PA or Level L4 HA vehicles by installing a variety of driving environment sensors and Autonomous Drive AI Controller. Most industry experts in the world believe that heavy duty truck for long haul logistics is most likely to be the first to realize the application scenario of L3/L4 automatic driving commercialized in bulk within ten years among the various types of road vehicles. The ACE heavy duty truck of the disclosure upgrades L3/L4 automatic driving in the long haul logistics application scenario, and the realization of bulk commercialization is lower than the comprehensive cost of upgrading traditional internal combustion engine and the Lead Time is short.

Although the language specific to structural features and/or method logical actions has been used to describe the topic, it should understand that the restricted topic in the claims may not be restricted to the above specific characteristics or actions described. On the contrary, the above specific characteristics and actions described are only example forms of achieving the claims.

**Claims**

1. A hybrid vehicle, comprising:

   a generator set, used for converting chemical energy of vehicle fuel into electric energy, and consisting of an internal combustion engine and motors;
   an electrical power split device (ePSD), configured as a power electronic network with three ports, each having at least one unidirectional or bidirectional electrical connection to the outside, wherein the first port of the ePSD is connected with the output end of the generator set bidirectionally and electrically;
   at least one power battery pack, connected with the third port of the ePSD bidirectionally and electrically;
   a transmission, with its output shaft connected with a driving axle of the vehicle bidirectionally and mechanically;
   at least one driving motor, connected with the second port of the ePSD bidirectionally and electrically, wherein the output shaft of the main driving motor in the at least one driving motor is connected with the input shaft of the automatic transmission bidirectionally and mechanically, wherein the driving motor can be operated for:
   converting the electric energy into the mechanical energy for driving the truck through the automatic transmission; or
   converting the mechanical energy of the vehicle into electric energy, recovering energy by regenerative braking, and charging the power battery pack through the ePSD,
   a first controllable clutch, arranged between the generator set and the driving motor, wherein the first controllable clutch can be operated to couple or break the mechanical connection to the driving motor.

2. The hybrid vehicle according to Claim 1, wherein the driving motor is arranged between the first controllable clutch and the transmission.

3. The hybrid vehicle according to Claim 1, wherein the transmission is arranged between the first controllable clutch and the driving motor.

4. The hybrid vehicle according to Claim 3, wherein the hybrid vehicle also comprises a second controllable clutch, the second controllable clutch is arranged between the internal combustion engine and the motor and configured to controllably couple or decouple the mechanical connection between the flywheel end of the internal combustion engine and the mechanical shaft of the generator.

5. The hybrid vehicle according to Claim 4, wherein:

   when both the first controllable clutch and the second controllable clutch are engaged, the internal combustion engine, the motor and the transmission are mechanically connected in parallel so that the motor can be operated as both a generator and a driving motor;
   when the first controllable clutch is disengaged and the second controllable clutch is engaged, the motor is operated as the driving motor; and
   when the first controllable clutch is engaged and the second controllable clutch is disengaged, the motor is operated as the generator rather than directly participating in the mechanical drive of the driving motor.

6. The hybrid vehicle according to Claim 1, further comprising:

   a map unit used for prestoring an electronic navigation 3D map comprising the 3D information of the longitude, latitude and longitudinal slope of the road at the path where the truck runs; and/or
   a satellite navigator, capable of calculating the longitude, latitude and road longitudinal slope at the location of the vehicle in the running process in real time.

7. The hybrid vehicle according to Claim 6, further comprising:
   a vehicle control unit (VCU), configured for performing dynamic real-time control on at least one of the first controllable clutch (111), the second controllable clutch (112), the generator set, the ePSD, the transmission, the power battery packs and the driving motor based on the 3D highway information of the travel path of the vehicle contained in the map unit, the SoC of the battery pack, and the system and operating parameters of the vehicle.

8. The hybrid vehicle according to Claim 7, wherein the power battery pack is configured as a power type battery pack, and the third port of the ePSD is also connected with a high-power braking resistor with radiator through an electric control switch unidirectionally and electrically;
Wherein the VCU is also configured for:
in the case that the vehicle is going down a long slope thus achieving the retarder function through long-time regenerative braking:
switching the electric control switch to the first position when the state of charge (SoC) of the battery pack is less than the first threshold, wherein the electric connection to the battery pack is set up in the first position to provide the electric energy generated by the vehicle through regenerative braking for the battery pack in order to charge the battery pack.

9. The hybrid vehicle according to Claim 8, wherein the VCU is further configured for:
switching the electric control switch to the second position when the SoC of the battery pack is greater than or equal to the first threshold, wherein the electric connection to the battery pack is cut off in the second position, and an electric connection to the brake resistor is set up to make the brake resistor as the load of regenerative braking realize the retarder function stably and reliably.

10. A method performed on the hybrid vehicle according to any one of Claims 1-9, comprising:
measuring and storing dedicated structured big data about the operation state of the vehicle in real time with the precise timing of the GNSS as the unique annotation of orderliness, wherein the dedicated structured big data includes the system parameters, speed function and 3D location function of the vehicle, wherein the 3D location function is obtained based on the longitude, latitude and longitudinal slope, wherein the dedicated structured big data also comprises: a unique DC voltage function at the DC bus junction inside the ePSD, a plurality of DC current functions related to the junction, and information indicating the disengaged and engaged states of the first controllable clutch (111) and/or the second controllable clutch (112).

11. The method according to Claim 10, wherein the dedicated structured big data also comprises at least one of the following:
the parameters and the dynamic condition data from the generator set, the driving motor, the transmission and the battery pack.

12. The method according to Claim 10, further comprising:
uploading the dedicated structured big data to the cloud computing platform for storage in real time or at intervals for subsequent data analysis and processing.

Fig. 1

Fig. 2

Fig. 3

GNSS
003

3G/4G/5G
002

cloud
computing
platform
001

010

220 210

$\alpha_u$

Fig. 4

## INTERNATIONAL SEARCH REPORT

| International application No. |
| --- |
| **PCT/CN2020/079536** |

**A.    CLASSIFICATION OF SUBJECT MATTER**

B60L 7/18(2006.01)i;  B60W 20/12(2016.01)i;  B60W 20/14(2016.01)i;  B60K 6/26(2007.10)i

According to International Patent Classification (IPC) or to both national classification and IPC

**B.    FIELDS SEARCHED**

Minimum documentation searched (classification system followed by classification symbols)

    B60L; B60W; B60K

Documentation searched other than minimum documentation to the extent that such documents are included in the fields searched

Electronic data base consulted during the international search (name of data base and, where practicable, search terms used)

    CNKI, CNABS, DWPI, SIPOABS: 卡车, 重型, epsd, 电, 功率, 分流, 发电机, 电池, 离合, 制动回收, truck, lorry, electrical, power, split, battery, clutch

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 108973979 A (GANTAN INTERNATIONAL COMPANY et al.) 11 December 2018 (2018-12-11) <br> description, specific embodiments, and figures 1-4 | 1-12 |
| Y | CN 101209711 A (NISSAN MOTOR CO., LTD.) 02 July 2008 (2008-07-02) <br> description, specific embodiments, and figures 1-3 | 1-12 |
| Y | CN 108944904 A (FORD GLOBAL TECHNOLOGIES, LLC) 07 December 2018 (2018-12-07) <br> description, specific embodiments, and figures 1-2 | 1-12 |
| Y | CN 102501849 A (SUNWARD INTELLIGENT EQUIPMENT CO., LTD.) 20 June 2012 (2012-06-20) <br> description, specific embodiments, and figure 1 | 1-12 |
| A | US 7925426 B2 (MOTILITY SYSTEMS) 12 April 2011 (2011-04-12) <br> entire document | 1-12 |
| A | CN 102224047 A (TOYOTA JIDOSHA KABUSHIKI KAISHA et al.) 19 October 2011 (2011-10-19) <br> entire document | 1-12 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 April 2020** | **30 April 2020** |

| Name and mailing address of the ISA/CN <br><br> **China National Intellectual Property Administration (ISA/ CN)** <br> **No. 6, Xitucheng Road, Jimenqiao Haidian District, Beijing 100088** <br> **China** | Authorized officer |
| --- | --- |
| Facsimile No. **(86-10)62019451** | Telephone No. |

Form PCT/ISA/210 (second sheet) (January 2015)

# EP 3 950 400 A1

**INTERNATIONAL SEARCH REPORT**

International application No.

**PCT/CN2020/079536**

**C.   DOCUMENTS CONSIDERED TO BE RELEVANT**

| Category* | Citation of document, with indication, where appropriate, of the relevant passages | Relevant to claim No. |
|---|---|---|
| A | CN 104554252 A (CHONGQING HENGTONG ELECTRIC BUS POWER SYSTEM CO.,LTD.) 29 April 2015 (2015-04-29) entire document | 1-12 |

Form PCT/ISA/210 (second sheet) (January 2015)

**INTERNATIONAL SEARCH REPORT**
Information on patent family members

International application No.

**PCT/CN2020/079536**

| Patent document cited in search report | | | Publication date (day/month/year) | Patent family member(s) | | | Publication date (day/month/year) |
|---|---|---|---|---|---|---|---|
| CN | 108973979 | A | 11 December 2018 | WO | 2020015762 | A1 | 23 January 2020 |
| CN | 101209711 | A | 02 July 2008 | JP | 2008179339 | A | 07 August 2008 |
| | | | | CN | 101209711 | B | 14 December 2011 |
| | | | | DE | 602007007719 | D1 | 26 August 2010 |
| | | | | JP | 5088058 | B2 | 05 December 2012 |
| CN | 108944904 | A | 07 December 2018 | DE | 102018111670 | A1 | 22 November 2018 |
| | | | | US | 2018334038 | A1 | 22 November 2018 |
| CN | 102501849 | A | 20 June 2012 | | None | | |
| US | 7925426 | B2 | 12 April 2011 | US | 2007112475 | A1 | 17 May 2007 |
| CN | 102224047 | A | 19 October 2011 | CN | 102224047 | B | 22 January 2014 |
| | | | | US | 8615342 | B2 | 24 December 2013 |
| | | | | JP | 2010120552 | A | 03 June 2010 |
| | | | | WO | 2010058267 | A8 | 05 May 2011 |
| | | | | JP | 5330812 | B2 | 30 October 2013 |
| | | | | US | 2011276209 | A1 | 10 November 2011 |
| | | | | DE | 112009003207 | T5 | 06 June 2012 |
| | | | | WO | 2010058267 | A1 | 27 May 2010 |
| CN | 104554252 | A | 29 April 2015 | | None | | |

Form PCT/ISA/210 (patent family annex) (January 2015)

## REFERENCES CITED IN THE DESCRIPTION

**Non-patent literature cited in the description**

- **RICARDO.** Heavy Duty Vehicle Technology Potential and Cost Study. *Final Report for ICCT,* 2017
- **OSCAR DELGADO et al.** *European Heavy-Duty Vehicles: Cost Effectiveness of Fuel-Efficiency Technologies for Long-Haul Tractor-Trailers in the 2025-2030 Timeframe,* January 2018
- **FELIPE RRODRIGUEZ.** *HDV Fuel Efficiency Technologies,* 28 June 2018
- Adoption of New Fuel Efficient Technologies from SuperTruck. United States Department of Energy, June 2016